# EUROPÄISCHE PATENTSCHRIFT

(11) **EP 0 489 692 B1**
(45) Veröffentlichungstag und Bekanntmachung des Hinweises auf die Patenterteilung: **06.11.1996**
(21) Anmeldenummer: 91810929.9
(22) Anmeldetag: 27.11.1991
(51) Int. Cl.: C09B 62/503, D06P 1/38

(54) **Reaktivfarbstoffe, Verfahren zu deren Herstellung und deren Verwendung**
Reactive dyes, process for their preparation and their use
Colorants réactifs, procédé pour leur préparation et leur utilisation

(30) Priorität: 06.12.1990 CH 3869/90
(43) Veröffentlichungstag der Anmeldung: 10.06.1992
(73) Patentinhaber: CIBA-GEIGY AG, 4002 Basel (CH)
(72) Erfinder: Tzikas, Athanassios, Dr., CH-4133 Pratteln (CH)

(56) Entgegenhaltungen:
- EP-A- 0 233 139
- EP-A- 0 278 904
- FR-A- 2 638 459
- JP-A-63 105 065

## Beschreibung

Die vorliegende Anmeldung betrifft neue verbesserte Reaktivfarbstoffe, die sich besonders für das Färben von cellulosehaltigen Fasermaterialien nach dem Ausziehverfahren oder nach Kontinueverfahren eignen, und die nass- und lichtechte Färbungen ergeben; sowie Verfahren zur Herstellung dieser Farbstoffe, und deren Verwendung zum Färben oder Bedrucken von textilen Materialien.

EP-A-278904, FR-A-2638459 und JP-A-63-105065 beschreiben Reaktivfarbstoffe, die sich ebenfalls für das Färben nach dem Ausziehverfahren oder Kontinueverfahren eignen.

Gegenstand der Erfindung sind Reaktivfarbstoffe der Formel 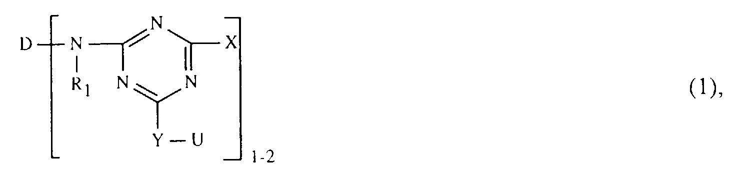 worin D der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes: R₁ Wasserstoff oder C₁-C₄-Alkyl, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann; Y ein Sauerstoff- oder Schwefelatom; U ein gegebenenfalls substituierter aliphatischer, aromatischer oder heterocyclischer Rest; und X ein Rest der Formel 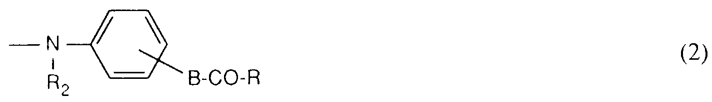 ist, worin R₂ Wasserstoff oder C₁-C₄-Alkyl, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann; B die direkte Bindung oder ein Rest 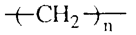 oder 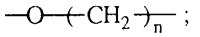 n = 1, 2, 3, 4, 5 oder 6; und R ein Rest der Formel 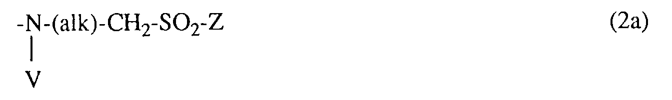 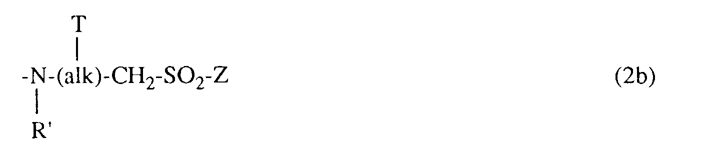 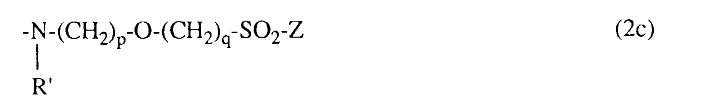 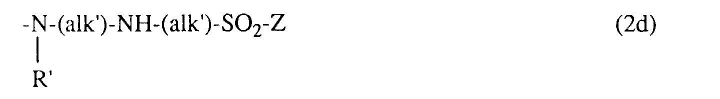 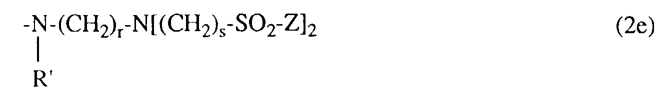 oder 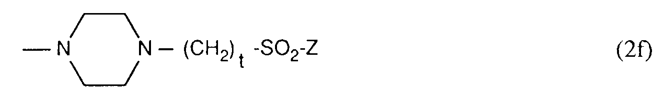 ist, worin R' Wasserstoff oder C₁-C₆-Alkyl ist, alk einen Alkylenrest mit 1 bis 7 Kohlenstoffatomen darstellt, T Wasserstoff, Halogen, Hydroxy, Sulfato, Carboxy, Cyano, C₁-C₄-Alkanoyloxy, C₁-C₄-Alkoxycarbonyl, Carbamoyl oder einen Rest -SO₂-Z bedeutet, V Wasserstoff, gegebenenfalls substituiertes C₁-C₄-Alkyl oder ein Rest der Formel 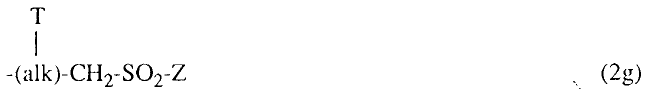 ist, worin (alk) die zuvor angegebene Bedeutung hat, alk' unabhängig voneinander Polymethylenreste mit 2 bis 6 C-Atomen bedeutet, Z β-Sulfatoethyl, β-Thiosulfatoethyl, β-Phosphatoethyl, β-Acyloxyethyl, β-Halogenethyl oder Vinyl ist, p, q, r und t unabhängig voneinander je die Zahl 1, 2, 3, 4, 5 oder 6 bedeuten und s die Zahl 2, 3, 4, 5 oder 6 ist; und der Benzolring in Formel (2) weitere Substituenten enthalten kann, oder worin X ein direkt an den Triazinring gebundener Rest der Formel (2a), (2b), (2c), (2d), (2e) oder (2f) ist, worin R′, T, alk, V, alk′, Z , p, q, r, s und t die angegebenen Bedeutungen haben.

Der Rest D in Formel (1) kann an seinem Grundgerüst die bei organischen Farbstoffen üblichen Substituenten gebunden enthalten.

Als Beispiele für weitere Substituenten im Rest D seien genannt: Alkylgruppen mit 1 bis 4 Kohlenstoffatomen, wie Methyl, Ethyl, Propyl, Isopropyl oder Butyl, Alkoxygruppen mit 1 bis 4 Kohlenstoffatomen, wie Methoxy, Ethoxy, Propoxy, Isopropoxy oder Butoxy, Acylaminogruppen mit 1 bis 8 Kohlenstoffatomen, insbesondere Alkanoylaminogruppen und Alkoxycarbonylaminogruppen, wie Acetylamino, Propionylamino, Methoxycarbonylamino, Ethoxycarbonylamino oder Benzoylamino, Phenylamino, N-N-Di-β-hydroxyethylamino, N,N-Di-β-sulfatoethylamino, Sulfobenzylamino, N,N-Disulfobenzylamino, Alkoxycarbonyl mit 1 bis 4 Kohlenstoffatomen im Alkoxyrest, wie Methoxycarbonyl oder Ethoxycarbonyl, Alkylsulfonyl mit 1 bis 4 Kohlenstoffatomen, wie Methylsulfonyl oder Ethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Ethylcarbamoyl, Sulfamoyl, N-Alkylsulfamoyl mit 1 bis 4 Kohlenstoffatomen, wie N-Methylsulfamoyl, N-Ethylsulfamoyl, N-Propylsulfamoyl, N-Isopropylsulfamoyl oder N-Butylsulfamoyl, N-(β-Hydroxyethyl)-sulfamoyl, N,N-Di-(β-hydroxyethyl)-sulfamoyl, N-Phenylsulfamoyl, Ureido, Hydroxy, Carboxy, Sulfomethyl oder Sulfo sowie weitere faserreaktive Reste. Vorzugsweise enthält der Rest D eine oder mehrere Sulfonsäuregruppen. Reaktivfarbstoffe der Formel (1), worin D der Rest eines Azofarbstoffes ist, enthalten als Substituenten vor allem Methyl, Ethyl, Methoxy, Ethoxy, Acetylamino, Benzoylamino, Amino, Chlor, Brom, Ureido, Hydroxy, Carboxy, Sulfomethyl oder Sulfo sowie gegebenenfalls einen weiteren faserreaktiven Rest.

Der Rest R₁ bzw. der Rest R₂ ist, falls es sich um einen Alkylrest handelt, geradkettig oder verzweigt; er kann wie angegeben weitersubstituiert sein. Als Beispiele für R₁ und R₂ seien die folgenden Reste genannt: Methyl, Ethyl, Propyl, Isopropyl, Butyl, Isobutyl, sek.-Butyl, tert-Butyl, Carboxymethyl, β-Carboxyethyl, β-Carboxypropyl, Methoxycarbonylmethyl, Ethoxycarbonylmethyl, β-Methoxyethyl, β-Ethoxyethyl, β-Methoxypropyl, β-Chlorethyl, γ-Brompropyl, β-Hydroxyethyl, β-Hydroxybutyl, β-Cyanethyl, Sulfomethyl, β-Sulfoethyl, Aminosulfonylmethyl und β-Sulfatoethyl. Vorzugsweise sind R₁ bzw. R₂ unabhängig voneinander Wasserstoff, Methyl oder Ethyl.

Der aliphatische oder aromatische Rest U ist vorzugsweise ein Alkyl-, Aralkyl- oder Arylrest. Der Ausdruck aliphatischer Rest schliesst auch cycloaliphatische Reste ein. U als Alkylrest ist z.B C₁-C₈-Alkyl wie z.B. Methyl, Ethyl, Propyl, Isopropyl, Butyl, Isobutyl, sek.-Butyl, tert.-Butyl, n-Pentyl, n-Hexyl oder n-Octyl. Der C₁-C₈-Alkylrest U kann substituiert sein, z.B. durch Halogen, Hydroxy, Cyan, Carboxy, C₁-C₄-Alkoxy, Hydroxy-C₂-C₄-alkoxy, C₁-C₄-Alkoxy-C₁-C₄-alkoxy, C₁-C₄-Alkoxycarbonyl, HO-(CH₂CH₂-O)₂₋₄, Sulfo, Sulfato, Phenyl und Naphthyl, wobei der Phenyl- oder Naphthylrest weitersubstituiert sein kann, z.B. wie für D angegeben. Als Beispiele seien genannt: β-Carboxyethyl, β-Cyanethyl, Sulfomethyl, β-Sulfoethyl, Benzyl, Phenethyl.

Als cycloaliphatischer Rest kommt für U vorzugsweise C₅-C₇-Cycloalkyl, wie der Cyclopentyl-, Cyclohexyl- oder Cycloheptyl-Rest in Betracht, der weitersubstituiert sein kann z.B. durch C₁-C₄-Alkyl. Als Beispiele seien genannt: Cyclopentyl, Cyclohexyl, 4-Methylcyclohexyl, Cycloheptyl.

Als aromatischer Rest kommt für U vorzugsweise Phenyl oder Naphthyl in Betracht, wobei die Reste unsubstituiert oder substituiert sein können, wie z.B durch C₁-C₄-Alkyl, wie z.B. Methyl, Ethyl, n-Propyl, Isopropyl und n-Butyl, C₁-C₄-Alkoxy, wie z.B. Methoxy oder Ethoxy, Halogen, wie z.B. Fluor, Chlor oder Brom, Carboxy, Hydroxy oder Sulfo substituierte Phenyl- oder Naphthylreste.

Als heterocyclische Reste kommen für U z.B. die folgenden Reste in Betracht: Furan-, Thiophen-, Pyrazol-, Pyridin-, Pyrimidin-, Chinolin-, Benzimidazol-, Benzthiazol- und Benzoxazolreste, die weitersubstituiert sein können z.B. durch die für den Rest D genannten Substituenten.

Der Rest B enthält 1 bis 6, vorzugsweise 1 bis 4 Kohlenstoffatome; Beispiele für B sind: Methylen, Ethylen, Propylen, Butylen, Methylenoxy, Ethylenoxy, Propylenoxy und Butylenoxy. Falls B einen Rest 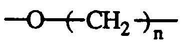 darstellt, ist B durch das Sauerstoffatom an den Benzolring gebunden. Vorzugsweise ist B die direkte Bindung.

Als β-Halogenethyl kommt für Z insbesondere der β-Chlorethylrest und als β-Acyloxyethyl insbesondere der β-Acetoxyethylrest in Betracht. Der Alkylenrest alk ist vorzugsweise Methylen, Ethylen, Methylmethylen, Propylen oder Butylen. Der Substituent T ist als Alkanoyloxyrest insbesondere Acetyloxy, Propionyloxy oder Butyryloxy, und als Alkoxycarbonylrest insbesondere Methoxycarbonyl, Ethoxycarbonyl oder Propyloxycarbonyl. Falls V ein Alkylrest ist, kann dieser Methyl, Ethyl, Propyl, Isopropyl, Butyl, Isobutyl, sec-Butyl oder tert-Butyl sein. Der Rest R' ist beispielsweise Methyl, Ethyl, Propyl, Isopropyl, Butyl, Isobutyl, sec-Butyl, tert-Butyl, Pentyl oder Hexyl, oder vorzugsweise Wasserstoff. Die Polymethylenreste alk' sind vorzugsweise Ethylen, Propylen oder Butylen. Die Indizes p, q und t sind unabhängig voneinander vorzugsweise 2, 3 oder 4.

Die Indizes r und s sind unabhängig voneinander vorzugsweise 2.

Falls T ein Rest -SO₂-Z und R' Wasserstoff ist, hat der Rest der Formel (2b) vorzugsweise die Formel 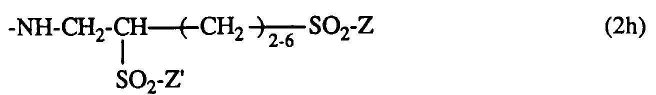 worin Z und Z' unabhängig voneinander β-Sulfatoethyl, β-Thiosulfatoethyl, β-Phosphatoethyl, β-Acyloxyethyl, β-Halogenethyl oder Vinyl ist. Eine wichtige Formelvariante dieses Restes ist: 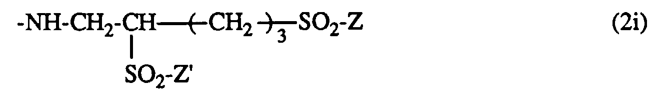 worin Z = Z' ist, wobei Z bzw. Z' die oben angegebene Bedeutung hat; insbesonere ist Z bzw. Z' β-Sulfatoethyl, β-Chlorethyl oder Vinyl.

Der Benzolring in Formel (2) kann weitere Substituenten enthalten, z.B. solche wie weiter oben bei der Erläuterung des Restes D genannt.

Ferner sind in Betracht zu ziehen, Reaktivfarbstoffe der Formel (1), worin der Rest D noch einen oder mehrere weitere Reaktivreste einschliesst. Die zusätzlichen in D eingeschlossenen Reaktivreste können über Aminogruppen oder in anderer Weise, z.B. durch eine direkte Bindung an D gebunden sein.

Ein gegebenenfalls in D eingeschlossener zusätzlicher Reaktivrest ist insbesondere ein niedrigmolekularer, durch ein abspaltbares Atom oder eine abspaltbare Gruppe substituierter Alkanoyl- oder Alkylsulfonylrest, ein niedrigmolekularer, gegebenenfalls durch ein abspaltbares Atom oder eine abspaltbare Gruppe substituierter Alkenoyl- oder Alkensulfonylrest, ein über eine Carbonyl- oder Sulfonylgruppe gebundener, durch ein abspaltbares Atom oder eine abspaltbare Gruppe substituierter carbo- oder heterocyclischer 4-, 5- oder 6-Ringe enthaltender Rest oder ein direkt über ein Kohlenstoffatom gebundener, durch ein abspaltbares Atom oder eine abspaltbare Gruppe substituierter Triazin- oder Pyrimidinrest, oder enthält einen solchen. Als Beispiele für derartige Reaktivreste seien genannt, ein über eine Aminogruppe gebundener, Halogenatome enthaltender sechsgliedriger heterocyclischer Rest, wie ein Halogentriazin- oder Halogenpyrimidinrest oder ein aliphatischer Acylrest, wie ein Halogenacetyl-oder Halogenpropionylrest.

Für die in D eingeschlossenen zusätzlichen Reaktivreste kommen insbesondere heterocyclische Reste in Betracht, welche mindestens einen abspaltbaren Substituenten an einen heterocyclischen Rest gebunden enthalten; unter anderem solche, die mindestens einen reaktiven Substituenten an einen 5- oder 6-gliedrigen heterocyclischen Ring gebunden enthalten, wie an einen Monoazin-, Diazin-, Triazin- z.B. Pyridin-, Pyrimidin-, Pyridazin-, Pyrazin-, Thiazin-, Oxazin oder asymmetrischen oder symmetrischen Triazin-ring, oder an ein derartiges Ringsystem, welches einen oder mehrere ankondensierte aromatische Ringe aufweist, wie ein Chinolin-, Phthalazin-, Chinnolin-, Chinazolin-, Chinoxalin-, Acridin-, Phenazin- und Phenanthridin-Ring-System; die 5- oder 6-gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6-gliedrige carbocyclische Ringe ankondensiert enthalten können.

Unter den reakiven Substituenten am Heterocyclus sind beispielsweise zu erwähnen: Halogen (Cl, Br oder F), Ammonium einschliesslich Hydrazinium, Sulfonium, Sulfonyl, Azido-(N₃), Rhodanido, Thio, Thiolether, Oxyether, Sulfinsäure und Sulfonsäure. Im einzelnen kommen beispielsweise die in der EP-A-0 369 385 auf den Seiten 2 bis 6 angegebenen faserreaktiven Reste in Betracht.

Insbesondere sind Reaktivgruppen der heterocyclischen Reihe, vorzugsweise 2- Fluor- oder 2-Chlor-s-triazin-4-yl-Reste, die in 6- Stellung durch eine gegebenenfalls substituierte Aminogruppe enthalten, wie z.B. in der EP-A-0 369 385 auf Seite 4 angegeben, sowie Halogenpyrimidinreste und insbesondere -SO₂-Z Reste zu nennen, wobei Z die oben angegebene Bedeutung hat.

Bevorzugte Ausführungsformen der Reaktivfarbstoffe der Formel (1) sind:
a) Reaktivfarbstoffe der Formel 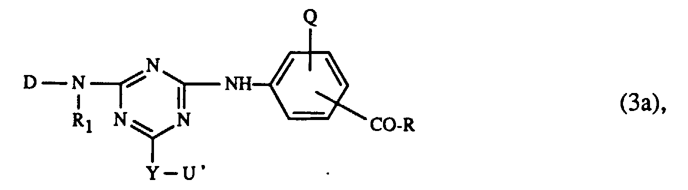 worin D einer der unter Formel (1) angegebenen Farbstoffreste ist, der einen weiteren Reaktivrest, insbesondere einen Rest der Formel -SO₂-Z, enthalten kann, R₁ Wasserstoff, Methyl oder Ethyl ist, Y, Z und R die unter Formel (1) angegebenen Bedeutungen haben, U' C₁-C₈-Alkyl ist, das durch Hydroxy, C₁-C₄-Alkoxy, C₁-C₂-Alkoxy-C₁-C₂-alkoxy, Hydroxy-C₁-C₂-alkoxy, Sulfato, C₁-C₄-Alkoxycarbonyl oder Carboxy substituiert sein kann, und Q Wasserstoff, C₁-C₄-Alkyl, C₁-C₄-Alkoxy, Halogen, Carboxy oder Sulfo ist.
b) Reaktivfarbstoffe der Formel 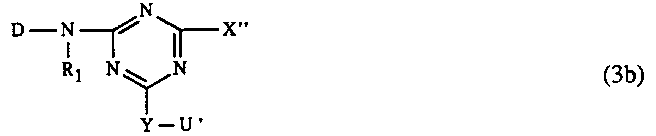 worin D, R₁, Y und U' die unter Formel (3a) angegebenen Bedeutungen haben, und X" ein Rest der Formel (2a), (2b), (2c), (2d), (2e) oder (2f) ist.
c) Reaktivfarbstoffe der Formel 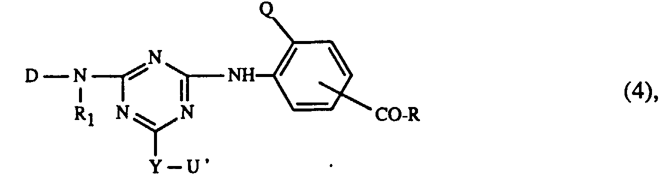 worin D, R₁, Y, U', Q und R die unter Formel (3a) angegebenen Bedeutungen haben.
d) Reaktivfarbstoffe gemäss a) oder c), worin D und R₁ die angegebenen Bedeutungen haben, Q Wasserstoff oder Sulfo ist, R ein Rest der Formel (2a), (2b), (2c), (2d), (2e) oder (2f) ist, worin Z β-Sulfatoethyl, β-Chlorethyl oder Vinyl ist, und Y und U' die unter Formel (3a) angegebenen Bedeutungen haben.
e) Reaktivfarbstoffe gemäss a), c) oder d), worin D einen zusätzlichen Reaktivrest enthält.
f) Reaktivfarbstoffe gemäss Formel (1) sowie a), b), c), d) oder e), worin R in Formel (3a) bzw. X" in Formel (3b) ein Rest der Formel

   -NH-(CH₂)₂-SO₂-Z' (5a),

   -NH-(CH₂)₃-SO₂-Z' (5b),

   -NH-(CH₂)₂-O-(CH₂)₂-SO₂-Z' (5c),

   -N[-(CH₂)₂-SO₂-Z']₂ (5d),

   -N(CH₃)-(CH₂)₂-SO₂-Z' (5e),

   -N(C₂H₅)-(CH₂)₂-SO₂-Z' (5f),

   -NH-CH₂-CH(SO₂-Z')-CH₂-CH₂-SO₂-Z' (5g)

   oder 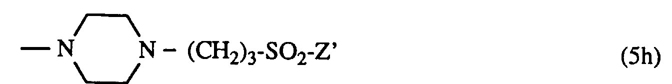 ist, worin Z' β-Sulfatoethyl, β-Chlorethyl oder Vinyl ist.
   Besonders bevorzugt sind:
g) Reaktivfarbstoffe gemäss Formel (1) sowie a), b), c), d) oder e), worin D der Rest eines Monoazo-, Disazo-, Metallkomplexazo-, Formazan-, Anthrachinon-, Phthalocyanin- oder Dioxazinfarbstoffes ist.
h) Reaktivfarbstoffe gemäss g), worin D der Rest eines 1:1 -Kupferkomplexazofarbstoffes der Benzol- oder Naphthalinreihe ist, und das Kupferatom an je eine metallisierbare Gruppe beidseitig in ortho-Stellung zur Azobrücke gebunden ist.
i) Ganz besonders bevorzugt sind die Reaktivfarbstoffe gemäss g), worin D ein Monooder Disazofarbstoffrest der Formel

   D₁-N=N-(M-N=N)ᵤ-K- (6a),

   -D₁-N=N-(M-N=N)ᵤ-K (6b)

   oder

   -D₁-N=N-(M-N=N)ᵤ-K (6c),

   oder eines davon abgeleiteten Metallkomplexes ist; D₁ der Rest einer Diazokomponente der Benzol- oder Naphthalinreihe, M der Rest einer Mittelkomponente der Benzol- oder Naphthalinreihe, und K der Rest einer Kupplungskomponente der Benzol-, Naphthalin-, Pyrazolon-, 6-Hydroxypyridon-(2)- oder Acetessigsäurearylamid-Reihe ist, wobei D₁, M und K bei Azofarbstoffen übliche Substituenten tragen können, insbesondere Hydroxy-, Amino-, Methyl-, Ethyl-, Methoxy- oder Ethoxygruppen, gegebenenfalls substituierte Alkanoylaminogruppen mit 2 bis 4 C-Atomen, gegebenenfalls substituierte Benzoylaminogruppen, Halogenatome oder einen faserreaktiven Rest, insbesondere einen Rest -SO₂-Z, wobei Z die angegebene Bedeutung hat; u = 0 oder 1 ist; und D₁, M und K zusammen mindestens zwei Sulfogruppen, vorzugsweise drei oder vier Sulfogruppen, enthalten.
j) Ebenfalls ganz besonders bevorzugt sind die Reaktivfarbstoffe gemäss g), worin D ein Disazofarbstoffrest der Formel

   -D₁-N=N-K-N=N-D₂ (7a),

   oder

   -D₁-N=N-K-N=N-D₂- (7b)

   ist, worin D₁ und D₂ unabhängig voneinander der Rest einer Diazokomponente der Benzol- oder Naphthalinreihe, und K der Rest einer Kupplungskomponente der Naphthalinreihe ist; wobei D₁, D₂ und K bei Azofarbstoffen übliche Substituenten tragen können, insbesondere Hydroxy-, Amino-, Methyl, Ethyl-, Methoxy- oder Ethoxygruppen, gegebenenfalls substituierte Alkanoylaminogruppen mit 2 bis 4 C-Atomen, gegebenenfalls substituierte Benzoylaminogruppen, Halogenatome oder einen faserreaktiven Rest, insbesondere einen Rest -SO₂-Z, wobei Z die angegebene Bedeutung hat, und D₁, D₂ und K zusammen mindestens zwei Sulfogruppen, vorzugsweise drei oder vier Sulfogruppen enthalten.
   Wichtig sind
k) Reaktivfarbstoffe gemäss g), worin D der Rest eines Formazanfarbstoffes der Formel 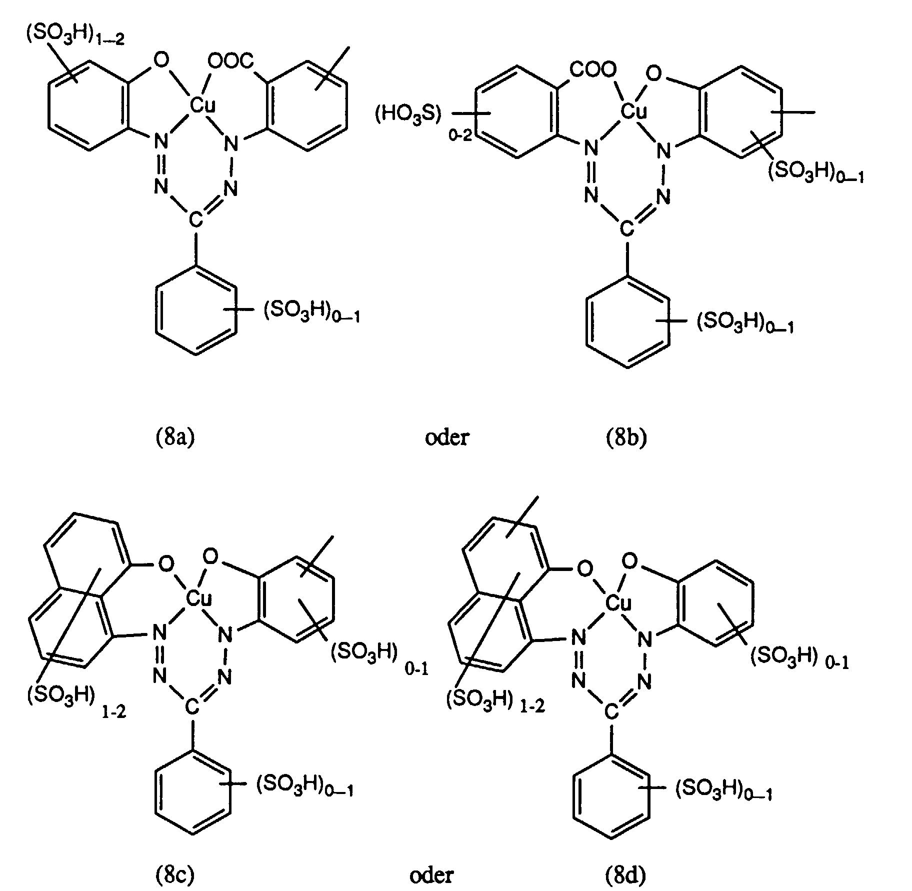 ist, worin die Benzolkerne weiterhin durch Alkyl mit 1 bis 4 C-Atomen, Alkoxy mit 1 bis 4 C-Atomen, Alkylsulfonyl mit 1 bis 4 C-Atomen, Halogen oder Carboxy substituiert sein können.
l) Reaktivfarbstoffe gemäss g), worin D der Rest eines Anthrachinonfarbstoffes der Formel 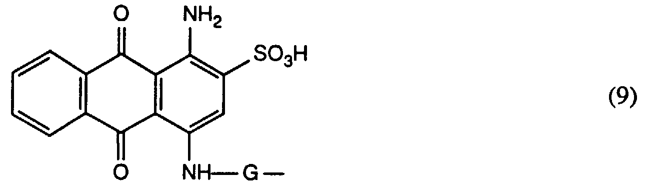 ist, worin G ein Phenylen-, Cyclohexylen-, Phenylenmethylen- oder C₂-C₆-Alkylenrest ist; wobei der Anthrachinonkern durch eine weitere Sulfogruppe, und G als Phenylrest durch Alkyl mit 1 bis 4 C-Atomen, Alkoxy mit 1 bis 4 C-Atomen, Halogen, Carboxy oder Sulfo substituiert sein kann, und der Farbstoff vorzugsweise mindestens 2 Sulfogruppen enthält.
m) Reaktivfarbstoffe gemäss g), worin D der Rest eines Phthalocyaninfarbstoffes der Formel 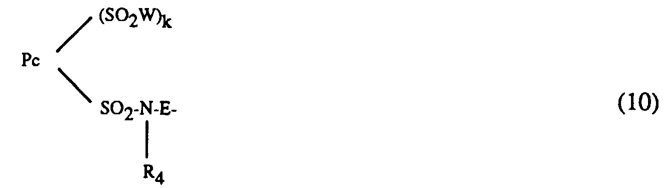 ist, worin Pc der Rest eines Kupfer- oder Nickelphthalocyanins; W -OH und/oder -NR₅R_{5′}; R₅ und R_{5′} unabhängig voneinander Wasserstoff oder Alkyl mit 1 bis 4 Kohlenstoffatomen, das durch Hydroxy oder Sulfo substituiert sein kann; R₄ Wasserstoff oder Alkyl mit 1 bis 4 Kohlenstoffatomen; E ein Phenylenrest, der durch Alkyl mit 1 bis 4 C-Atomen, Halogen, Carboxy oder Sulfo substituiert sein kann; oder ein Alkylenrest mit 2 bis 6 C-Atomen, vorzugsweise ein Sulfophenylen- oder Ethylenrest; und k = 1, 2 oder 3 ist.
n) Reaktivfarbstoffe gemäss g), worin D der Rest eines Dioxazinfarbstoffes der Formel 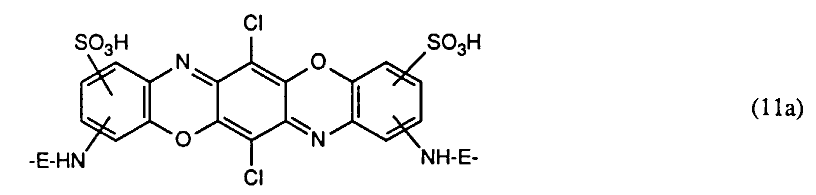 oder 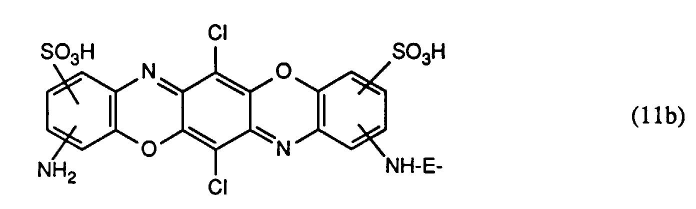 oder 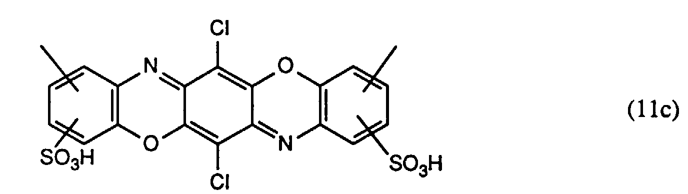 ist, worin E ein Phenylenrest, der durch Alkyl mit 1 bis 4 C-Atomen, Halogen, Carboxy oder Sulfo substituiert sein kann; oder ein Alkylenrest mit 2 bis 6 C-Atomen ist; und die äusseren Benzolringe in den Formeln (11a) (11b) und (11c) durch Alkyl mit 1 bis 4 C-Atomen, Alkoxy mit 1 bis 4 C-Atomen, Acetylamino, Nitro, Halogen, Carboxy, Sulfo oder -SO₂-Z weitersubstituiert sein können, wobei Z β-Sulfatoethyl, β-Thiosulfatoethyl, β-Phosphatoethyl, β-Acyloxyethyl, β-Halogenethyl oder Vinyl ist.

Von den ganz besonders bevorzugten Reaktivfarbstoffen gemäss i) oder j) sind besonders wichtig die Farbstoffe der Formeln (1) und insbesondere (3a) und (3b), worin D einen Farbstoffrest der nachfolgenden Formeln ( 12) bis (23)bedeutet: 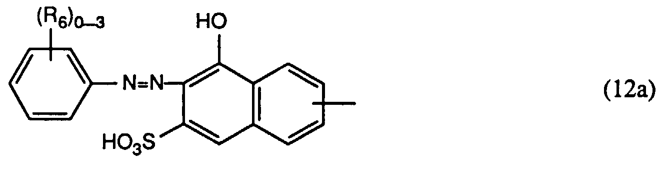 oder 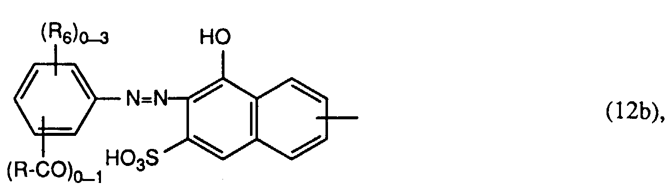 worin R₆ für C₁-C₄-Alkyl, C₁-C₄-Alkoxy, Halogen, -SO₂-Z, Carboxy und Sulfo steht; und Z β-Sulfatoethyl, β-Thiosulfatoethyl, β-Phosphatoethyl, β-Acyloxyethyl, β-Halogenethyl oder Vinyl ist, und R die unter Formel (2) angegebene Bedeutung hat. 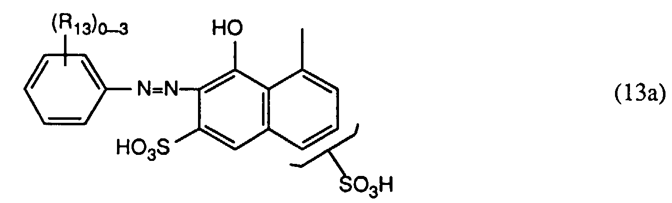 oder 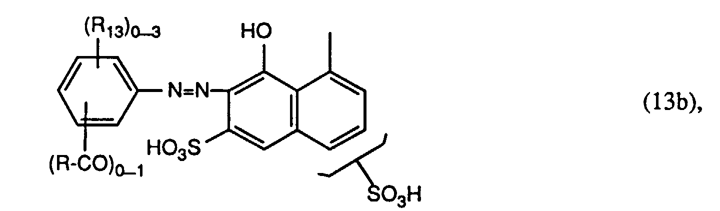 worin R₁₃ für C₁-C₄-Alkyl, C₁-C₄-Alkoxy, Halogen, -SO₂-Z, Carboxy, Sulfo und C₁-C₄-Alkoxyanilino steht; und Z β-Sulfatoethyl, β-Thiosulfatoethyl, β-Phosphatoethyl, β-Acyloxyethyl, β-Halogenethyl oder Vinyl ist, und R die unter Formel (2) angegebene Bedeutung hat. 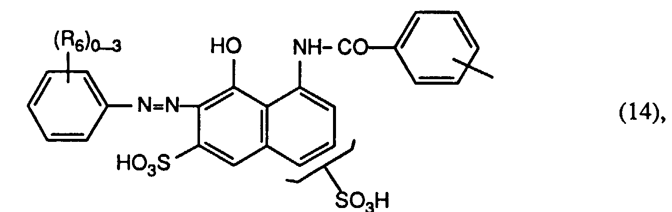 worin R₆ für C₁-C₄-Alkyl, C₁-C₄-Alkoxy, Halogen, -SO₂-Z, Carboxy und Sulfo steht; und Z β-Sulfatoethyl, β-Thiosulfatoethyl, β-Phosphatoethyl, β-Acyloxyethyl, β-Halogenethyl oder Vinyl ist. 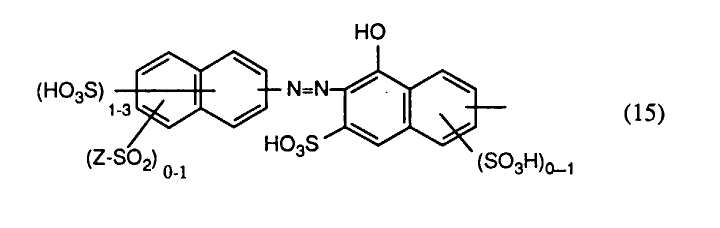 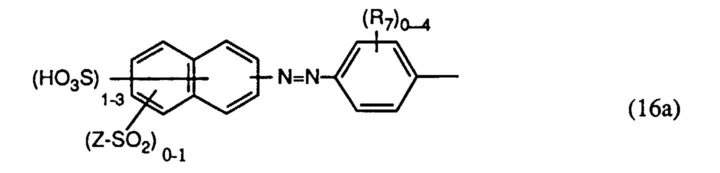 oder 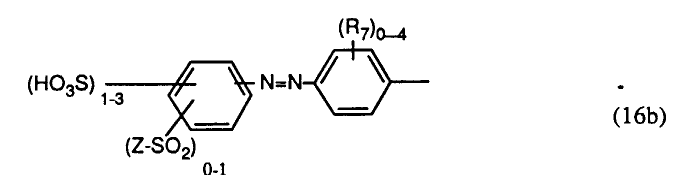 oder 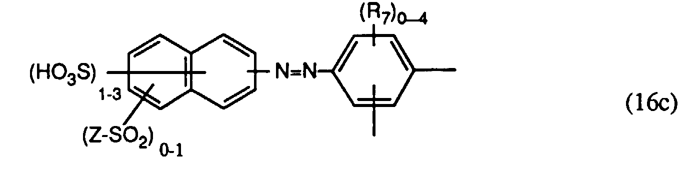 oder 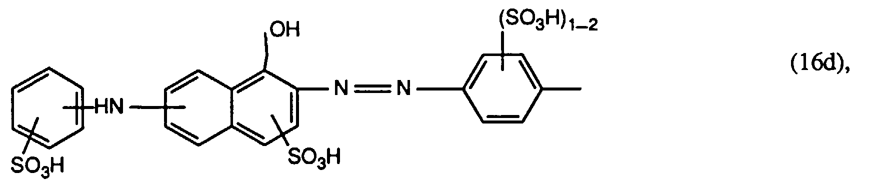 worin R₇ für Halogen, Nitro, Cyan, Trifluormethyl, Sulfamoyl, Carbamoyl, C₁-C₄-Alkyl, C₁-C₄-Alkoxy, Amino, Acetylamino, Ureido, Hydroxy, Carboxy, Sulfomethyl und Sulfo steht; und Z β-Sulfatoethyl, β-Thiosulfatoethyl, β-Phosphatoethyl, β-Acyloxyethyl, β-Halogenethyl oder Vinyl ist. 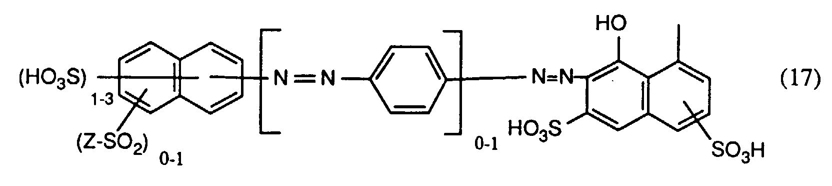 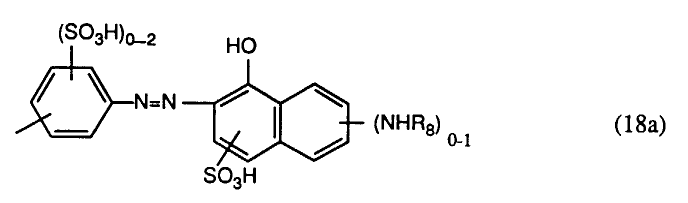 oder 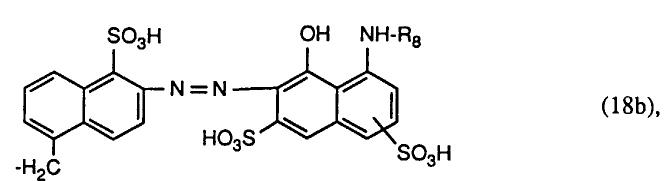 worin R₈ C₁-C₄-Alkanoyl oder Benzoyl ist; und Z β-Sulfatoethyl, β-Thiosulfatoethyl, β-Phosphatoethyl, β-acyloxyethyl, β-Halogenethyl oder Vinyl ist. 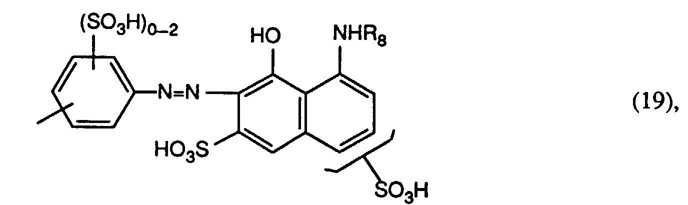 worin R₈ C₁-C₄-Alkanoyl oder Benzoyl ist. 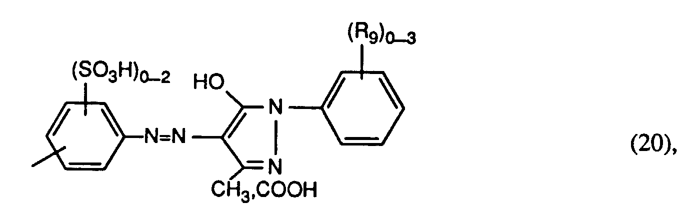 worin R₉ für C₁-C₄-Alkyl, C₁-C₄-Alkoxy, Halogen, -SO₂-Z, Carboxy und Sulfo steht; und Z β-Sulfatoethyl, β-Thiosulfatoethyl, β-Phosphatoethyl, β-Acyloxyethyl, β-Halogenethyl oder Vinyl ist. 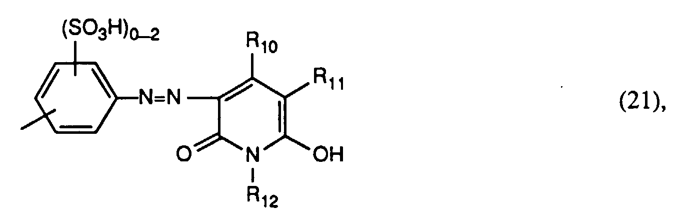 worin R₁₂ und R₁₀ unabhängig voneinander Wasserstoff, C₁-C₄-Alkyl oder Phenyl, und R₁₁ Wasserstoff, Cyano, Carbamoyl oder Sulfomethyl ist. 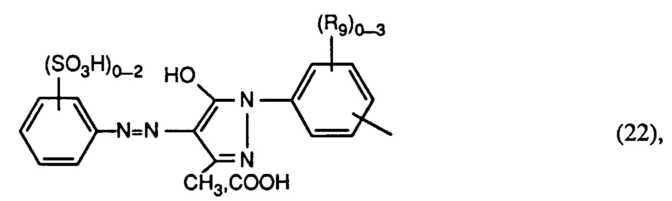 worin R₉ für C₁-C₄-Alkyl, C₁-C₄-Alkoxy, Halogen, -SO₂-Z, Carboxy und Sulfo steht; und Z β-Sulfatoethyl, β-Thiosulfatoethyl, β-Phosphatoethyl, β-Acyloxyethyl, β-Halogenethyl oder Vinyl ist. 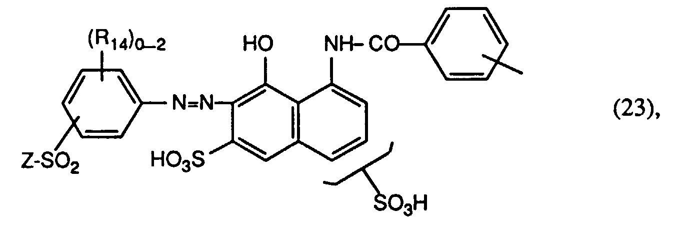 worin R₁₄ für C₁-C₄-Alkyl, C₁-C₄-Alkoxy, Halogen, Carboxy und Sulfo steht; und Z β-Sulfatoethyl, β-Thiosulfatoethyl, β-Phosphatoethyl, β-Acyloxyethyl, β-Halogenethyl oder Vinyl ist, 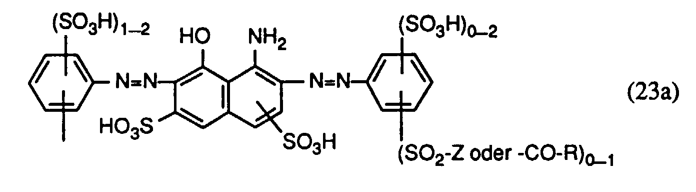 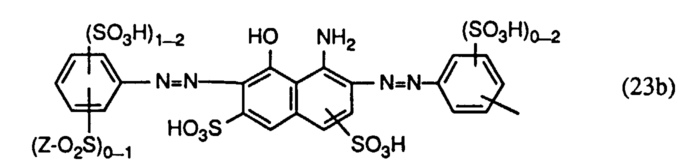 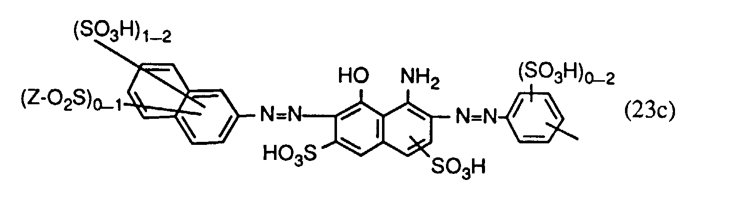 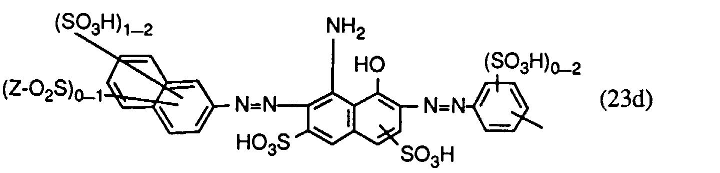 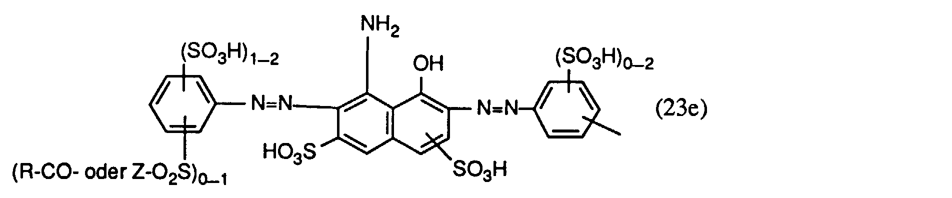 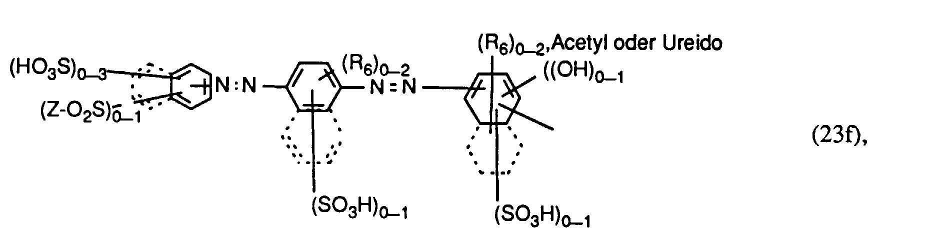 worin R₆ und Z die unter Formel (14) angegebenen Bedeutungen haben, und R die unter Formel (2) angegebene Bedeutung hat.

Besonders wichtig sind ausserdem Schwermetallkompkexe von Reaktivfarbstoffen der Formel (1); als komplexbildende Schwermetalle kommen vor allem Kupfer, Nickel, Kobalt oder Chrom in Betracht. Bevorzugt sind Kuperkomplexazofarbstoffe, insbesondere solche der Formeln (12) bis (23), die das Kupferatom über ein Sauerstoffatom je in ortho-Position zur Azobrücke gebunden enthalten.

Beispiele für Azofarbstoffe, die sich als Metallkomplexe eignen sind: 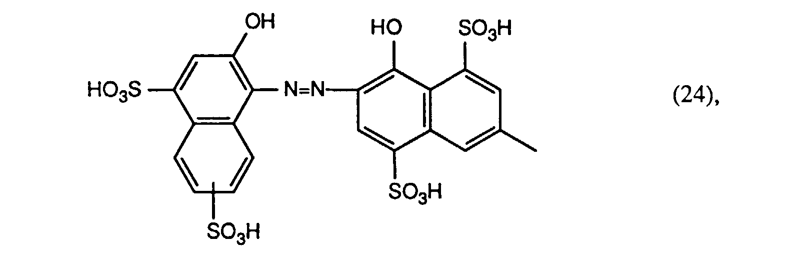 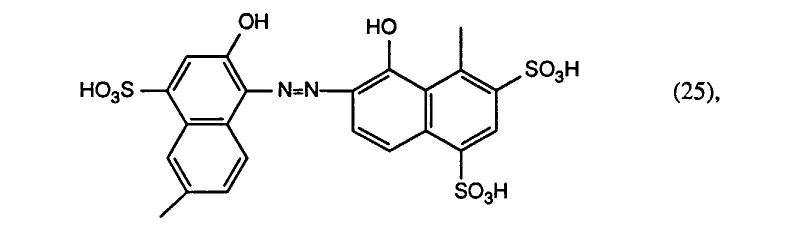 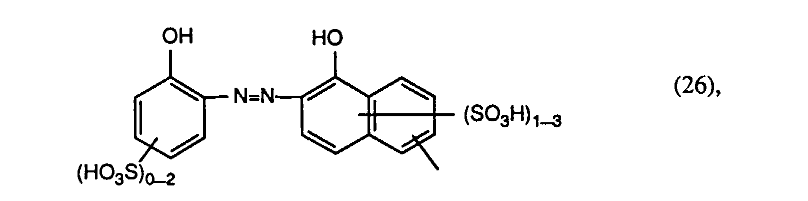 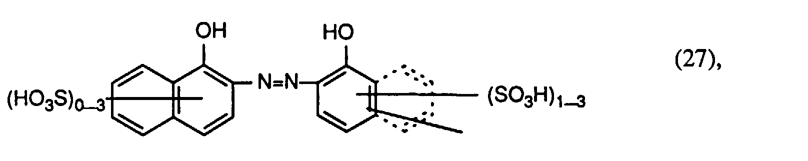 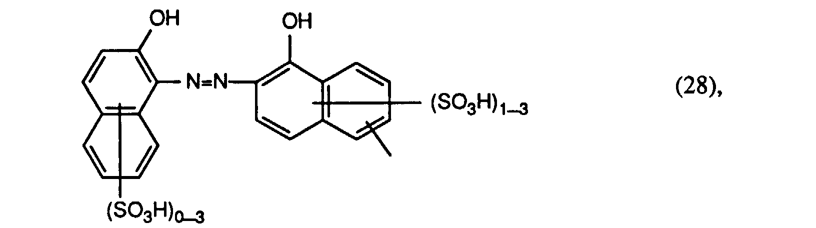 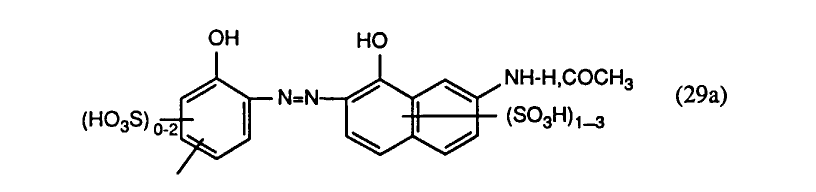 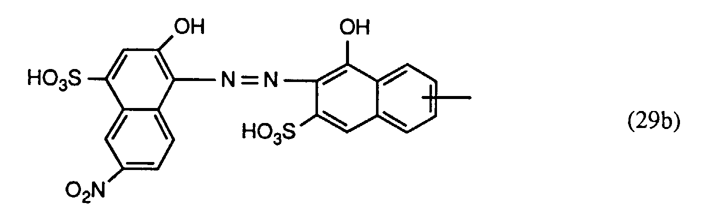 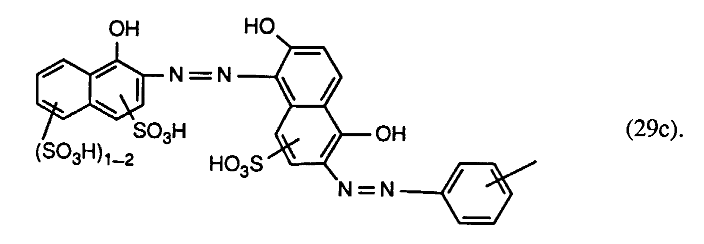 Als Metallatome sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. sie können symmetrisch oder mit beliebigen anderen Liganden unsymmetrisch aufgebaut sein.

Bevorzugt sind Kupferkomplexe wie z.B 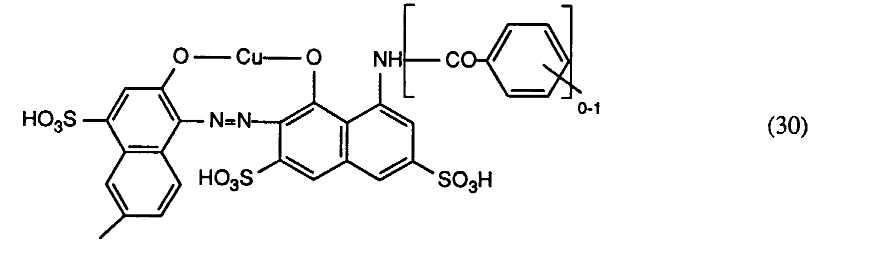 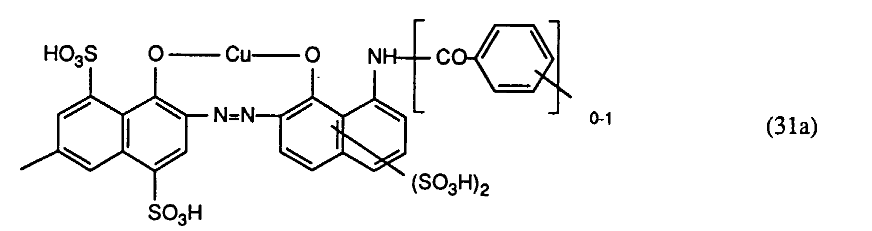 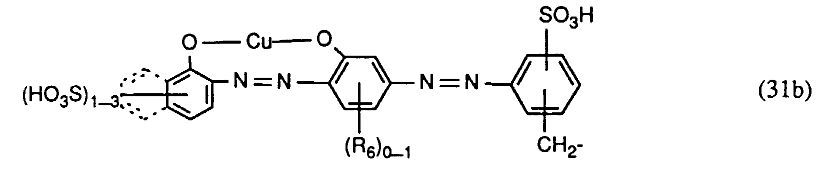 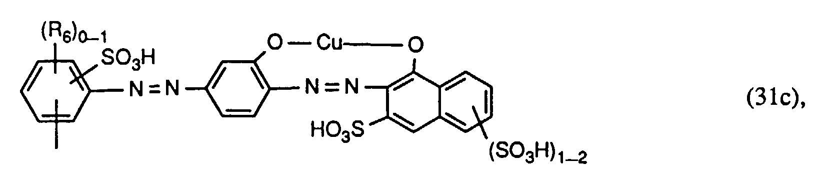 worin R₆ die unter Formel (14) angegebenen Bedeutungen hat.

Die aromatischen Ringe in den obigen Farbstoffen können weitersubstituiert sein, die Benzolringe vor allem durch Methyl, Ethyl, Methoxy, Ethoxy, Methylsulfonyl, Ethylsulfonyl, Carboxy, Acetylamino oder Chlor, und die Naphthalinringe insbesondere durch Methoxy, Carboxy, Acetylamino, Nitro oder Chlor. Vorzugsweise sind die Benzolringe nicht weitersubstituiert.

Bevorzugt sind insbesondere Reaktivfarbstoffe der Formeln (1), (3a) und (3b), worin D ein Rest der Formeln (12) bis (23) ist, und worin Z die β-Sulfatoethyl-, β-Chlorethyl- oder Vinylgruppe ist.

Besonders bevorzugt sind Reaktivfarbstoffe der Formeln (1) und (3a), worin D ein Rest der Formeln ( 12) bis (23) ist, und worin R₂ Wasserstoff ist, oder worin R₁ und R₂ Wasserstoff ist und/oder Q Wasserstoff oder Sulfo ist und/oder B eine direkte Bindung bedeutet, und/oder R einen Rest der Formel

-NH-(CH₂)₂-SO₂-Z' (5a),

-NH-(CH₂)₃-SO₂-Z' (5b),

-NH-(CH₂)₂-O-(CH₂)₂-SO₂-Z' (5c),

-N[-(CH₂)₂-SO₂-Z′]₂ (5d),

-N(CH₃)-(CH₂)₂-SO₂-Z' (5e),

-N(C₂H₅)-(CH₂)₂-SO₂-Z' (5f),

-NH-CH₂-CH(SO₂-Z′)-CH₂-CH₂-SO₂-Z' (5g)

oder 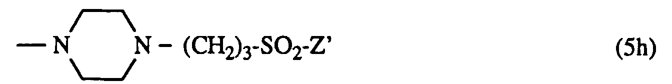 ist, worin Z′ β-Sulfatoethyl, β-Chlorethyl oder Vinyl ist.

Besonders bevorzugt sind ferner Reaktivfarbstoffe der Formeln (1) und (3b), worin D ein Rest der Formeln ( 12) bis (23) ist, und worin X˝ ein Rest der Formeln (5a), (5b), (5c), (5d), (5e), (5f), (5g) oder (5h) ist, worin Z′ β-Sulfatoethyl, β-Chlorethyl oder Vinyl ist.

Ganz besonders bevorzugt sind die Reaktivfarbstoffe der Formeln (1) und (3a) bzw. (3b), worin D ein Rest der Formeln (12) bis (23) ist, und worin R₁ Wasserstoff ist, oder worin R₁ und R₂ Wasserstoff ist und im Fall der Formel (3a) Q Wasserstoff oder Sulfo ist, und B eine direkte Bindung bedeutet, und R bzw. X˝ im Fall der Formel (3b) einen Rest der Formeln (5a), (5b), (5c), (5d), (5e), (5f), (5g) oder (5h) bedeutet, worin Z′ β-Sulfatoethyl, β-Chlorethyl oder Vinyl ist, und -Y-U C₁-C₄-Alkoxy oder C₁-C₄-Alkylthio ist, wobei der Alkoxy oder Alkylrest substituiert sein kann durch Hydroxy, Sulfato, Carboxy, C₁-C₄-Alkoxycarbonyl oder C₁-C₄-Alkoxy. Insbesondere bedeutet -Y-U eine Gruppe -O-CH₃, -O-CH₂CH₃, -O-CH₂CH₂CH₃, -O-(CH₂)₃CH₃, -O-CH(CH₃)₂, -O-CH₂CH₂-OH, -O-(CH₂)₂-OSO₃H, -O-CH₂-COOH, -O-CH₂COOCH₃, -O-CH₂-COOC₂H₅, -O-CH₂CH₂-O-CH₂CH₃, -S-CH₃, -S-CH₂CH₃, -S-(CH₂)₂CH₃, -S-(CH₂)₃CH₃, -S-CH₂CH₂-OH, -S-CH₂CH₂-OSO₃H, -S-CH₂COOH, -S-CH₂-COOCH₃ oder -S-CH₂-COOC₂H₅.

Gegenstand der Erfindung ist ferner ein Verfahren zur Herstellung von Reaktivfarbstoffen der Formel (1), welches dadurch gekennzeichnet ist, dass man in einen organischen Farbstoff mit dem Rest D oder in ein Farbstoffvorprodukt in an sich bekannter Weise einen Rest oder zwei Reste der Formel 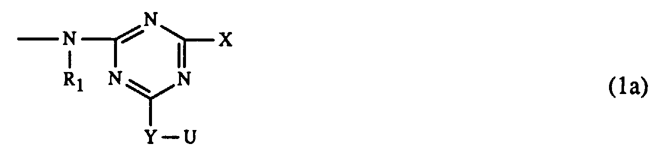 einführt, wobei R₁, Y, U und X die unter Formel (1) angegebenen Bedeutungen haben, oder dass man, im Fall der Verwendung von Farbstoffvorprodukten, die erhaltenen Zwischenprodukte in die gewünschten Endfarbstoffe überführt, und gegebenenfalls eine weitere Umwandlungsreaktion anschliesst.

Das molare Verhältnis der Ausgangsstoffe muss der Zusammensetzung des Endproduktes entsprechend gewählt werden, je nachdem ob nur ein Rest oder zwei Reste der Formel (1a) in dem Reaktivfarbstoff der Formel (1) vorhanden sein sollen.

Gegebenenfalls wird an das erfindungsgemässe Verfahren eine weitere Umwandlungsreaktion angeschlossen. Bei der Herstellung der Endfarbstoffe aus Vorprodukten handelt es sich vor allem um Kupplungen, die zu Azofarbstoffen führen.

Die Einführung eines Restes oder zweier Reste der Formel (1a) kann auch schrittweise erfolgen; so erhält man die Reaktivfarbstoffe der Formel (1), z.B. indem man einen organischen Farbstoff der Formel 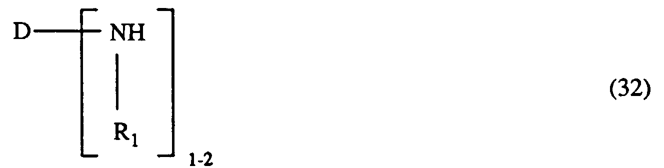 oder ein Farbstoffvorprodukt, mindestens ein Äquivalent eines s-Triazins der Formel 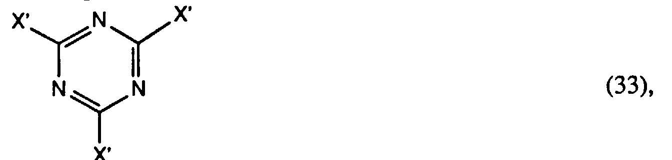 mindestens ein Äquivalent einer Verbindung der Formel

H-Y-U (34),

und mindestens ein Äquivalent eines Amins der Formel

H-X (35),

insbesondere worin H-X ein Rest der Formel 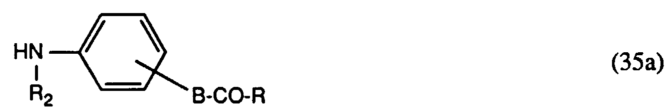 oder worin X ein Rest der Formeln (2a), (2b), (2c), (2d), (2e) oder (2f) ist, in beliebiger Folge zu einem Reaktivfarbstoff der Formel (1) umsetzt, wobei D, R₁, R₂, B, R, Y und U die unter Formel (1) angegebenen Bedeutungen haben, und X' unabhängig voneinander ein Halogenatom bedeuten; oder im Falle der Verwendung von Farbstoffvorprodukten, die erhaltenen Zwischenprodukte in die gewünschte Endfarbstoffe überführt.

Da die einzelnen oben angegebenen Verfahrensschritte in unterschiedlicher Reihenfolge, gegebenenfalls teilweise auch gleichzeitig, ausgeführt werden können, sind verschiedene Ausführungsformen möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Dabei hängt es von der Struktur der Ausgangsstoffe ab, welche der möglichen Ausführungsformen die besten Resultate ergeben, oder unter welchen speziellen Bedingungen, z.B. bei welcher Kondensationstemperatur, die Reaktion am vorteilhafesten auszuführen ist.

Da unter bestimmten Voraussetzungen Hydrolyse eines Halogentriazinrestes eintritt, muss ein Zwischenprodukt, welches Acetylaminogruppen enthält, zwecks Abspaltung der Acetylgruppen verseift werden, bevor mit einem Halogentriazin kondensiert wird. Welche Reaktion z.B. bei der Herstellung eines sekundären Kondensationsproduktes aus einer Verbindung der Formel (32) und dem Triazin, welches den Rest -Y-U enthält, oder aus einer Verbindung der Formel (34) und dem Triazin, welches den Rest -Y-U enthält, zweckmässigerweise zuerst ausgeführt wird, die des Triazins mit der Verbindung der Formel (34) oder mit dem organischen Farbstoff oder einem Vorprodukt des Farbstoffs, ist von Fall zu Fall verschieden und richtet sich vor allem nach der Löslichkeit der beteiligten Aminoverbindungen und der Basizität der zu acylierenden Aminogruppen.

Die Reaktivfarbstoffe der Formel (1), worin der Rest der Formel (1a) zweimal vorhanden ist, werden hergestellt, indem man z.B. zwei gleiche Äquivalente eines Amins der Formel (34) verwendet, oder in dem man je ein Äquivalent zweier verschiedener Amine der Formel (34) verwendet.

Eine weitere Ausfürungsform des erfindungsgemässen Verfahrens ist dadurch gekennzeichnet, dass man einen Farbstoff der Formel (32) zunächst mit einem reaktionsfähigen Derivat des s-Triazins der Formel 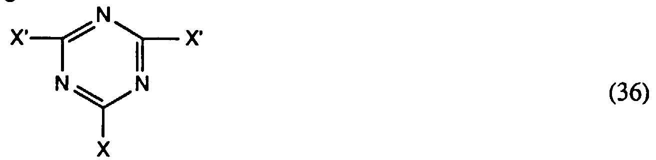 kondensiert, und die erhaltene Verbindung der Formel 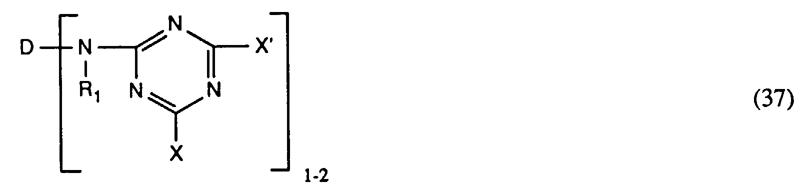 anschliessend mit einer Verbindung der Formel (34) zu einem Reaktivfarbstoff der Formel (1) kondensiert, wobei D, R₁, X und X′ die oben angegebenen Bedeutungen haben.

Nach einer weiterer Ausführungsform des erfrdungsgemässen Verfahrens können Reaktivfarbstoffe der Formel (1) hergestellt werden, indem man eine Komponente dieses Farbstoffes, die z.B. mindestens einen Rest der Formel 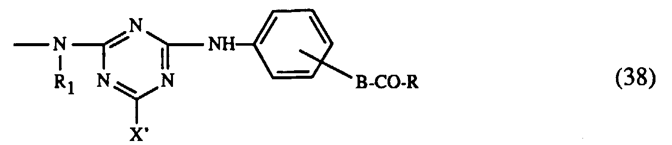 enthält, mit einer zur Herstellung des Farbstoffs benötigten zweiten Komponente, die gegebenenfalls einen Rest der Formel (38) enthält, umsetzt, und den so erhaltenen Farbstoff mit einer Verbindung der Formel (34) kondensiert.

Eine abgewandelte Ausführungsform des Verfahrens besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion. Beispielsweise kann man einen Farbstoff, worin Z ein Rest HO-CH₂CH₂-ist, herstellen und das Zwischenprodukt vor oder nach der Acylierung mit Schwefelsäure umsetzen, so dass die Hydroxygruppe in die Sulfatogruppe übergeführt wird; oder man verwendet einen analogen Farbstoff, worin Z die Gruppe H₂C=CH- ist, und lagert an das Zwischenprodukt Thioschwefelsäure an, wobei ein Rest HO₃SS-CH₂CH₂-entsteht. Die Sulfatierung der Hydroxygruppe in einem Farbstoff der Formel (1) oder einem geeigneten Vorprodukt, erfolgt z.B. durch Umsetzung mit konzentrierter Schwefelsäure bei 0°C bis mässig erhöhter Temperatur. Die Sulfatierung kann auch durch Reaktion der Hydroxyverbindung mit zwei Äquivalenten Chlorsulfonsäure pro Hydroxygruppe in einem polaren organischen Lösungsmittel, wie beispielsweise N-Methylpyrrolidon, bei 10 bis 80°C erfolgen. Vorzugsweise erfolgt die Sulfatierung durch Eintragen der betreffenden Verbindung in Schwefelsäwemonohydrat bei Temperaturen zwischen 5 und 15°C. Die Einführung eines anderen Restes für Z in eine Verbindung der Formel (1) oder ein Zwischenprodukt anstelle eines Halogenatoms oder der Sulfatogruppe, beispielsweise einer Thiosulfato- oder Phosphatogruppe, erfolgt in an sich bekannter Weise. Der Weg der Herstellung über eine Zwischenstufe des Reaktivrestes geht in vielen Fällen einheitlich und vollständig.

Ausserdem können Eliminierungsreaktionen an die Synthese angeschlossen werden. Beispielsweise kann man Reaktivfarbstoffe der Formel (1), welche Sulfatoethylsulfonylreste enthalten, mit halogenwasserstoffabspaltenden Mitteln, wie Natriumhydroxid, behandeln, wobei die Sulfatoethylsulfonylreste in Vinylsulfonylreste übergehen.

Grundsätzlich lassen sich die Reaktivfarbstoffe der Formel (1) sämtlicher Farbstoffklassen in an sich bekannter Weise oder analog zu bekannten Verfahrensweisen herstellen, indem man von Vorprodukten oder Zwischen-produkten für Farbstoffe, die faserreaktive Reste gemäss Formel (1a) enthalten, ausgeht, oder diese faserreaktiven Reste in hierfür geeignete Zwischenprodukte mit Farbstoffcharakter einführt.

Bevorzugt sind Reaktivfarbstoffe der Formel (1), worin D der Rest eines Mono- oder Disazofarbstoffes oder eines Metallkomplexazofarbstoffes ist. In diesem Falle sind die Reste der Formel (1a) an die Diazo-und/oder Kupplungskomponenten gebunden. Falls in einem Reaktivfarbstoff der Formel (1) zwei Reste der Formel (1a) enthalten sind, ist vorzugsweise je ein Rest der Formel (1a) an eine Komponente, d.h. an eine Diazokomponente oder Kupplungskomponente, gebunden. Die Reaktivfarbstoffe haben somit z.B. die Formeln 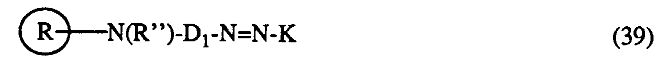 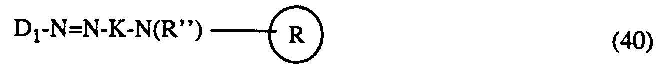 und 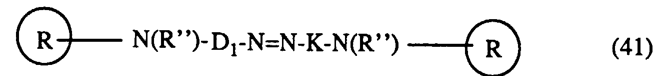 worin R˝ die gleiche Bedeutung hat wie R₁ in der Formel (1), D₁ der Rest einer Diazokomponente, und K der Rest einer Kupplungskomponente ist, und ® einen Reaktivrest der Formel (1a) bedeutet.

Falls man von Farbstoffvorprodukten ausgeht, gelangt man z.B. zu den Reaktivfarbstoffen der Formel (1), indem man eine Komponente des Farbstoffes der Formel (32), die eine Gruppe -N(R₁)H enthält, und ein Triazin der Formel (33) kondensiert, vorher oder nachher mit einer Verbindung der Formel (34) und einer Verbindung der Formel (35) kondensiert, und mit der anderen Komponente des Farbstoffes der Formel (32) umsetzt. Bei der Herstellung der bevorzugten Azofarbstoffe müssen die Diazokomponenten und die Kupplungskomponenten zusammen mindestens eine Aminogruppe -N(R₁)H, und können weitere Aminogruppen enthalten. Man verwendet in diesem Falle als Diazokomponenten vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure. Gegebenenfalls verwendet man entsprechende Acetylamino-oder Nitroverbindungen, worin die Acetylamino- bzw. Nitrogruppe vor der Kondensation mit dem Triazin der Formel (33) durch Verseifen bzw. Reduzieren in die H₂N-Gruppe übergeführt wird.

Liegen in den hergestellten Reaktivfarbstoffen zur Metallkomplexbildung befähigte Gruppen, wie Hydroxy, Carboxy, Amino oder Sulfo, vor, können die Reaktivfarbstoffe auch nachträglich metallisiert werden. Beispielsweise erhält man Metallkomplexazofarbstoffe, indem man erfindungsgemäss erhaltene Azoverbindungen, welche in ortho-ortho'-Stellung zur Azobrücke komplexbildende Gruppen, z.B. Hydroxy-oder Carboxygruppen, enthalten, vor oder gegebenenfalls auch nach der Kondensation mit dem Triazin der Formel (33) mit schwermetallabgebenden Mitteln behandelt. Von besonderem Interesse sind Kupferkomplexe von Reaktivfarbstoffen der Formel (1). Als Methode der Metallisierung kommt ausser der oben genannten auch die entalkylierende Metallisierung und, für die Herstellung von Kupferkomplexen, die oxydative Kupferung in Betracht.

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (1) verwendet werden können, einzeln genannt werden.

### Organische Farbstoffe der Formel (32):

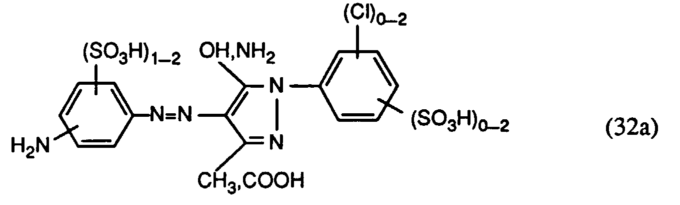

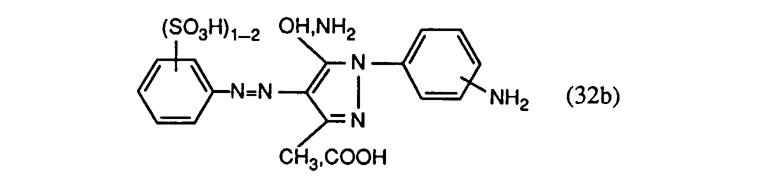

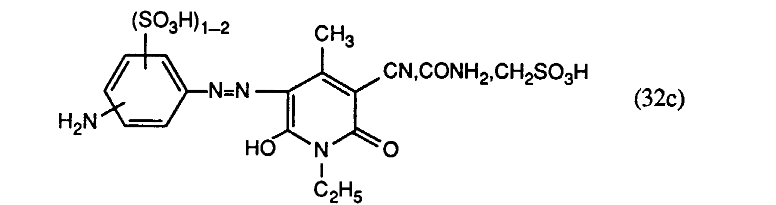

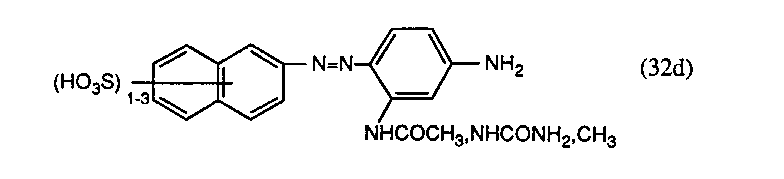

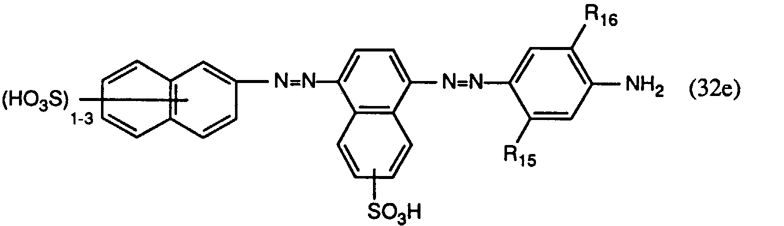

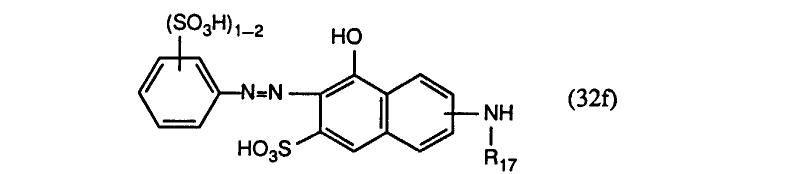

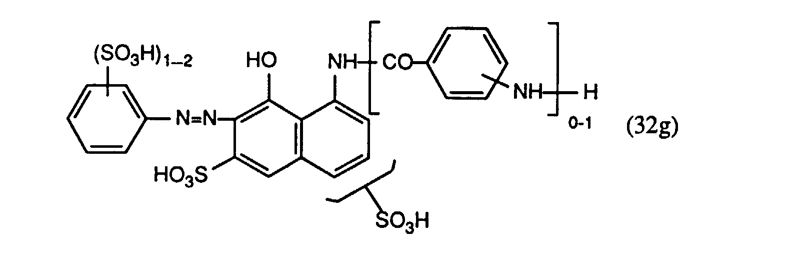

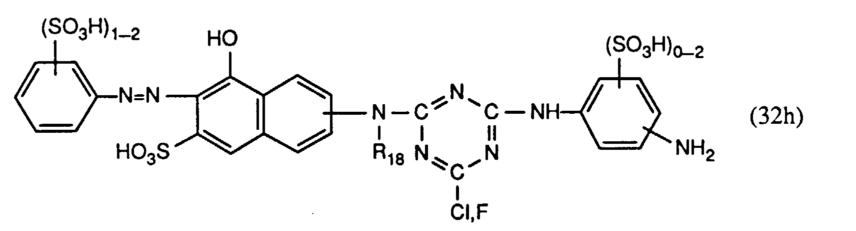

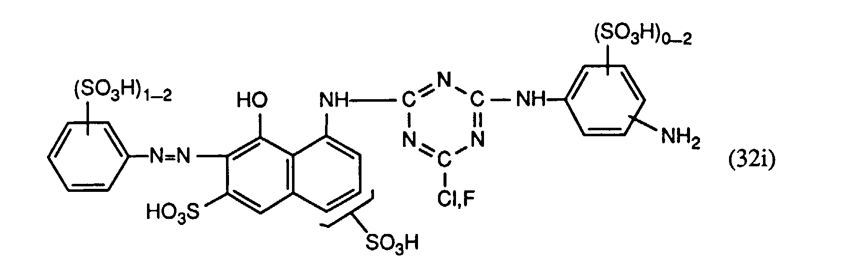

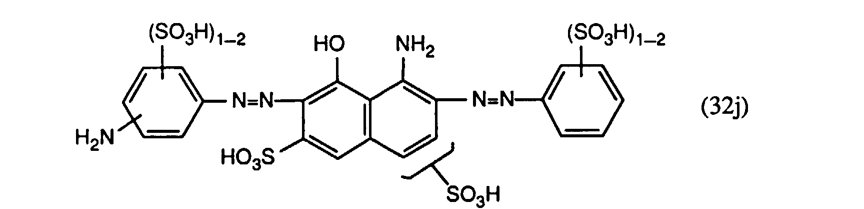

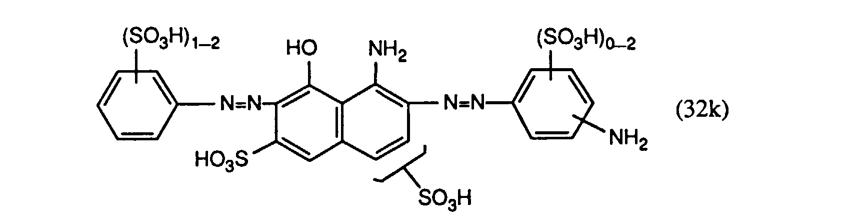

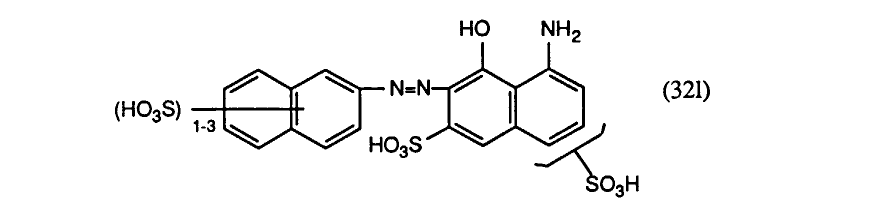

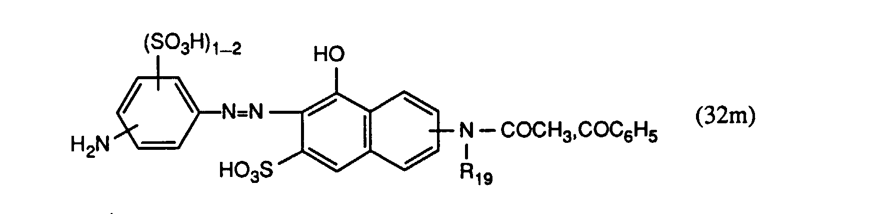

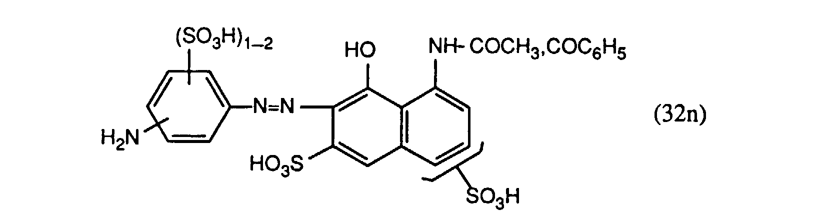

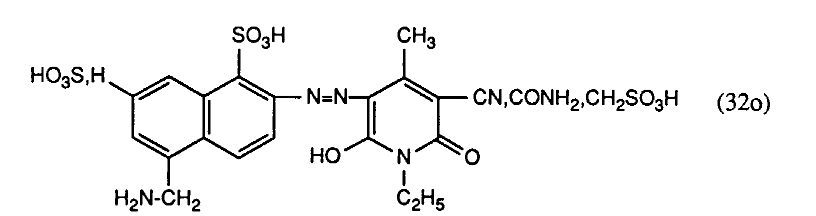

Metallkomplexe von Farbstoffen der Formeln:

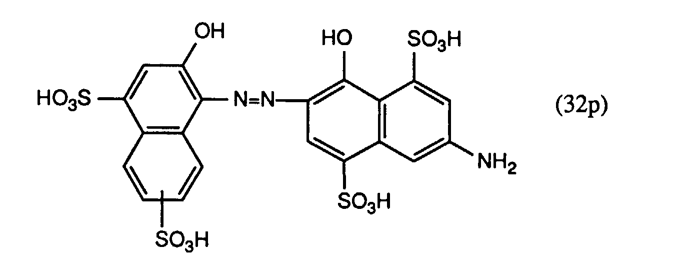

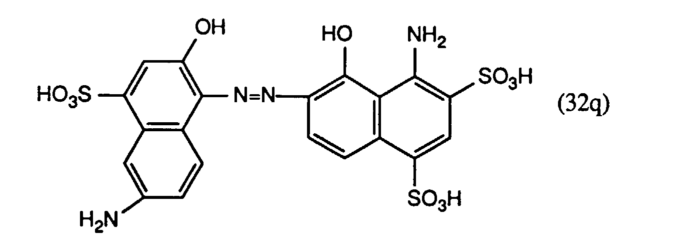

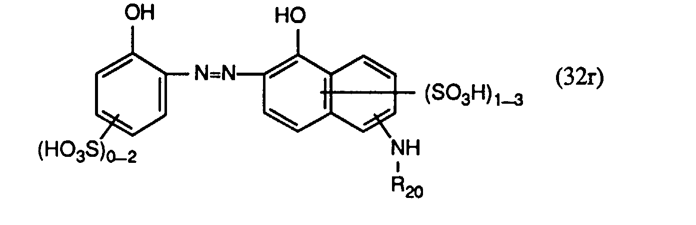

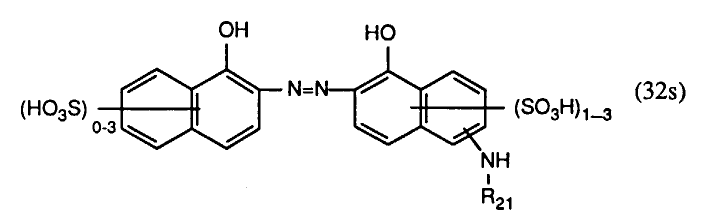

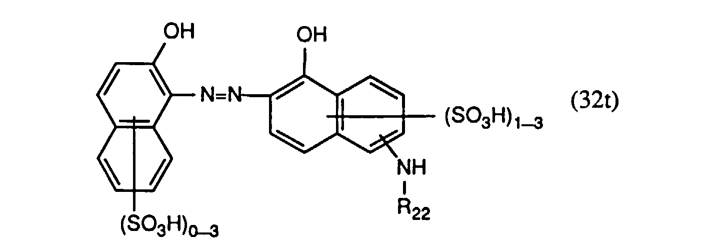

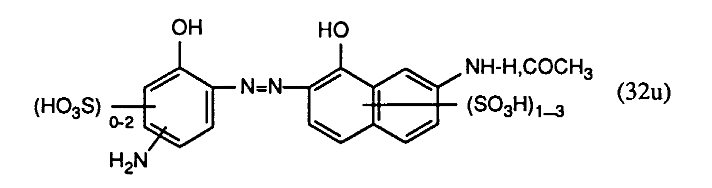

Als Metallatome sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. sie können symmetrisch oder mit beliebigen anderen Liganden unsymmetrisch aufgebaut sein. 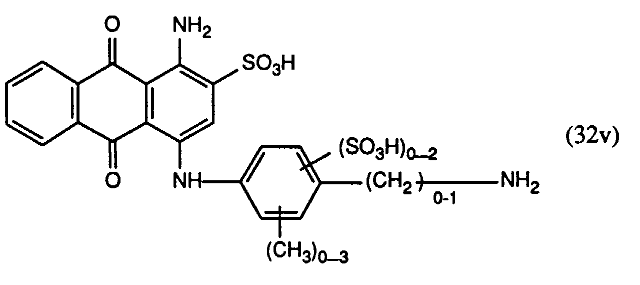 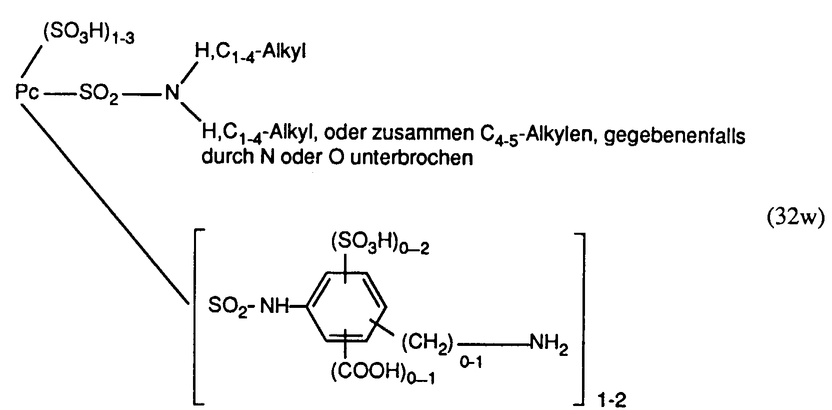 In dieser Formel steht Pc für den Cu- oder Ni-Phthalocyaninrest, die Gesamtzahl der Substituenten am Pc-Gerüst ist 4. 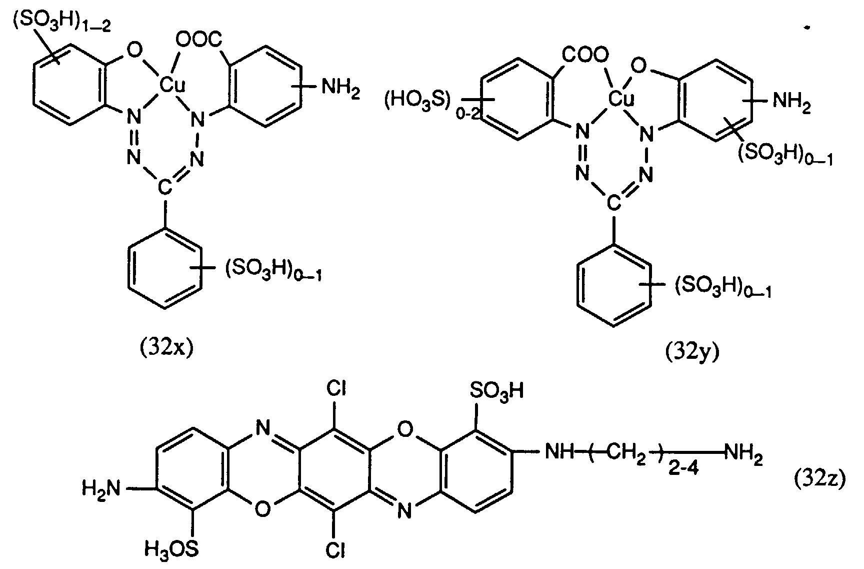 In den oben aufgeführten Formeln bedeuten die Reste R₁₇ bis R₂₂ Wasserstoff oder C₁-C₄-Alkyl, und die Reste R₁₅ und R₁₆ Wasserstoff, C₁-C₄-Alkyl, C₁-C₄-Alkoxy, C₁-C₄-Alkanoylamino, Ureido oder Halogen, wobei die Reste R₁₅ und R₁₆, die zu ein und derselben Formel gehören, voneinander unabhängig sind. Vorzugsweise bedeuten die Reste R₁₇ bis R₂₂ Wasserstoff, Methyl oder Ethyl, und die Reste R₁₅ und R₁₆ Wasserstoff, Methyl, Ethyl, Methoxy, Ethoxy, Acetylamino, Ureido oder Chlor. Die aromatischen Ringe in den obigen Farbstoffen können weitersubstituiert sein, die Benzolringe vor allem durch Methyl, Ethyl, Methoxy, Ethoxy, Methylsulfonyl, Ethylsulfonyl, Carboxy, Acetylamino oder Chlor, und die Naphthalinringe insbesondere durch Methoxy, Carboxy, Acetylamino, Nitro oder Chlor, gleiches gilt für die Anthrachinone, Dioxazine usw. Vorzugsweise sind die Benzolringe nicht weitersubstituiert.

Als Diazo- und Kupplungskomponenten kommen die an sich bekannten Komponenten in Betracht z.B. die in der DE-A-39 35 583 einzeln genannten.

### Triazine der Formel (33)

2,4,6-Trifluor-s-triazin (Cyanurfluorid), 2,4,6-Trichlor-s-triazin (Cyanurchlorid), 2,4,6-Tribrom-s-triazin (Cyanurbromid).

### Verbindungen der Formel (34)

Methylmercaptan, Ethylmercaptan, n-Propylmercaptan, n-Butylmercaptan, β-Hydroxyethylmercaptan, β-Sulfatoethylmercaptan, Methanol, Ethanol, n-Propanol, n-Butanol, Isopropanol, β-Hydroxyethanol, β-Sulfatoethanol, Carboxymethanol, Carboxymercaptan, Methoxycarbonylmethanol, Methoxycarbonylmercaptan, Ethoxycarbonylmethanol, Ethoxycarbonylmercaptan, β-Ethoxyethanol.

Als Verbindungen der Formel (35) kommen z.B. die in der DE-A-39 35 583 einzeln genannten Verbindungen in Betracht.

Die Kondensation des s-Triazins der Formel (33) mit den organischen Farbstoffen der Formel (32) bzw. den eine Gruppe -N(R₁)H enthaltenden diazotierbaren und/oder kupplungsfähigen Komponenten erfolgt vorzugsweise in wässriger Lösung oder Suspension, bei niedrigen Temperaturen, vorzugsweise zwischen 0° und 5°C und bei schwach saurem, neutralem bis schwach alkalischem pH-Wert. Vorteilhaft wird der bei der Kondensation freiwerdende Halogenwasserstoff laufend durch Zugabe wässriger Alkalihydroxide, -carbonate oder -bicarbonate neutralisiert. Für die weitere Umsetzung der so erhaltenen Halogentriazinfarbstoffe bzw. für die Umsetzung des 2,4,6-Trihalogen-s-triazins mit den Verbindungen der Formeln (34) oder (35) setzt man die freien Amine oder deren Salze, bevorzugt in Form des Hydrochlorids, ein. Die Umsetzung wird bei Temperaturen etwa zwischen 0 und 40°, bevorzugt zwischen 5 und 25°C, unter Zusatz säurebindender Mittel, bevorzugt Natriumcarbonat, in einem pH-Bereich von 2 bis 8 bevorzugt 5 bis 6,5, durchgeführt.

Die Kondensation des Halogentriazins mit einer Verbindung der Formel (34) kann vor oder nach der Kondensation des Halogentriazins mit einem Farbstoff der Formel (32) oder einer Verbindung der Formel (35) geschehen. Die Kondensation des Halogentriazins mit einer Verbindung der Formel (32), (34) oder (35) erfolgt vorzugsweise in wässriger Lösung oder Suspension, bei niedriger Temperatur und bei schwach saurem bis neutralem pH-Wert. Auch hier wird der bei der Kondensation freiwerdende Halogenwasserstoff vorteilhafterweise durch laufende Zugabe von wässrigen Alkalihydroxiden, -carbonaten oder -bicarbonaten neutralisiert.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Die Reaktivfarbstoffe der Formel (1) eignen sich zum Färben und Bedrucken der verschiedensten Materialien, wie Seide, oder, Wolle, Polyamidfasern und Polyurethanen, und insbesondere cellulosehaltiger Fasermaterialien aller Art. Solche Fasermaterialien sind beispielsweise die natürlichen Cellulosefasern, wie insbesondere Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Falls die Reaktivfarbstoffe der Formel (1), worin D der Rest eines Anthrachinonfarbstoffes ist, eine ungenügende Löslichkeit in der alkalischen Färbeflotte aufweisen, kann dieser Mangel in der aus der Literatur bekannten Weise durch Zusatz von Dispergatoren oder anderen nichtfarbigen Verbindungen z.B. ein Naphthalinsulfonsäure-Formaldehyd- Kondensat oder insbesondere Anthrachinon-2-sulfonsäure, behoben werden.

Die Reaktivfarbstoffe der Formel (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Überfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

Beispiel 1: Zur neutralen Lösung von 30,5 Teilen des Trinatriumsalzes des durch Kupplung von diazotierter 2-Aminonaphthalin-3,6,8-trisulfonsäure mit 3-Aminophenylharnstoff in essigsaurem Milieu erhaltenen Aminoazofarbstoffes in 500 Teilen Wasser gibt man bei 0° 10 Teile 2,4-Dichlor-6-methylthio-1,3,5-triazin, wobei durch ständige Zugabe von 2n Natriumhydroxidlösung ein pH-Wert von 6 bis 6,5 aufrechterhalten wird.

Anschliessend werden 15 Teile 3-Aminobenzoesäure-N'-β(β'-chlorethylsulfonyl)-ethylamidhydrochlorid zugegeben und bei 20 bis 50° und einem pH-Wert von 6 bis 7 kondensiert. Die Kondensation wird fortgesetzt bis chromatographisch kein Ausgangsfarbstoff mehr nachweisbar ist. Der entstandene Farbstoff entspricht in Form der freien Säure der Formel

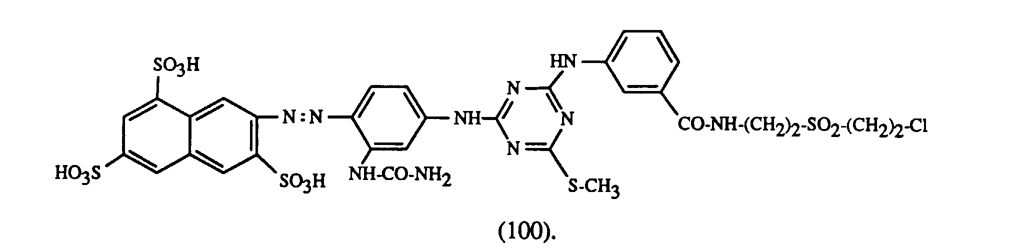

Der erhaltene Farbstoff wird ausgesalzen, abgesaugt, gewaschen und im Vakuum getrocknet. Er färbt Cellulosematerialien in sehr echten rotstichigen Gelbtönen.

Behandelt man die oben hergestellte β-Chlorethylsulfonylverbindung ca. 30 Minuten bei pH-Wert 10 und Raumtemperatur, und stellt dann den pH-Wert auf 6 zurück, so erhält man die analoge Vinylsulfonylverbindung.

Beispiel 2: 16 Teile 1-Amino-8-hydroxynaphthalin-3,6-disulfonsäure werden in 400 Teilen Wasser neutral gelöst. Man stellt die Reaktionslösung auf einen pH-Wert von 4,5 ein und tropft bei 0 bis 3° unter gutem Rühren 10,0 Teile 2,4,-Dichlor-6-methylthio-1,3,5-triazin zu. Der dabei freiwerdende Chlorwasserstoff wird durch dosierte Zugabe von 2n Natriumhydroxidlösung neutralisiert. Sobald keine freie 1-Amino-8-hydroxynaphthalin-3,6-disulfonsäure mehr nachweisbar ist, werden 15 Teile 3-Aminobenzoesäure-N'-β(β'-chlorethylsulfonyl)ethylamid-hydro chlorid in 50 Teilen Wasser zugegeben. Man lässt die Temperatur auf 20 bis 50° steigen und hält den pH-Wert der Reaktionslösung bei 4 bis 4,5. Nach beendigter Kondensation wird das Farbstoffzwischenprodukt bei 0 bis 10° mit 15 Teilen diazotierter 2-Aminonaphthalin-1,5-disulfonsäure gekuppelt. Bei einem End-pH-Wert von 6,5 bis 7 wird ein Farbstoff, der in Form der freien Säure der Formel 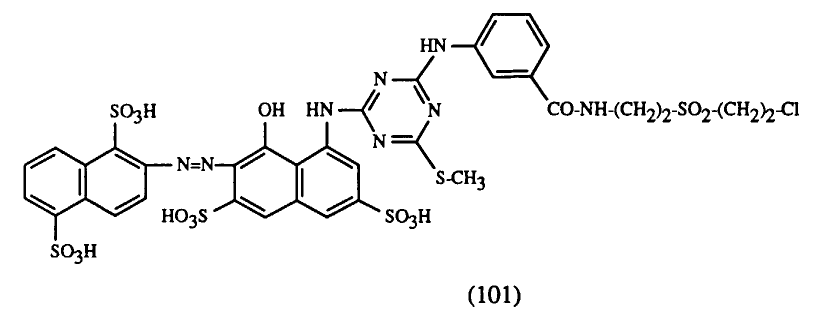 entspricht, mit Natriumchlorid ausgesalzen, filtriert, gewaschen und im Vakuum getrocknet. Der Farbstoff stellt ein dunkelrotes Pulver dar und färbt Baumwolle und regenerierte Cellulose in blaustichigen Rottönen vom guter Nass-, Reib- und Lichtechtheit.

Behandelt man die oben hergestellte β-Chlorethylsulfonylverbindung ca. 30 Minuten bei pH-Wert 10 und Raumtemperatur, und stellt dann den pH-Wert auf 6 zurück, so erhält man die analoge Vinylsulfonylverbindung.

Der vinylierte Farbstoff des obigen Beispiels kann auch in der Weise hergestellt werden, dass man die Monoazoverbindung der Formel 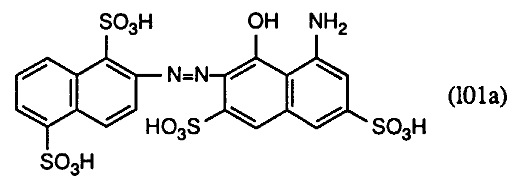 zuerst mit 2,4-Dichlor-6-methylthio-1,3,5-triazin kondensiert, und danach die erhaltene Monochlortriazin-Verbindnung mit 3-Aminobenzoesäure-N′-β-(β′-chlorethylsulfonyl)ethylamid bei pH-Wert 5 bis 7 und 20 bis 60° umsetzt, und zuletzt wie angegeben vinyliert.

Verfährt man wie in den Beispielen 1 und 2 angegeben, setzt jedoch statt der dort verwendeten Chromophore äquimolare Mengen der in der folgenden Tabelle in Kolonne I angegebenen Verbindungen ein, und führt in diese einen Rest der Formel 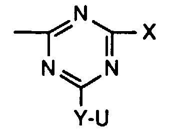 ein, worin -Y-U eine Gruppe -O-CH₃, -O-CH₂CH₃, -O-CH₂CH₂CH₃, -O-(CH₂)₃CH₃, -O-CH(CH₃)₂, -O-CH₂CH₂-OH, -O-(CH₂)₂-OSO₃H, -O-CH₂-COOH, -O-CH₂COOCH₃, -O-CH₂-COOC₂H₅, -O-CH₂CH₂-O-CH₂CH₃, -S-CH₃, -S-CH₂CH₃, -S-(CH₂)₂CH₃, -S-(CH₂)₃CH₃, -S-CH₂CH₂-OH, -S-CH₂CH₂-OSO₃H, -S-CH₂COOH, -S-CH₂-COOCH₃ oder -S-CH₂-COOC₂H₅ und X ein Rest 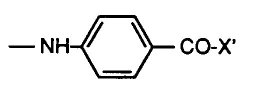 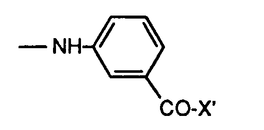 oder 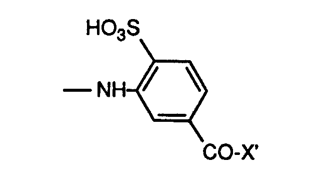 worin X'

-NH(CH₂)₂SO₂(CH₂)₂Cl,

-NH(CH₂)₂SO₂(CH₂)₂OSO₃H,

-NH(CH₂)₂SO₂CH=CH₂,

-NH(CH₂)₃SO₂(CH₂)₂Cl,

-NH(CH₂)₃SO₂(CH₂)₂OSO₃H,

-NH(CH₂)₃SO₂CH=CH₂,

-NH(CH₂)₄SO₂(CH₂)₂Cl,

-NH(CH₂)₄SO₂(CH₂)₂OSO₃H,

-NH(CH₂)₄SO₂CH=CH₂,

-NHCH₂CH₂-O-CH₂CH₂SO₂(CH₂)₂Cl,

-NHCH₂CH₂-O-CH₂CH₂SO₂(CH₂)₂OSO₃H,

-NHCH₂CH₂-O-CH₂CH₂SO₂CH=CH₂,

-NHCH₂CH₂CH₂-O-CH₂CH₂SO₂(CH₂)₂Cl,

-NHCH₂CH₂CH₂-O-CH₂CH₂SO₂(CH₂)₂OSO₃H,

-NHCH₂CH₂CH₂-O-CH₂CH₂SO₂CH=CH₂,

-NHCH₂CH₂CH₂-O-CH₂CH₂CH₂SO₂(CH₂)₂Cl,

-NHCH₂CH₂CH₂-O-CH₂CH₂CH₂SO₂(CH₂)₂OSO₃H,

-NHCH₂CH₂CH₂-O-CH₂CH₂CH₂SO₂CH=CH₂,

-NHCH₂CH₂-O-CH₂CH₂CH₂SO₂(CH₂)₂Cl,

-NHCH₂CH₂-O-CH₂CH₂CH₂SO₂(CH₂)₂OSO₃H,

-NHCH₂CH₂-O-CH₂CH₂CH₂SO₂CH=CH₂,

-NCH₃(CH₂)₂SO₂(CH₂)₂Cl,

-NCH₃(CH₂)₂SO₂(CH₂)₂OSO₃H,

-NCH₃(CH₂)₂SO₂CH=CH₂,

-NCH₃(CH₂)₃SO₂(CH₂)₂Cl,

-NCH₃(CH₂)₃SO₂(CH₂)₂OSO₃H,

-NCH₃(CH₂)₃SO₂CH=CH₂,

-N(C₂H₅)(CH₂)₂SO₂(CH₂)₂Cl,

-N(C₂H₅)(CH₂)₂SO₂(CH₂)₂OSO₃H,

-N(C₂H₅)(CH₂)₂SO₂CH=CH₂,

-N(C₂H₅)(CH₂)₃SO₂(CH₂)₂Cl,

-N(C₂H₅)(CH₂)₄SO₂(CH₂)₂OSO₃H,

-N(C₂H₅)(CH₂)₅SO₂CH=CH₂,

-N((CH₂)₂SO₂(CH₂)₂Cl)₂,

-N((CH₂)₂SO₂(CH₂)₂OSO₃H)₂,

-N((CH₂)₂SO₂CH=CH₂)₂,

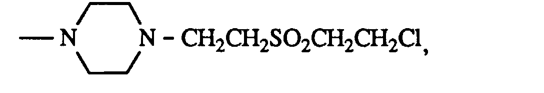

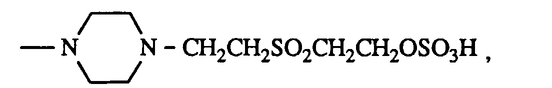

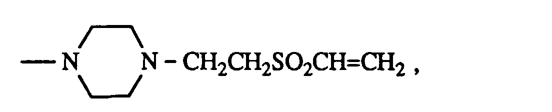

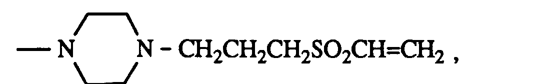

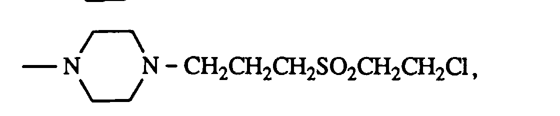

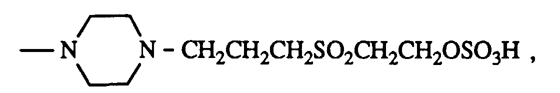

oder worin X = X' ist, so erhält man weitere wertvolle Farbstoffe, die Baumwolle in den in Kolonne II angegebenen Tönen färben.

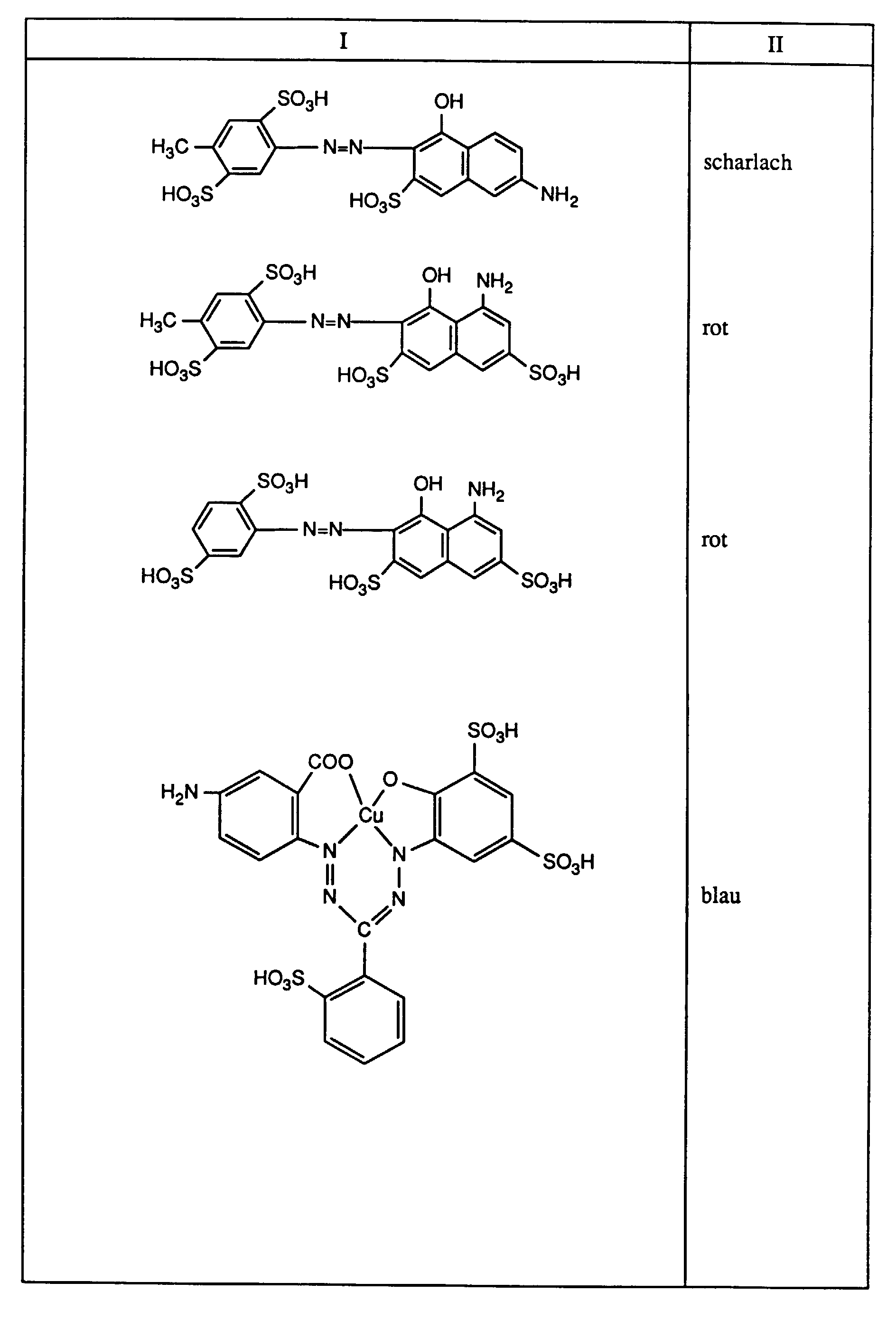

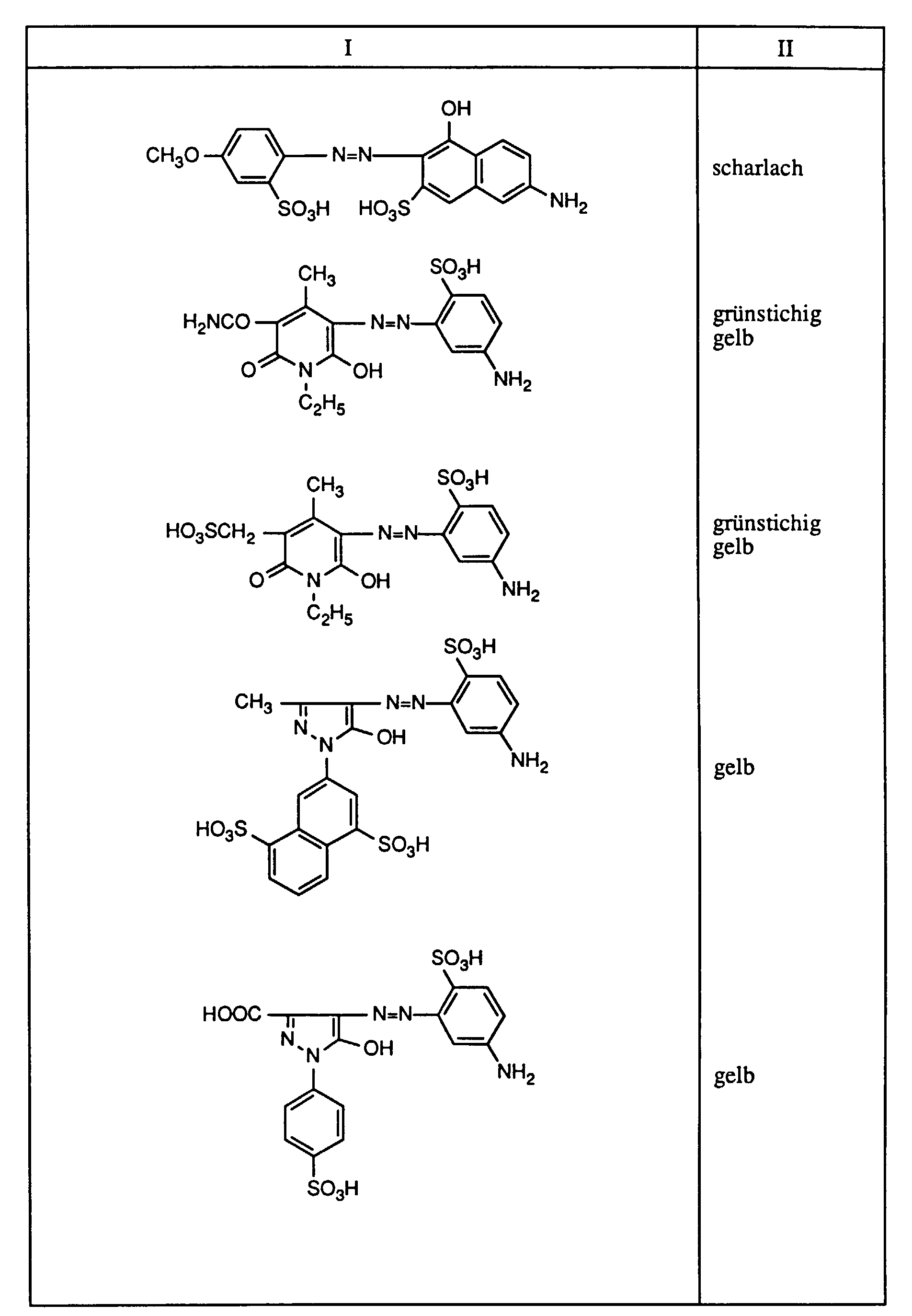

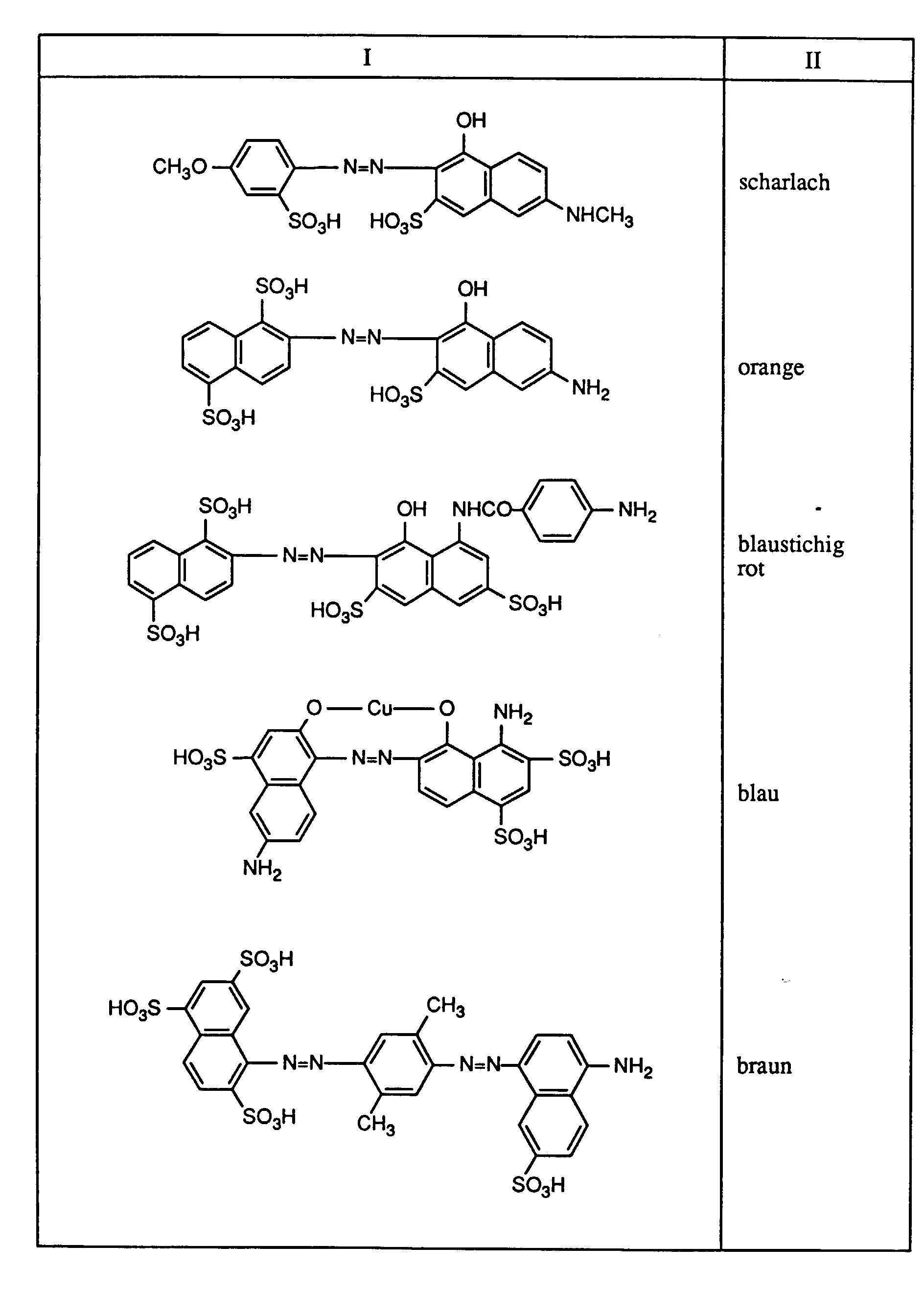

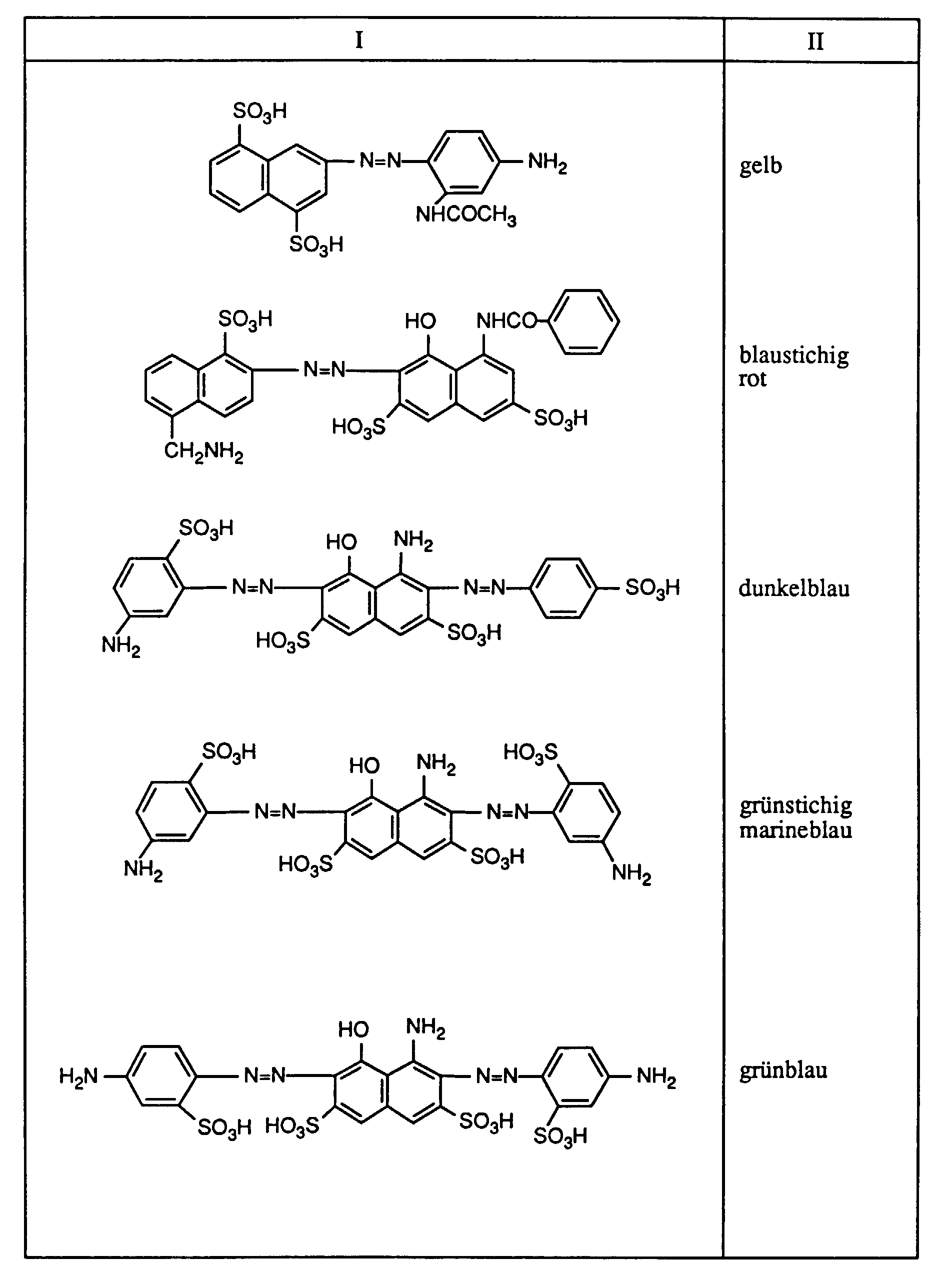

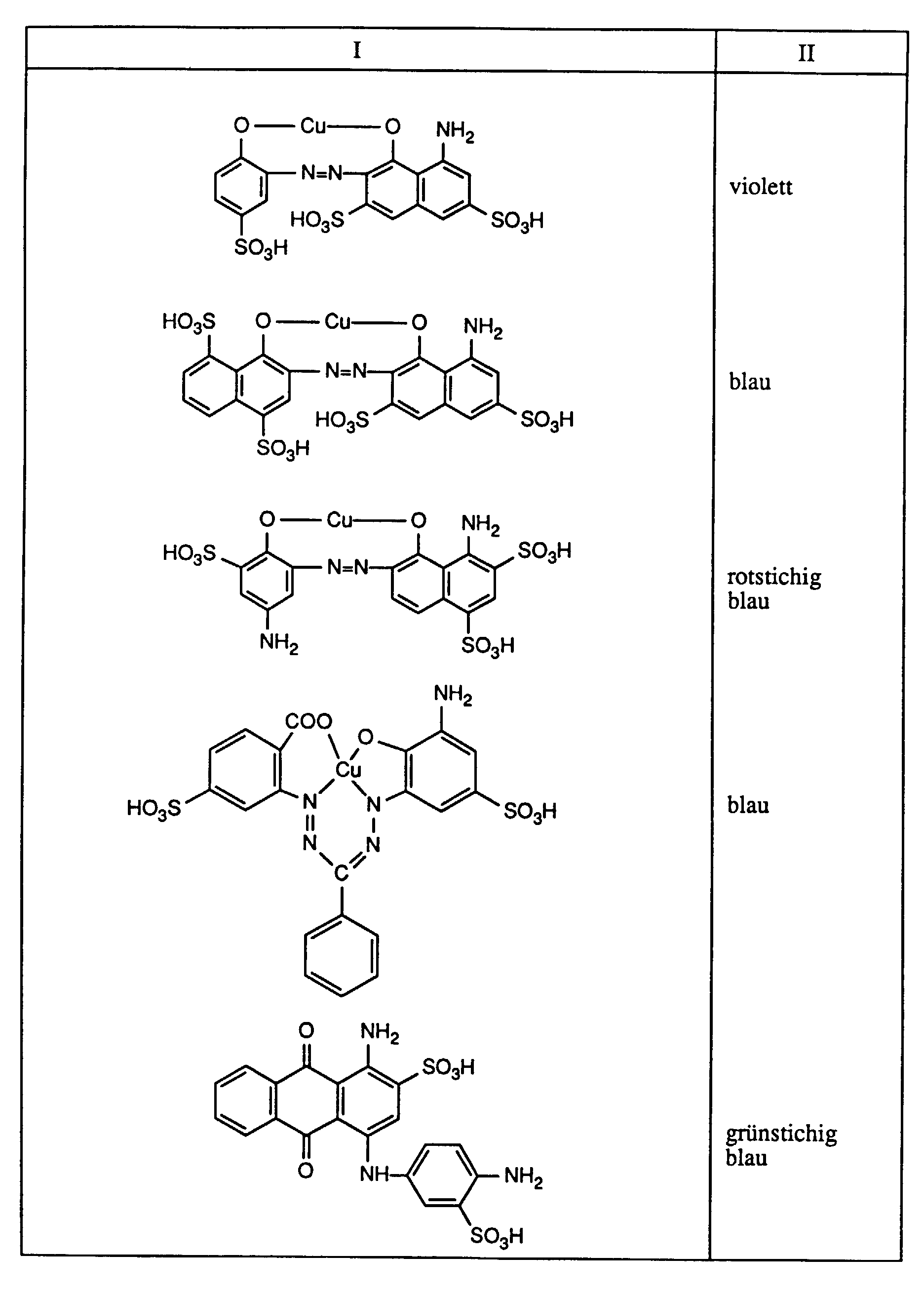

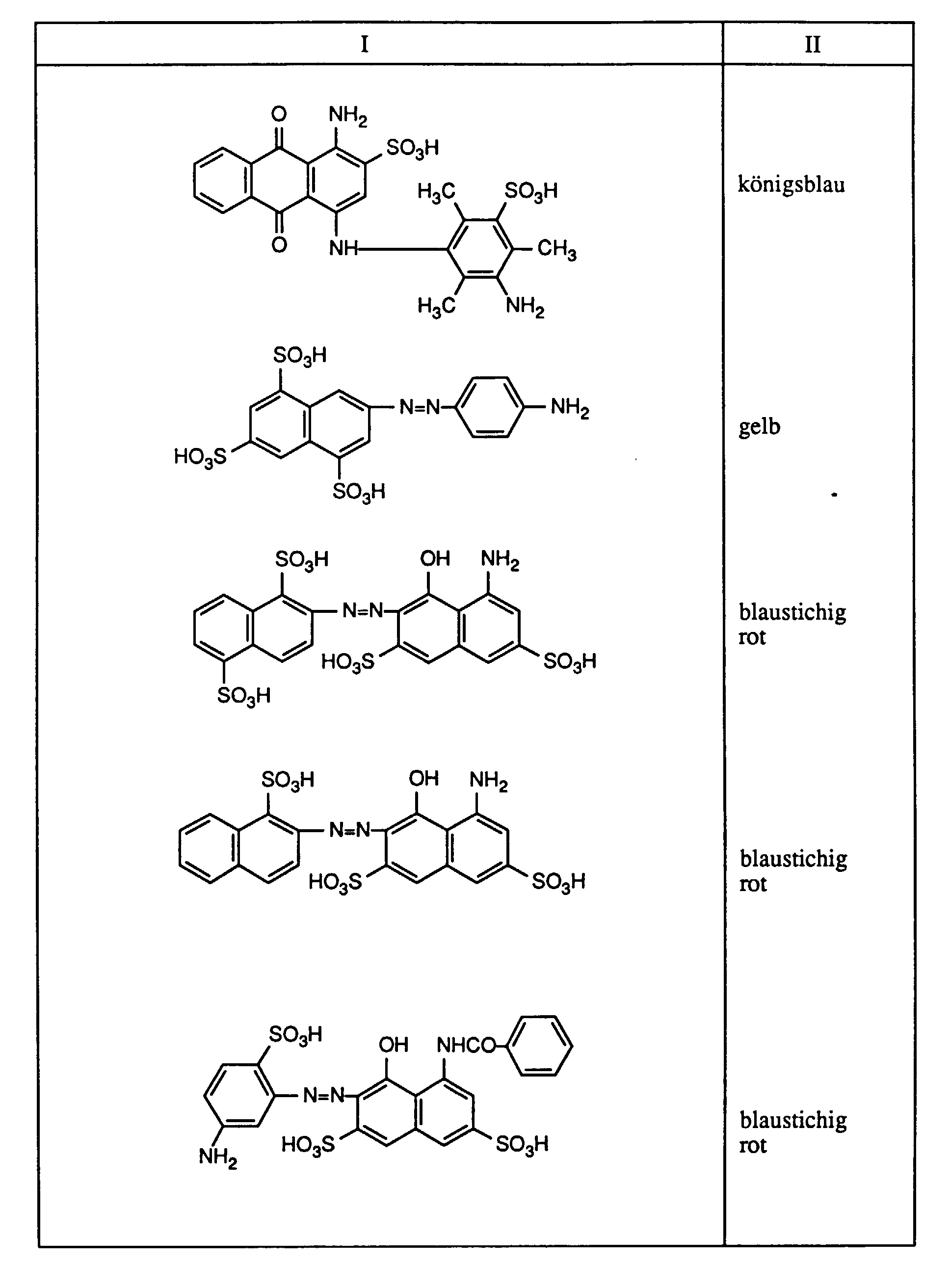

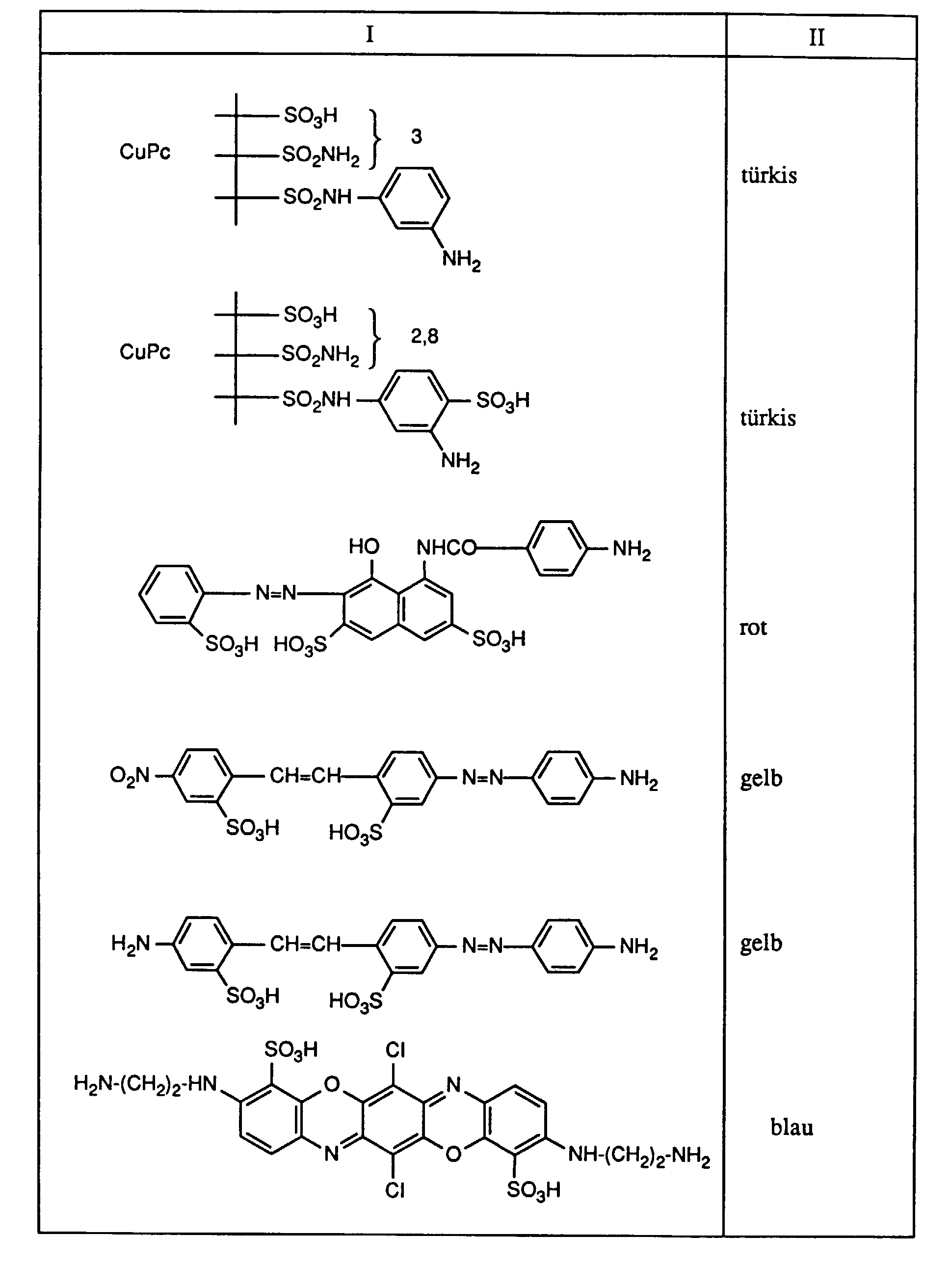

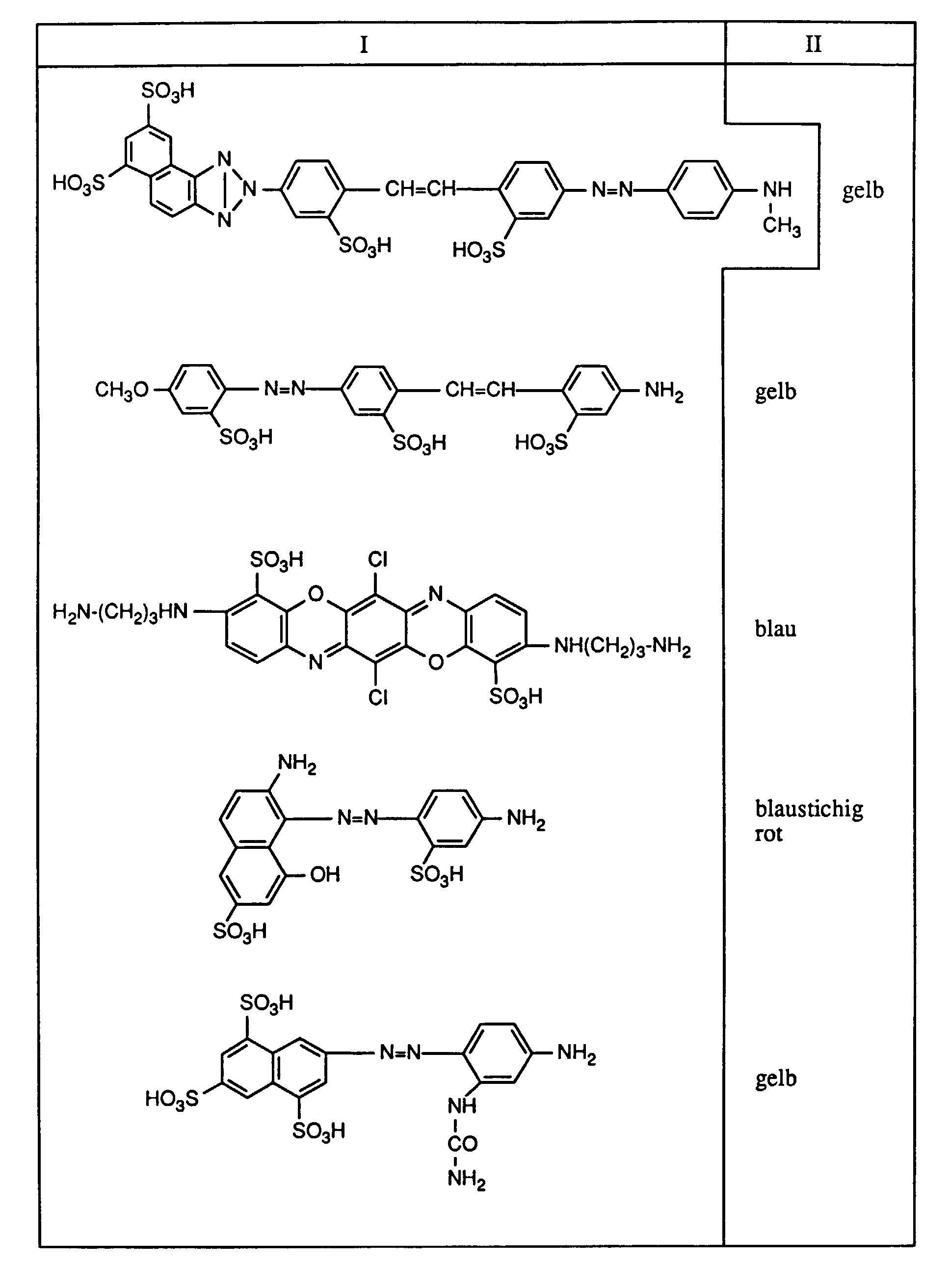

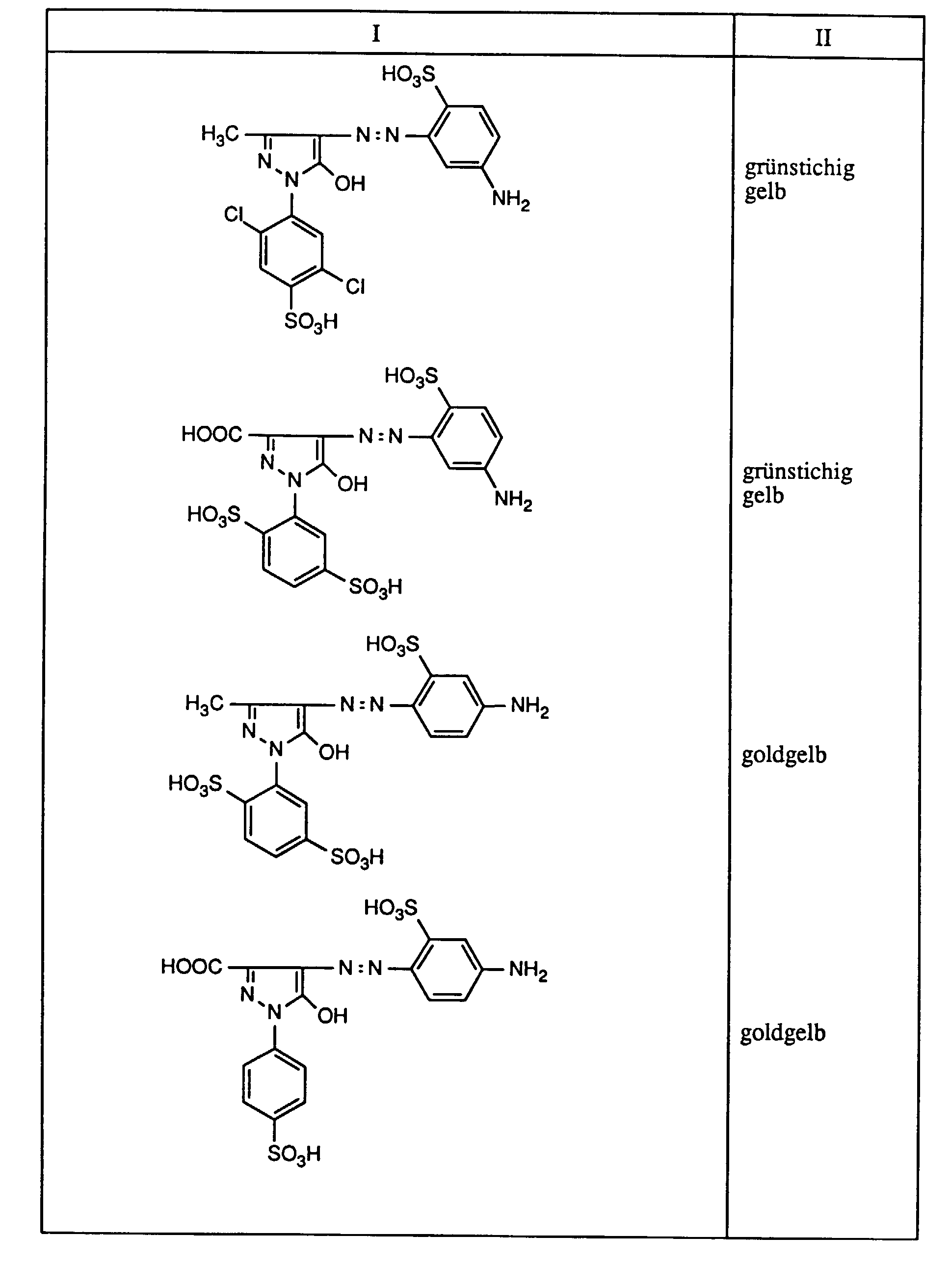

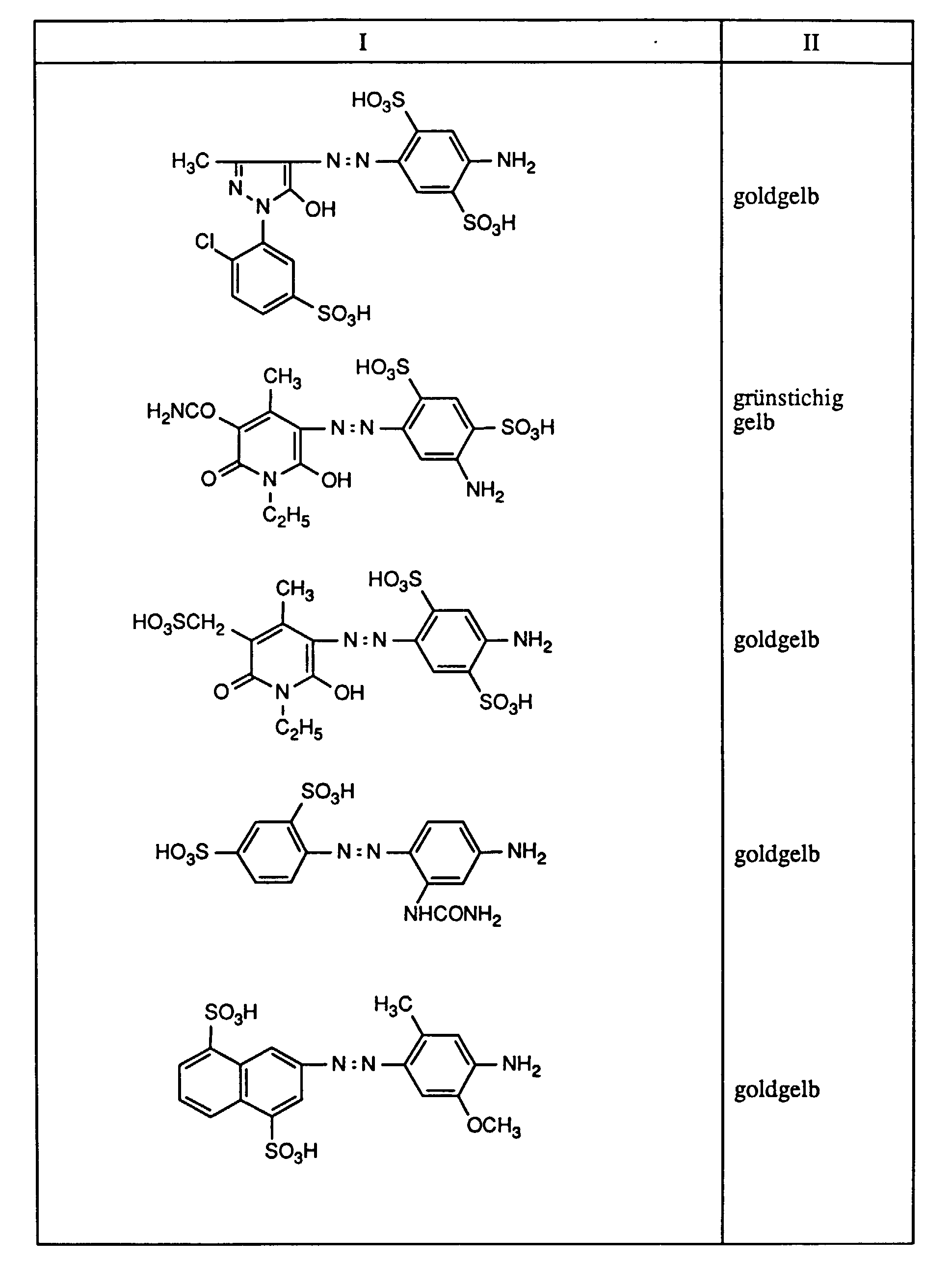

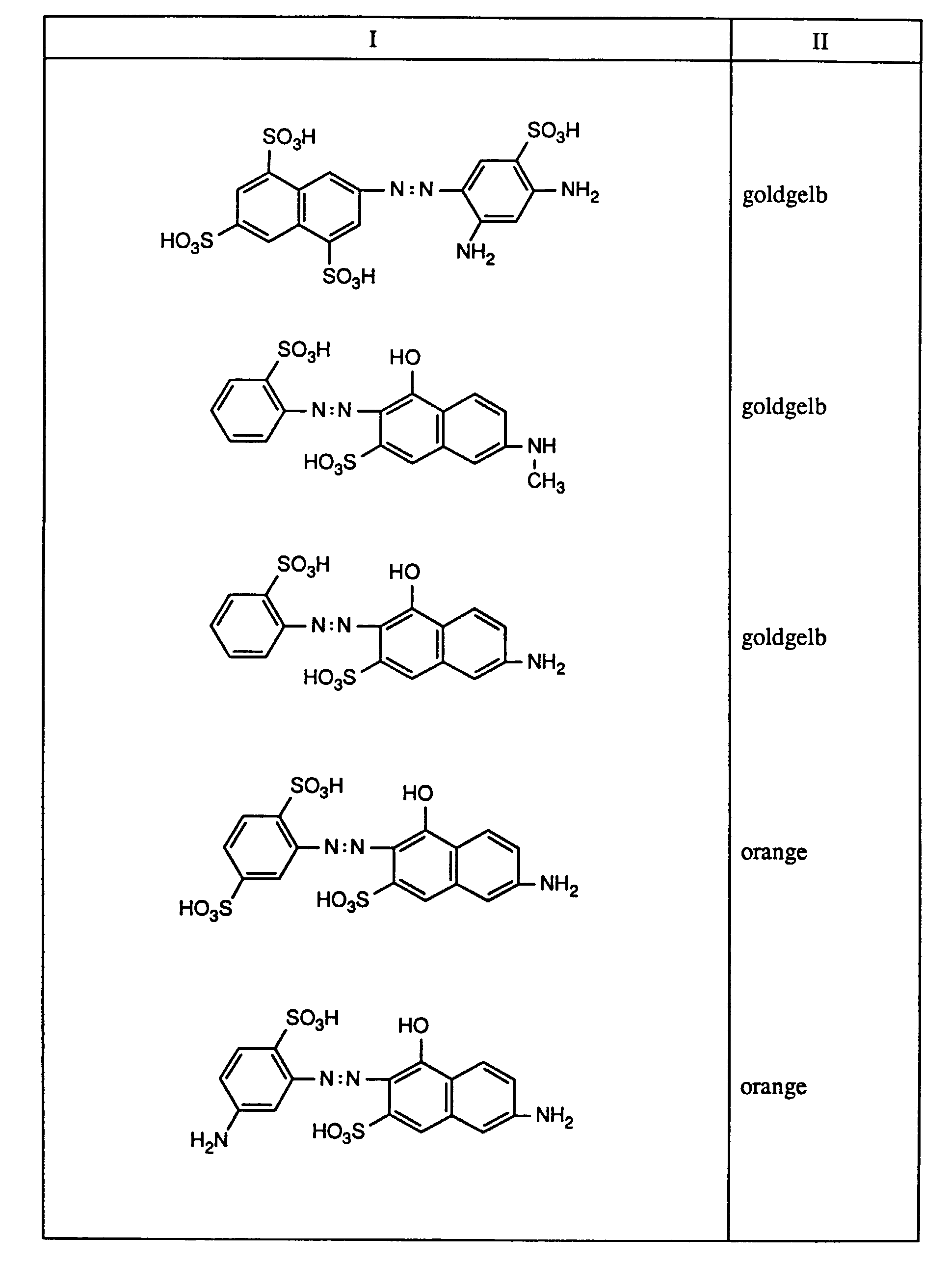

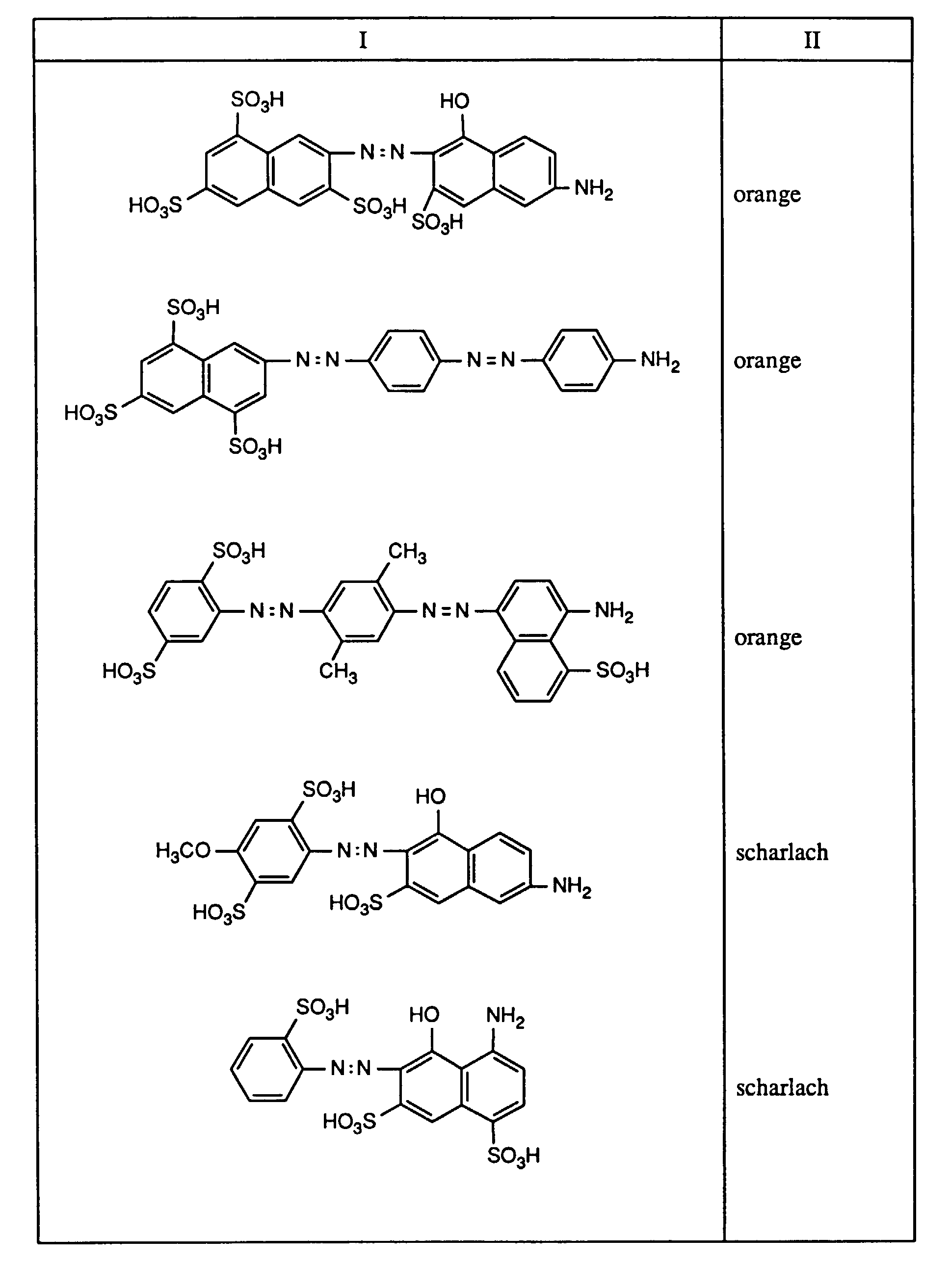

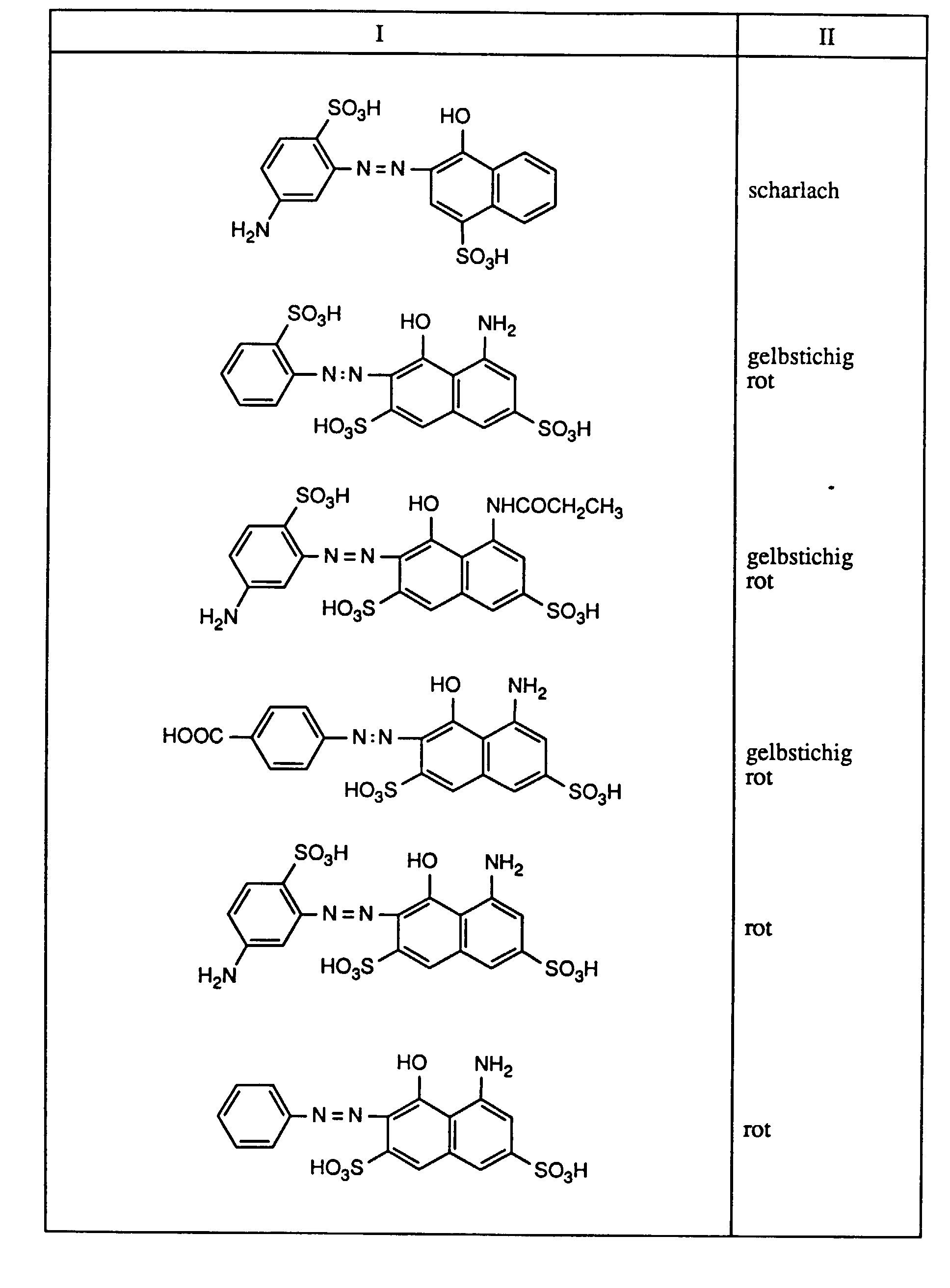

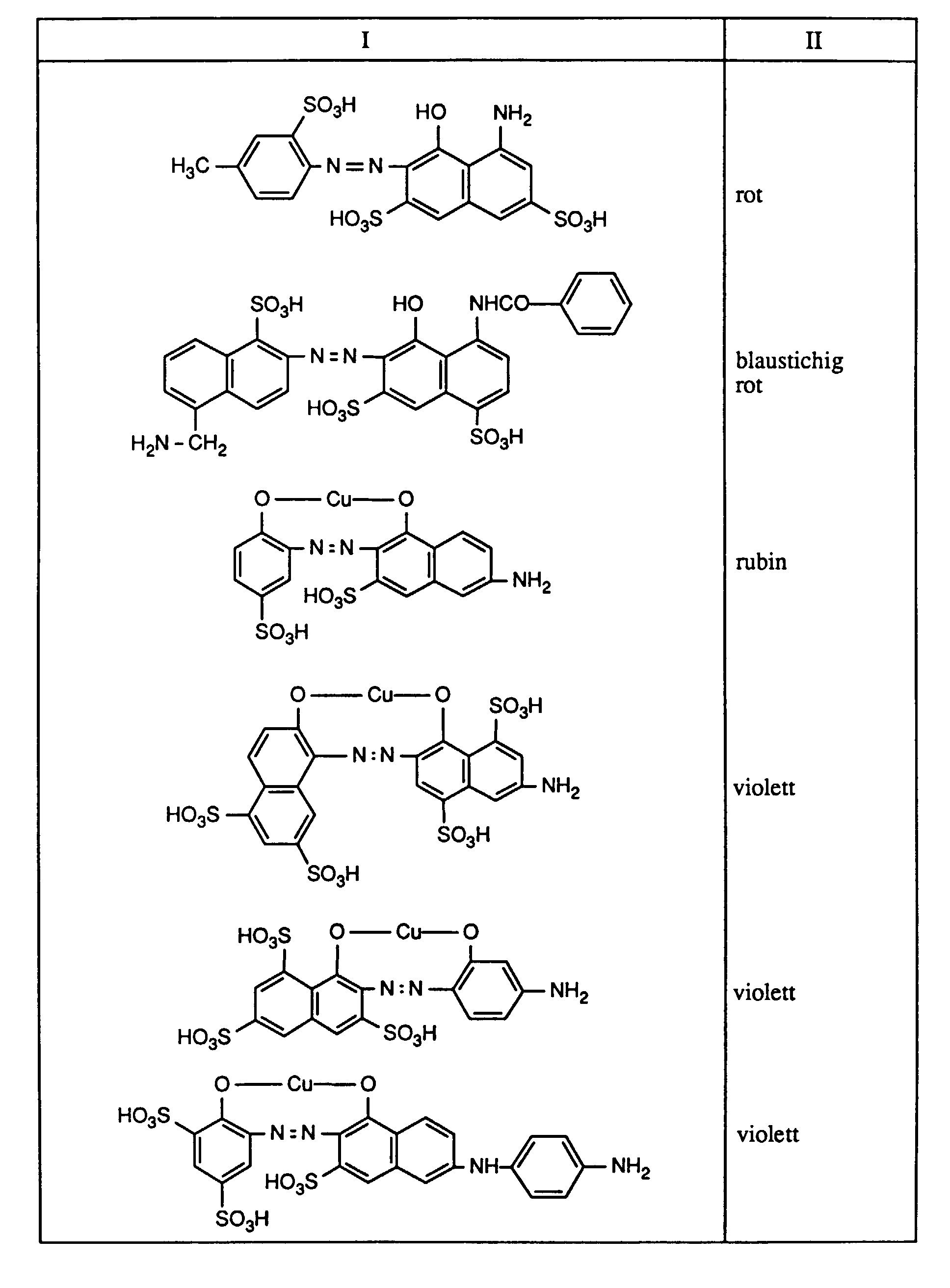

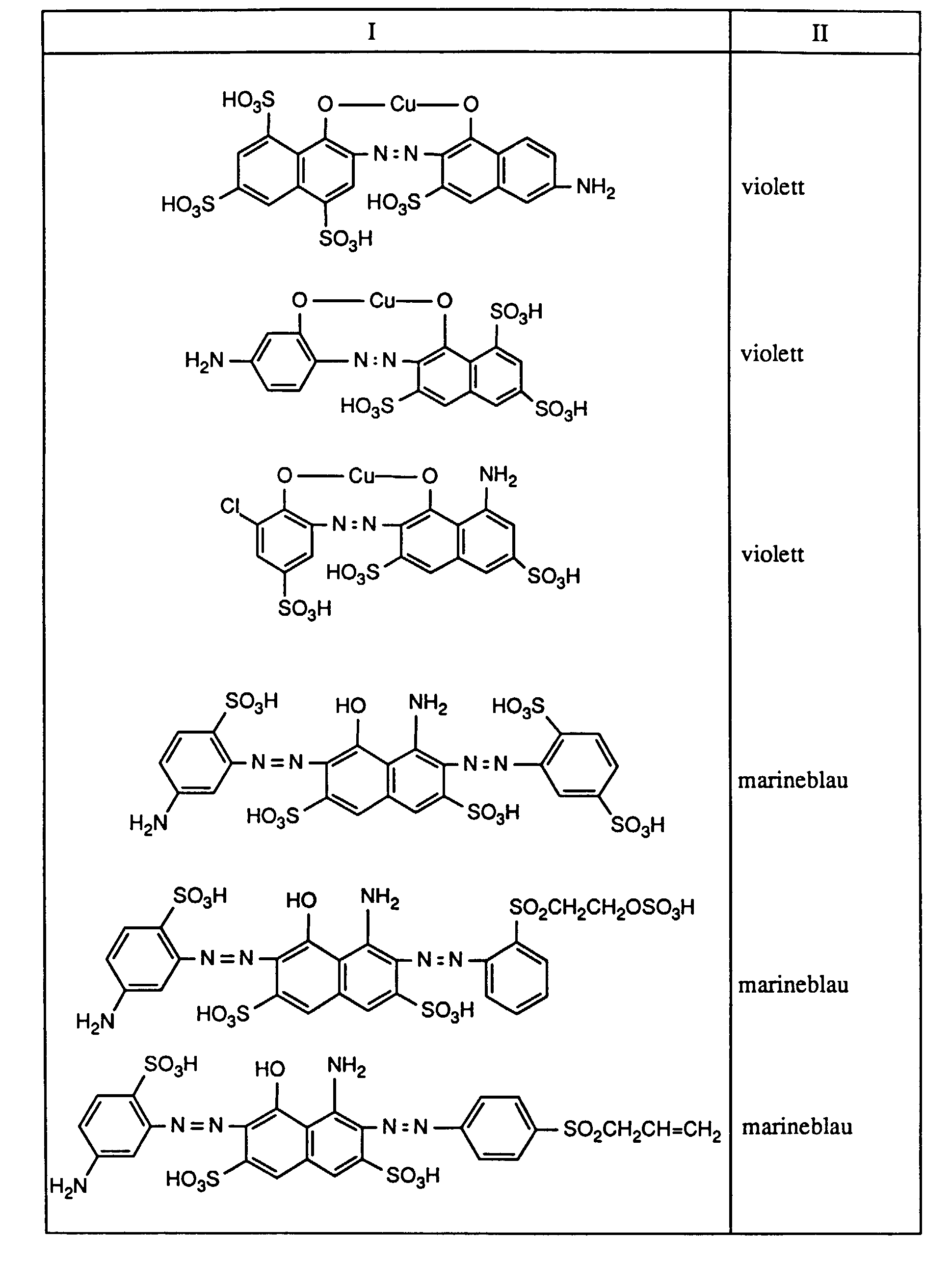

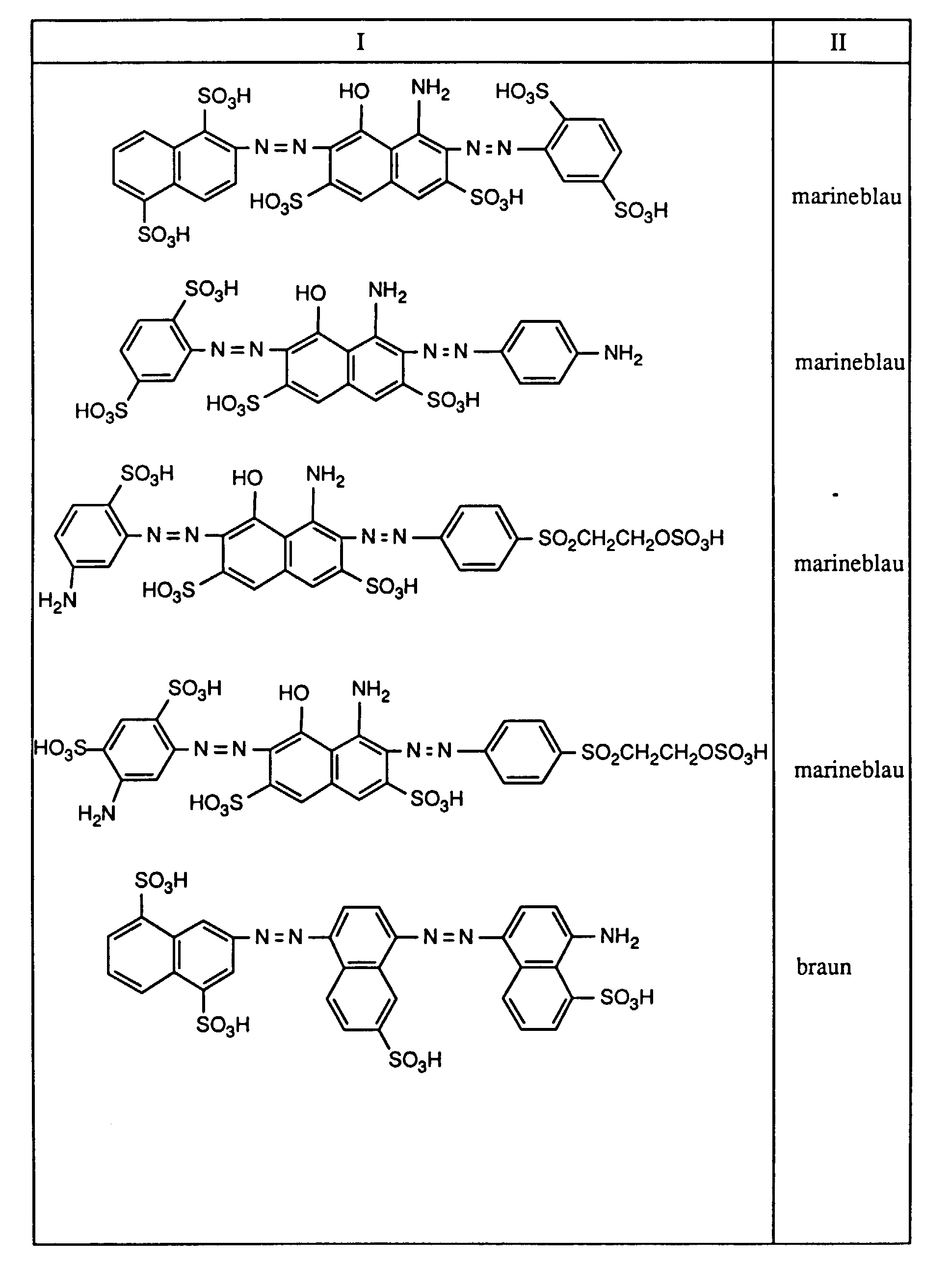

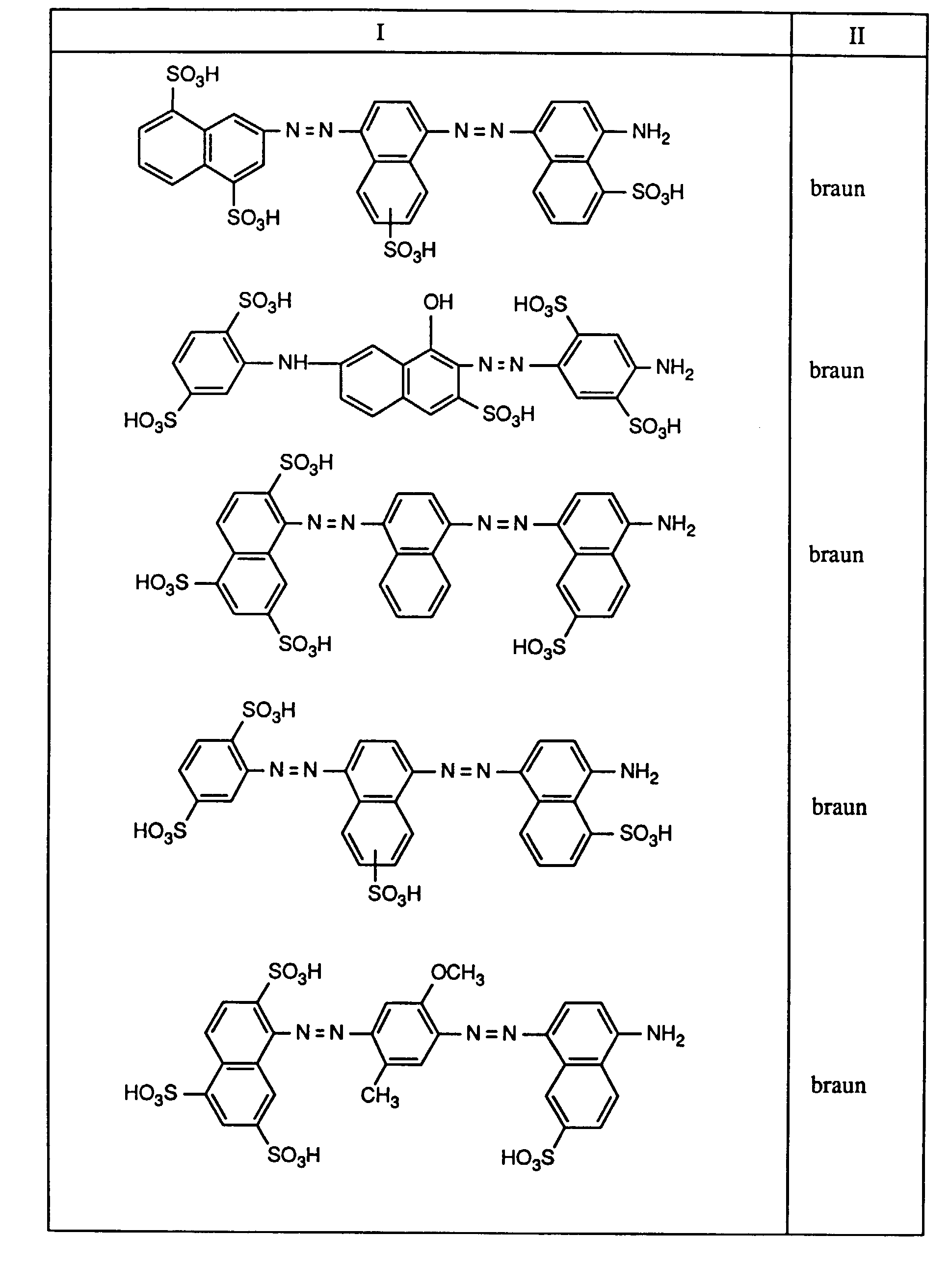

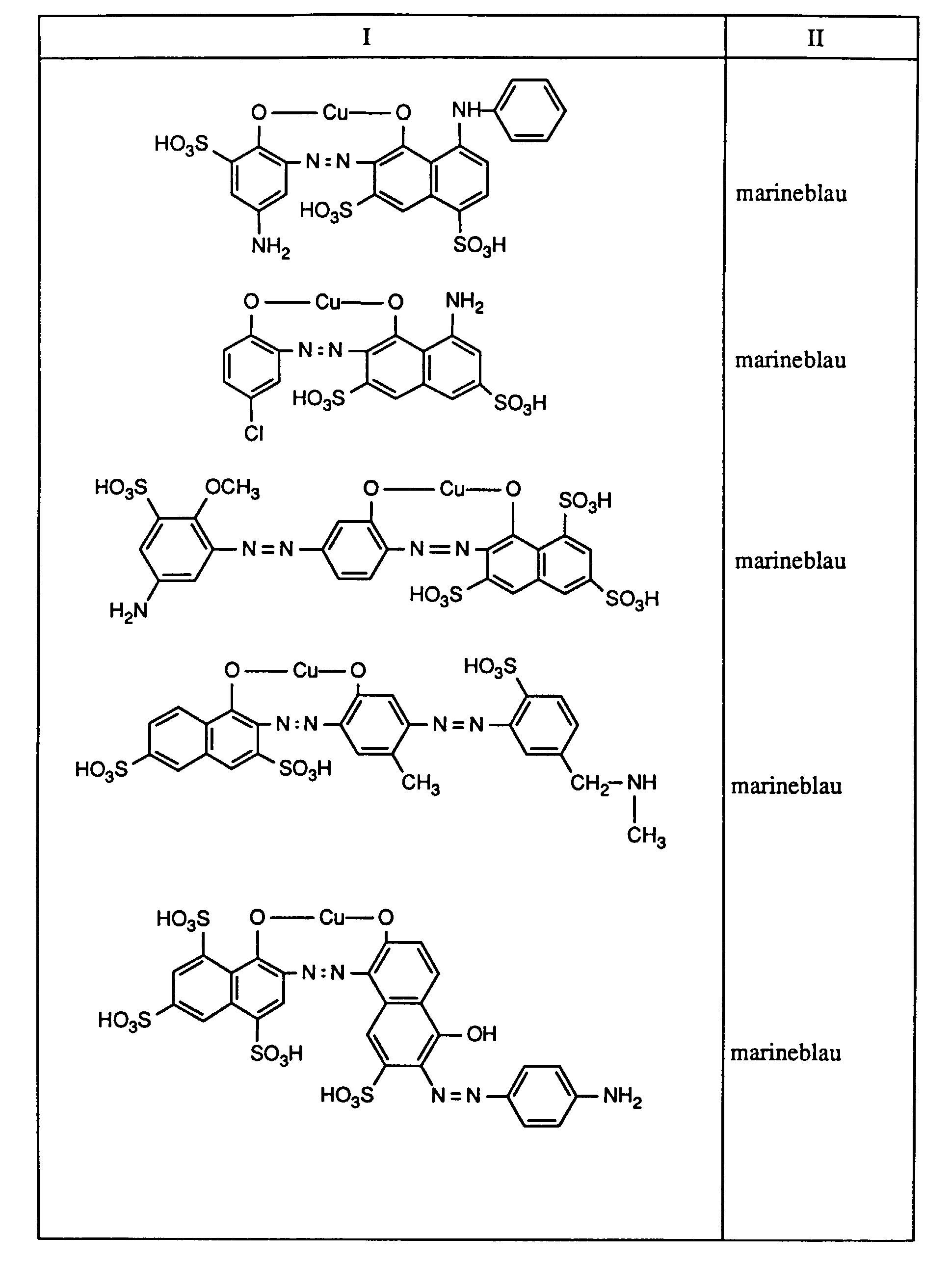

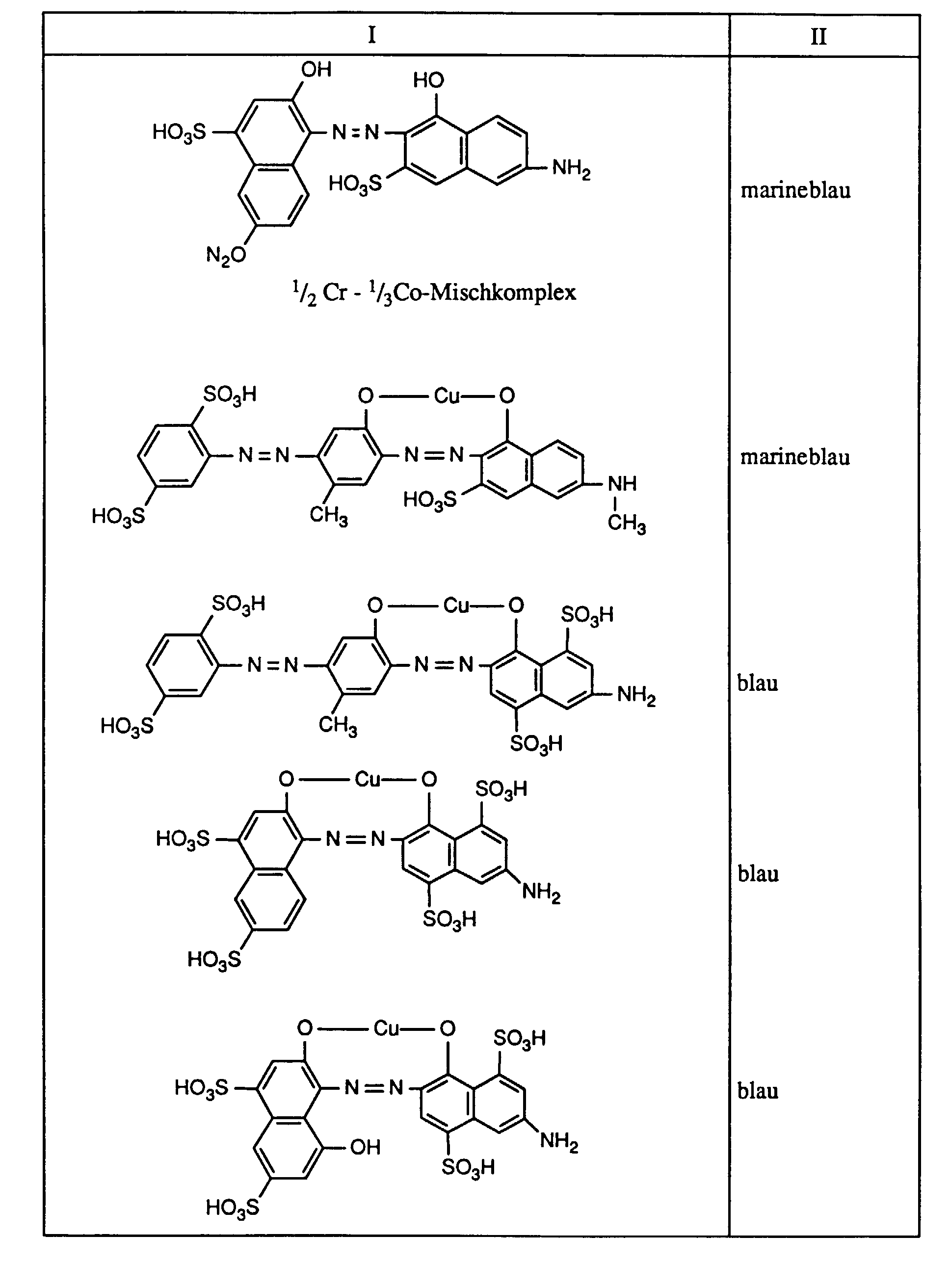

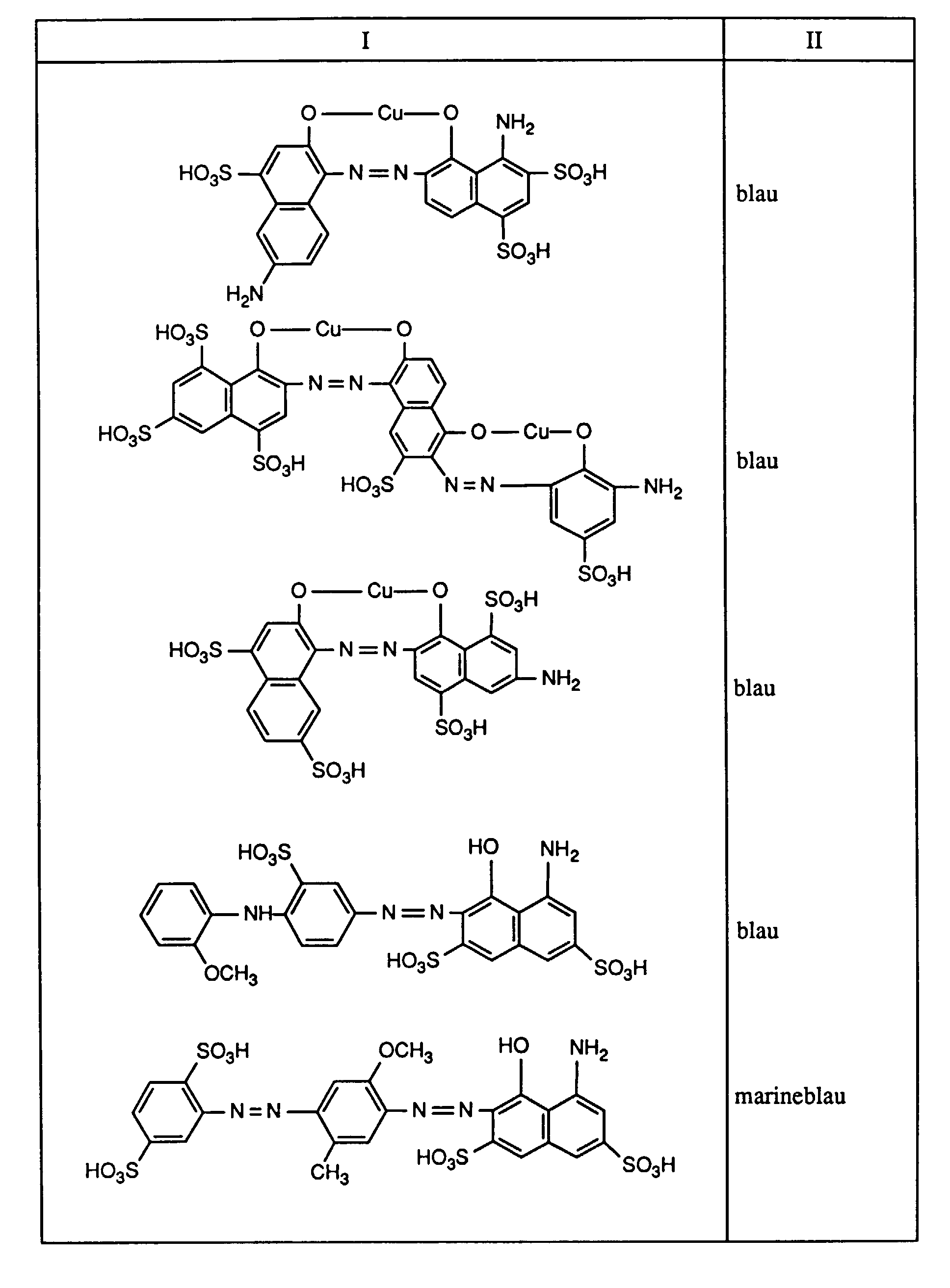

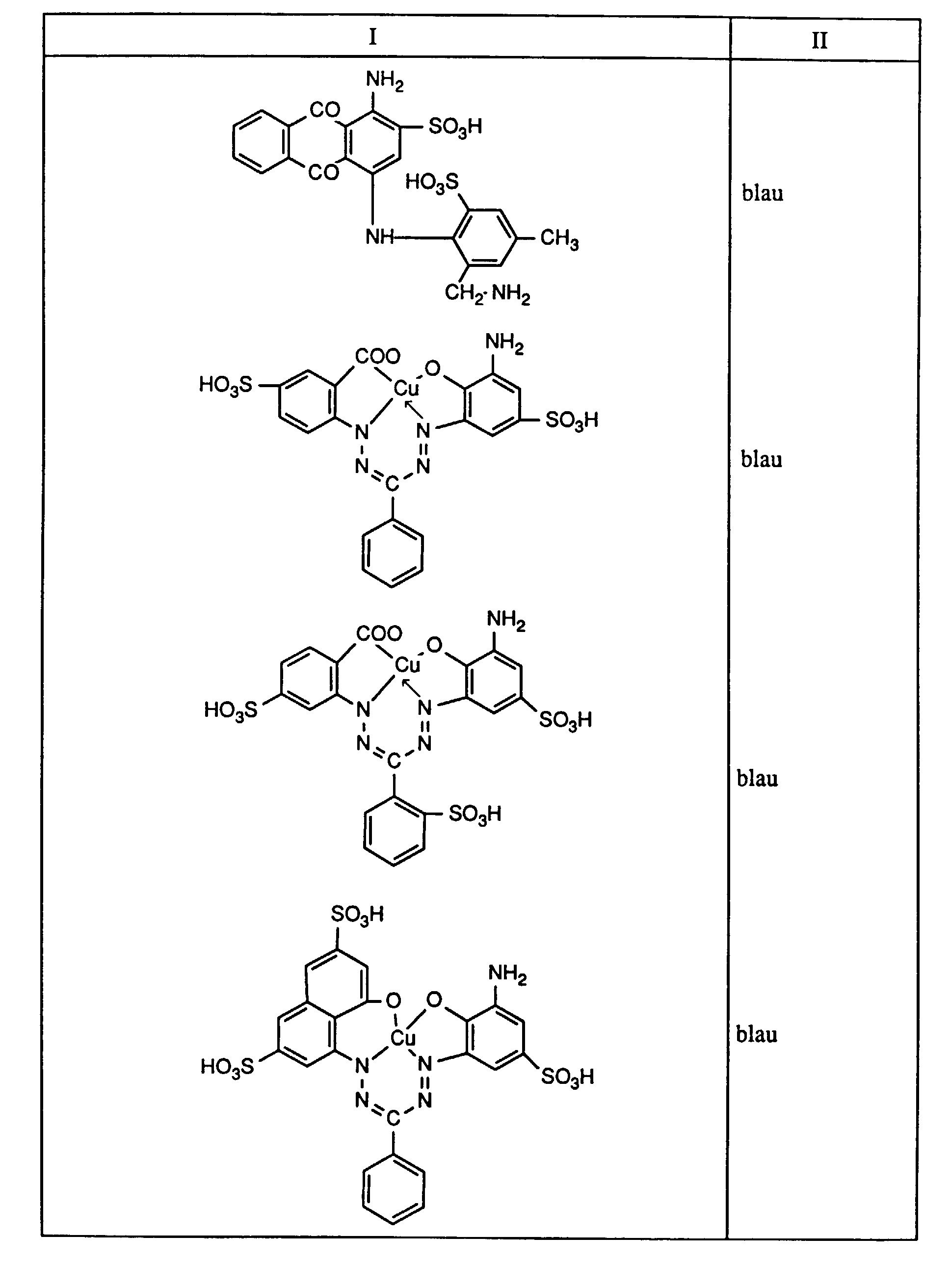

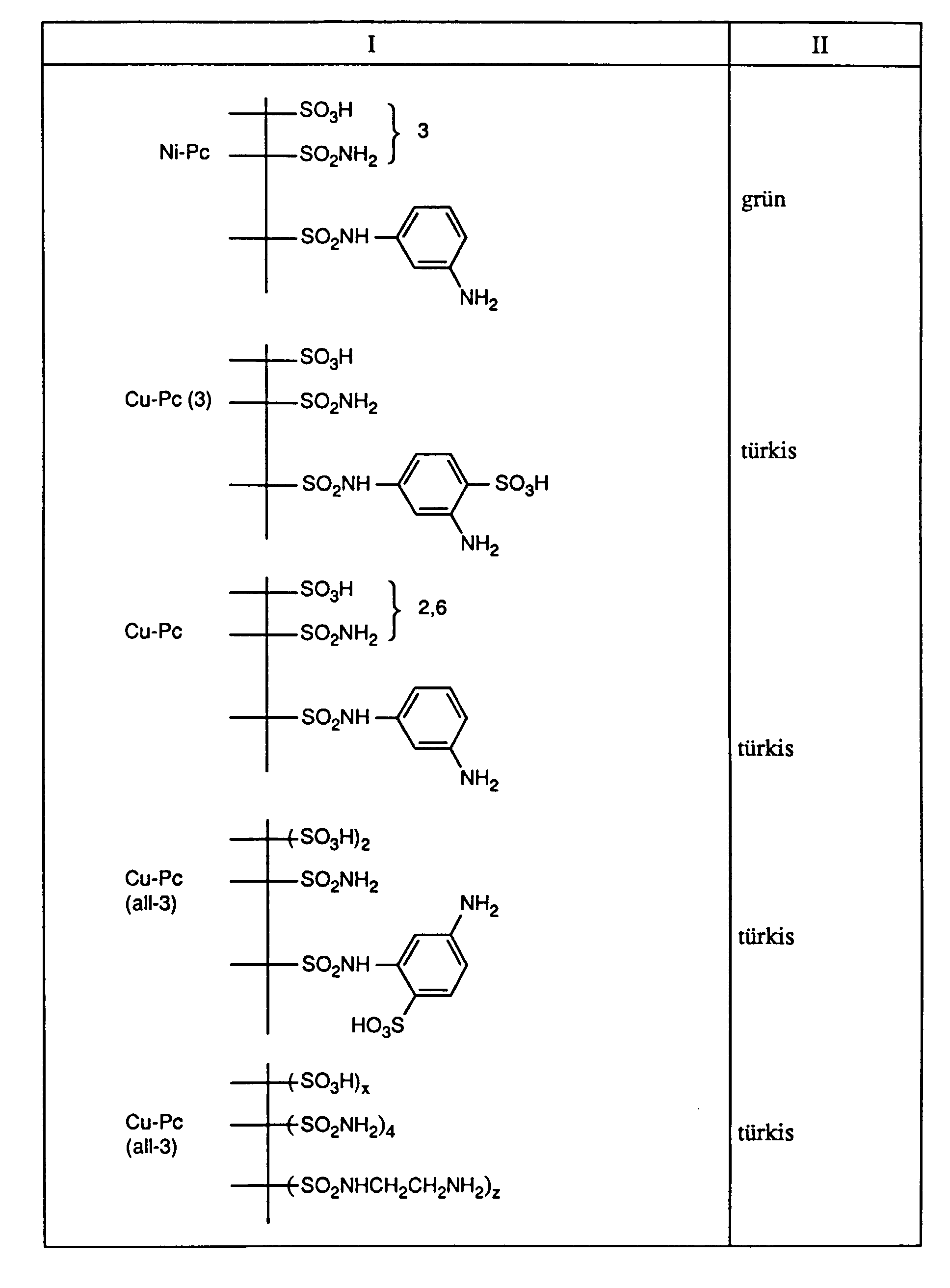

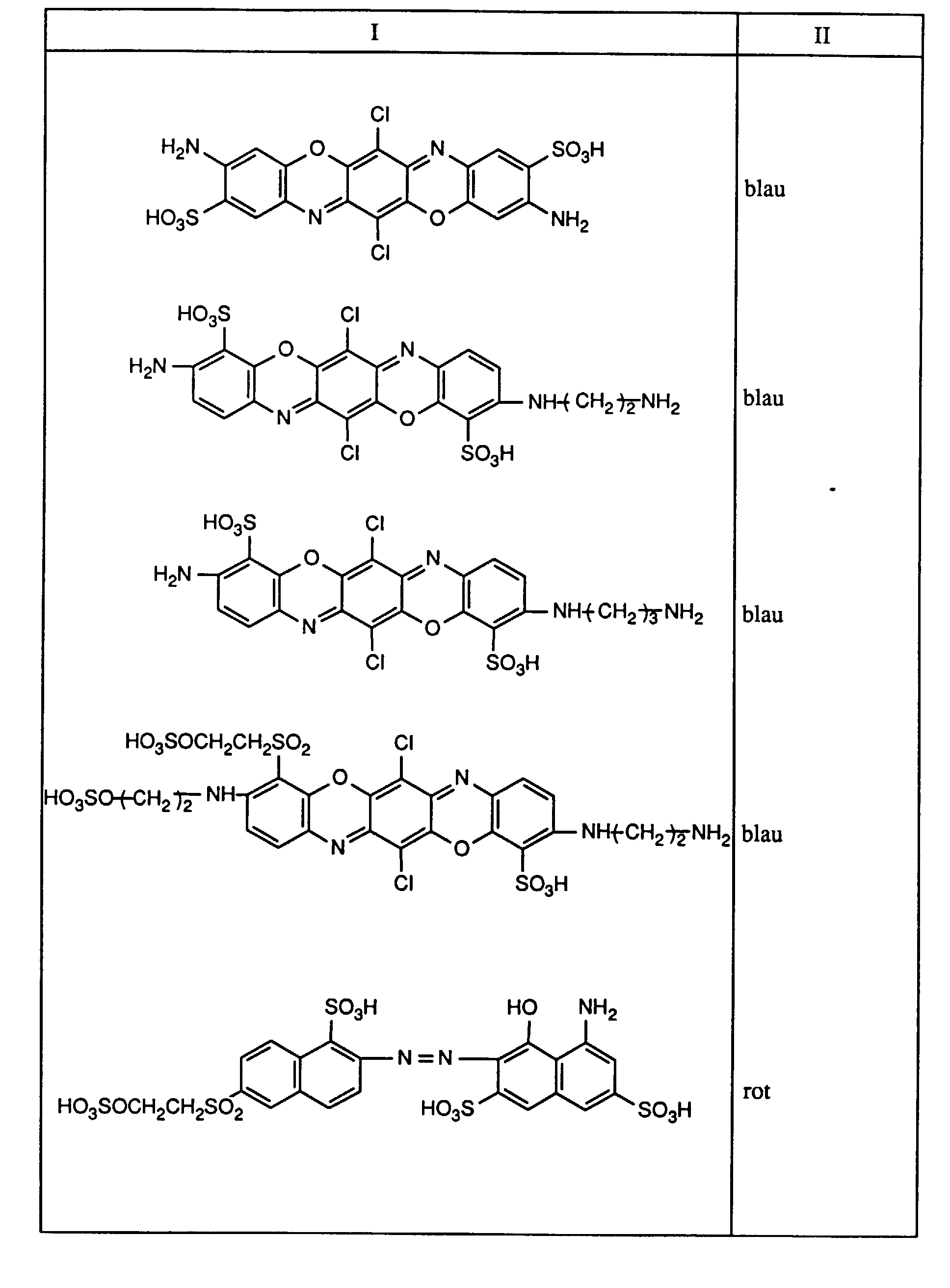

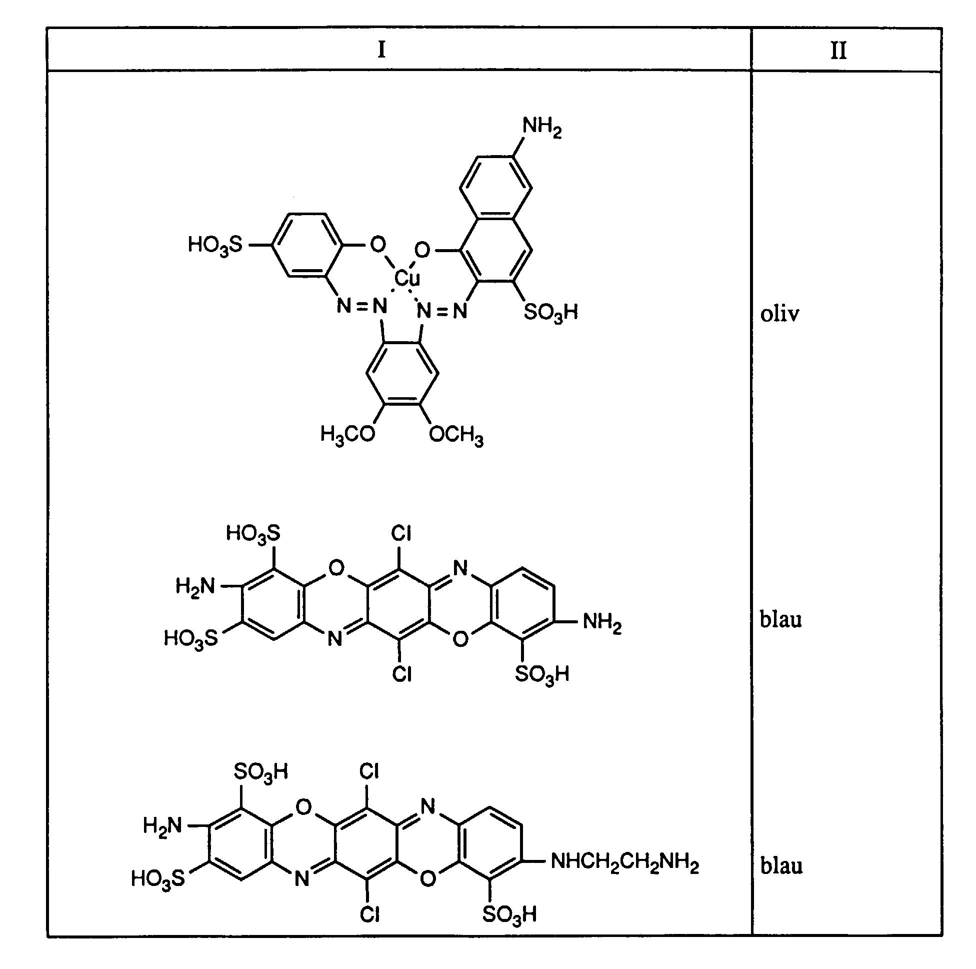

In analoger Weise können auch die Farbstoffe hergestellt werden, welche im Farbstoffrest D einen weiteren Reaktivrest enthalten, z.B. die Farbstoffe der Formeln

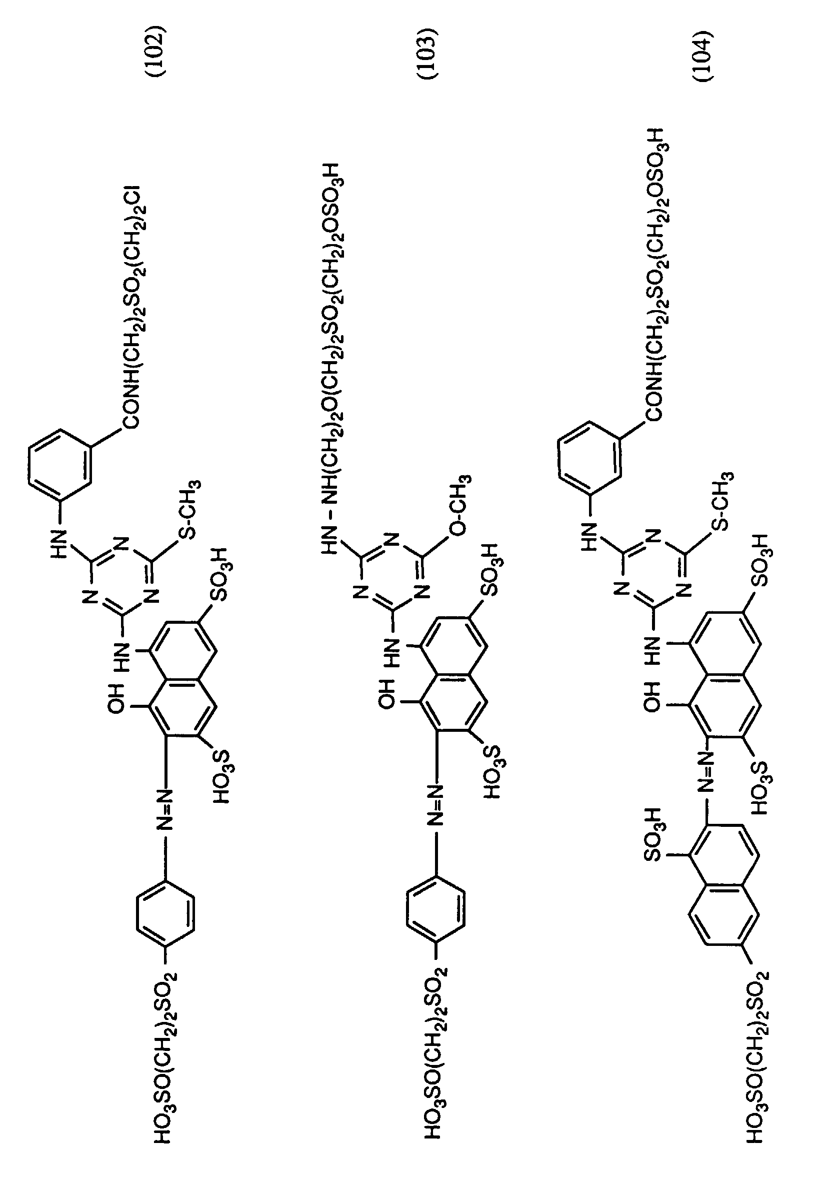

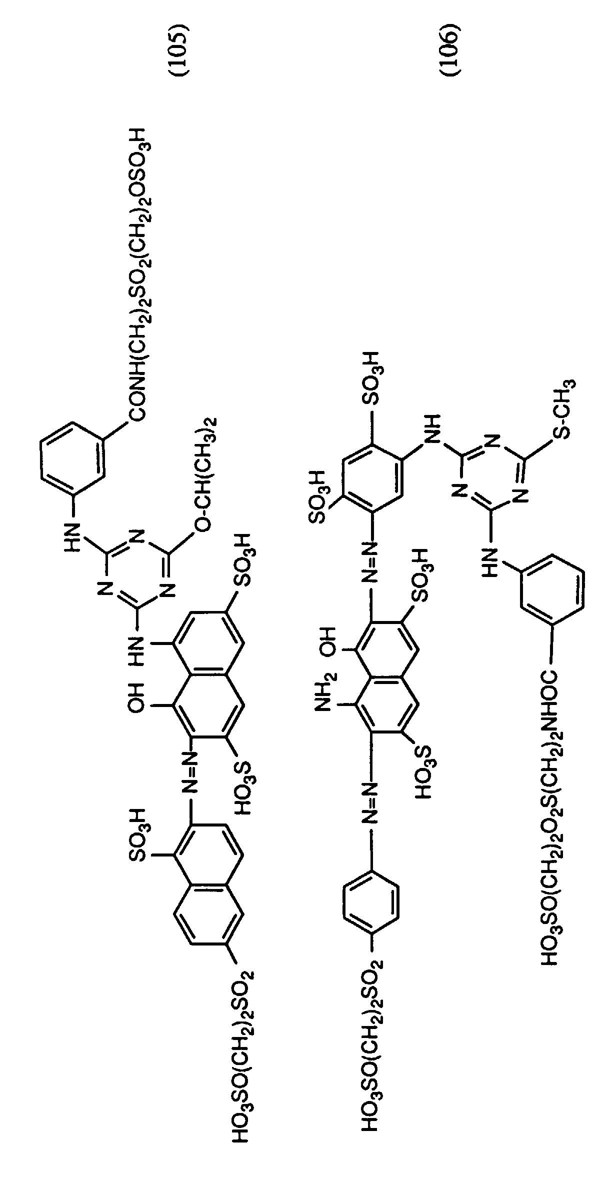

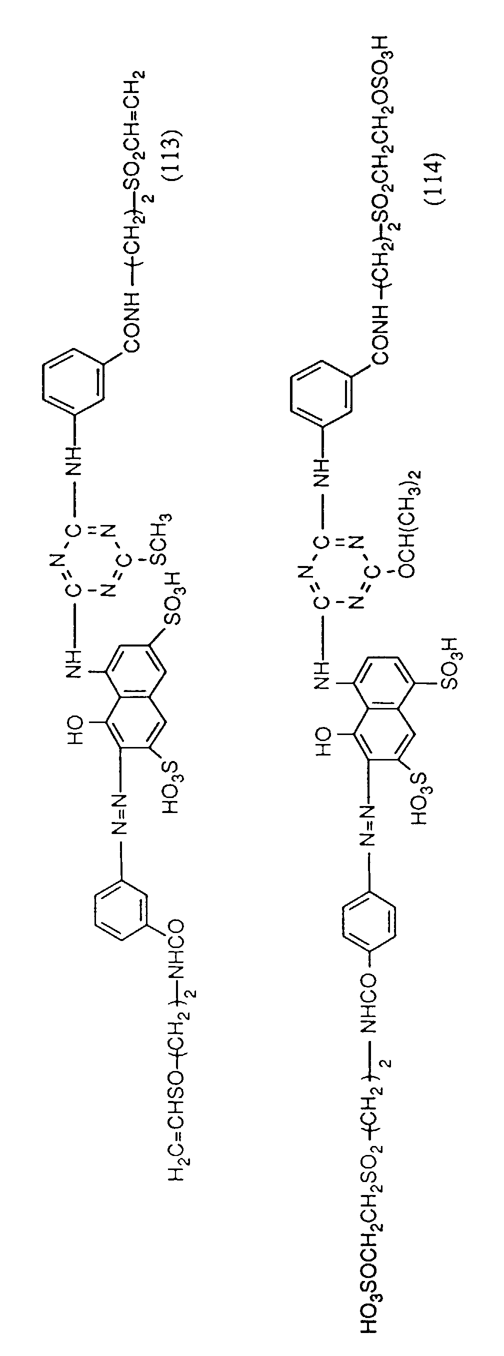

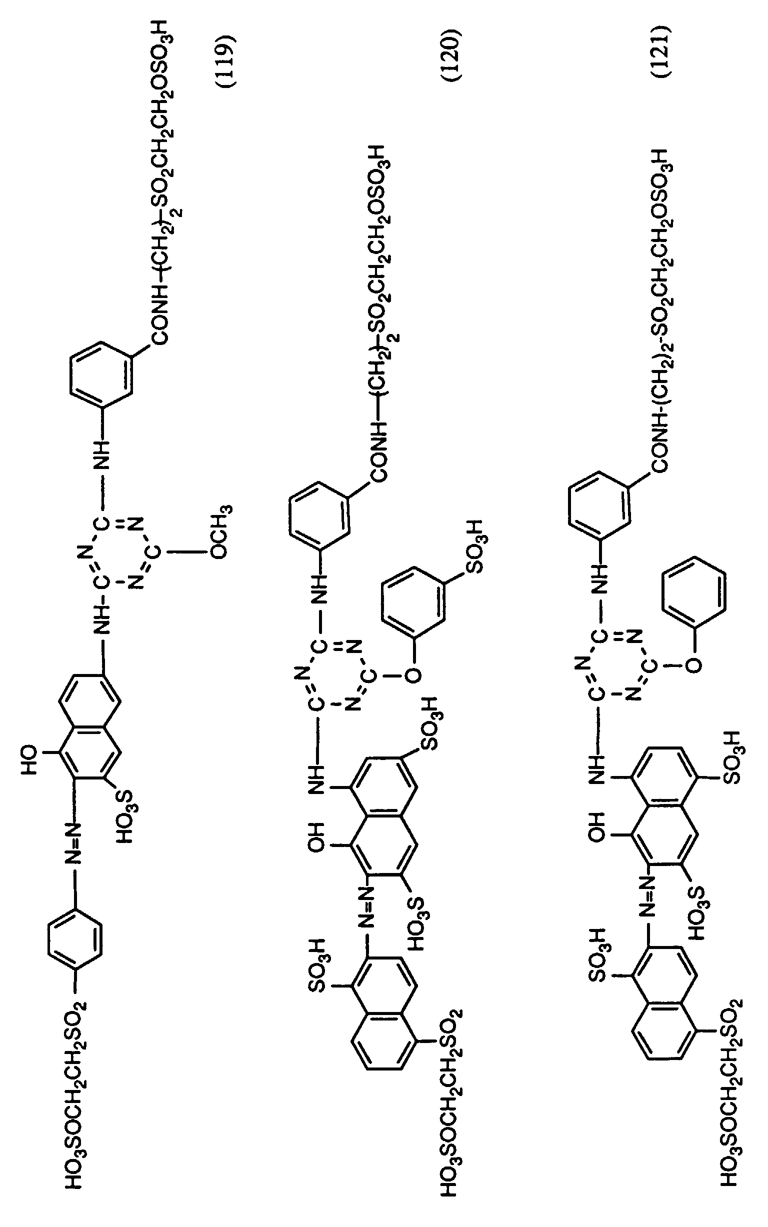

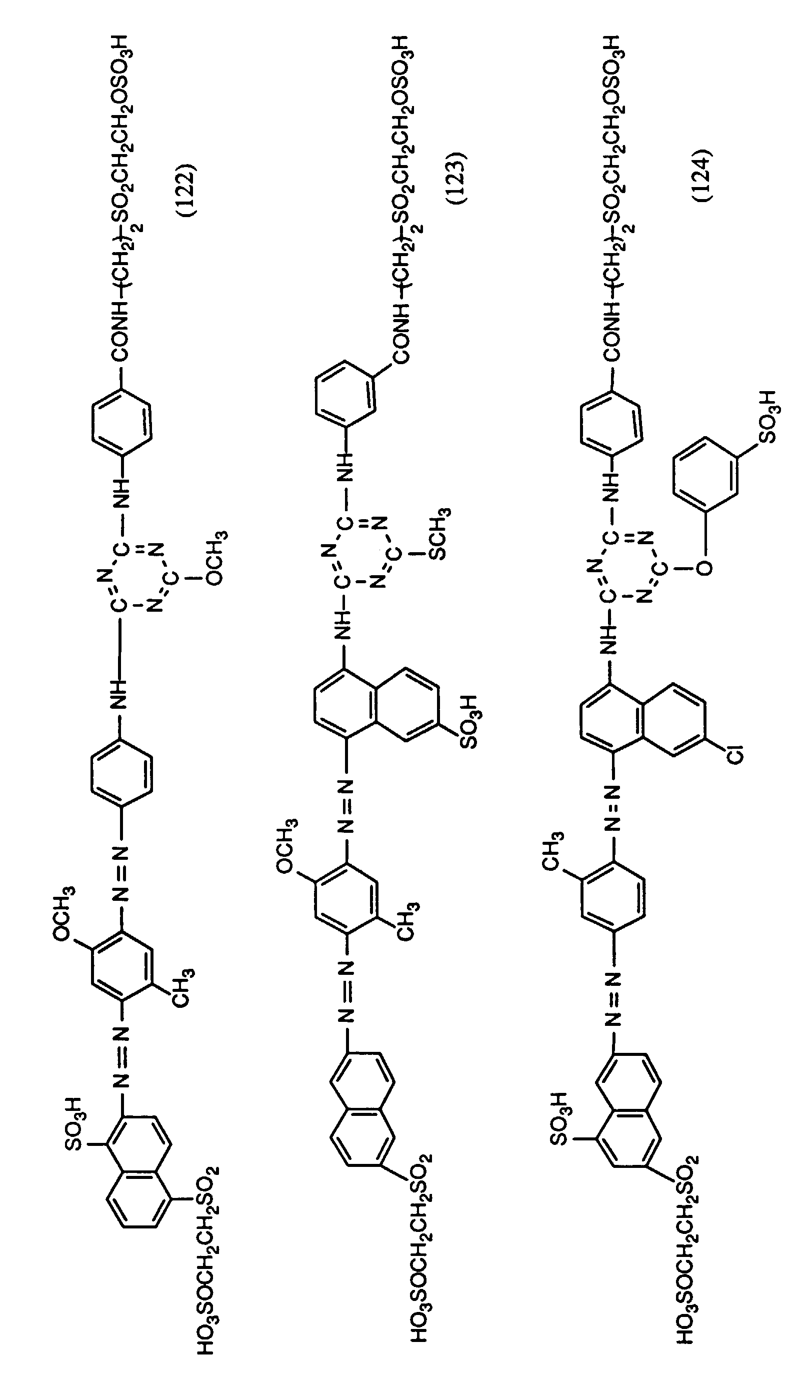

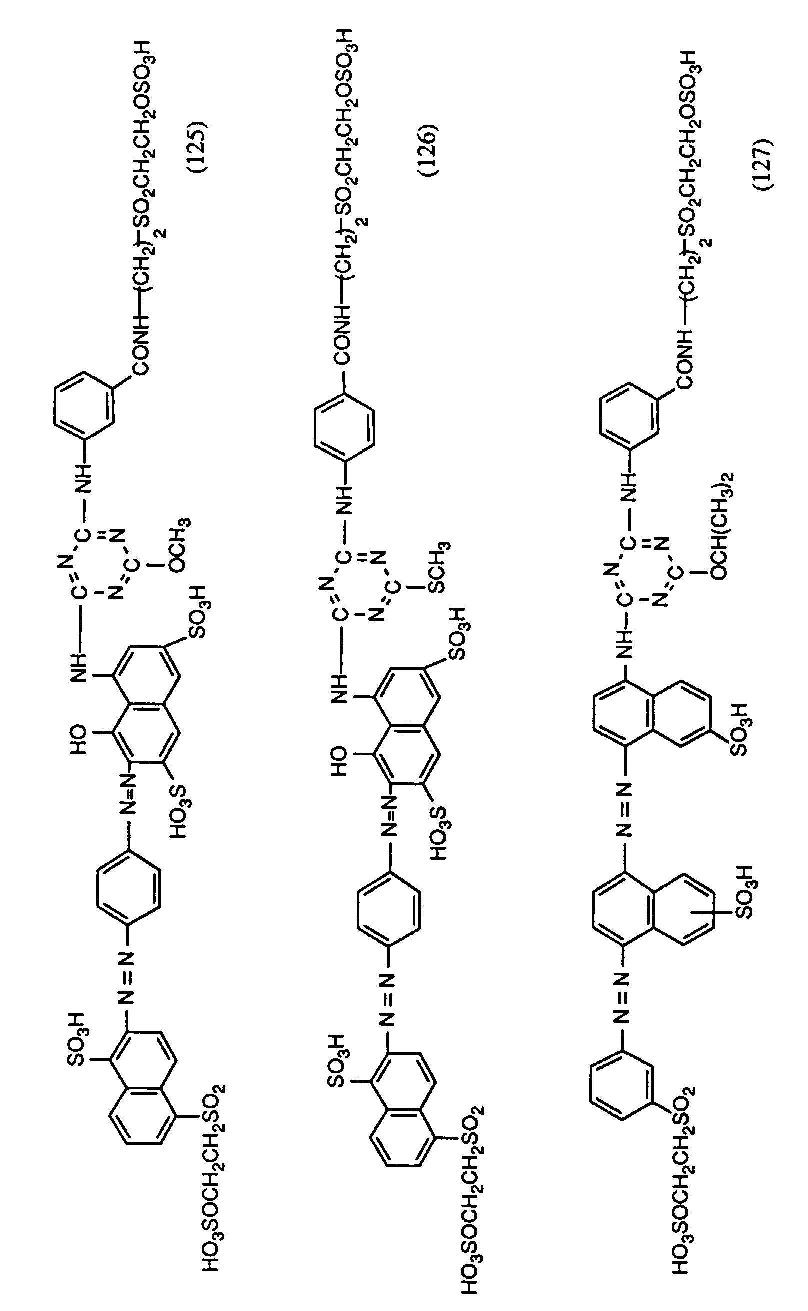

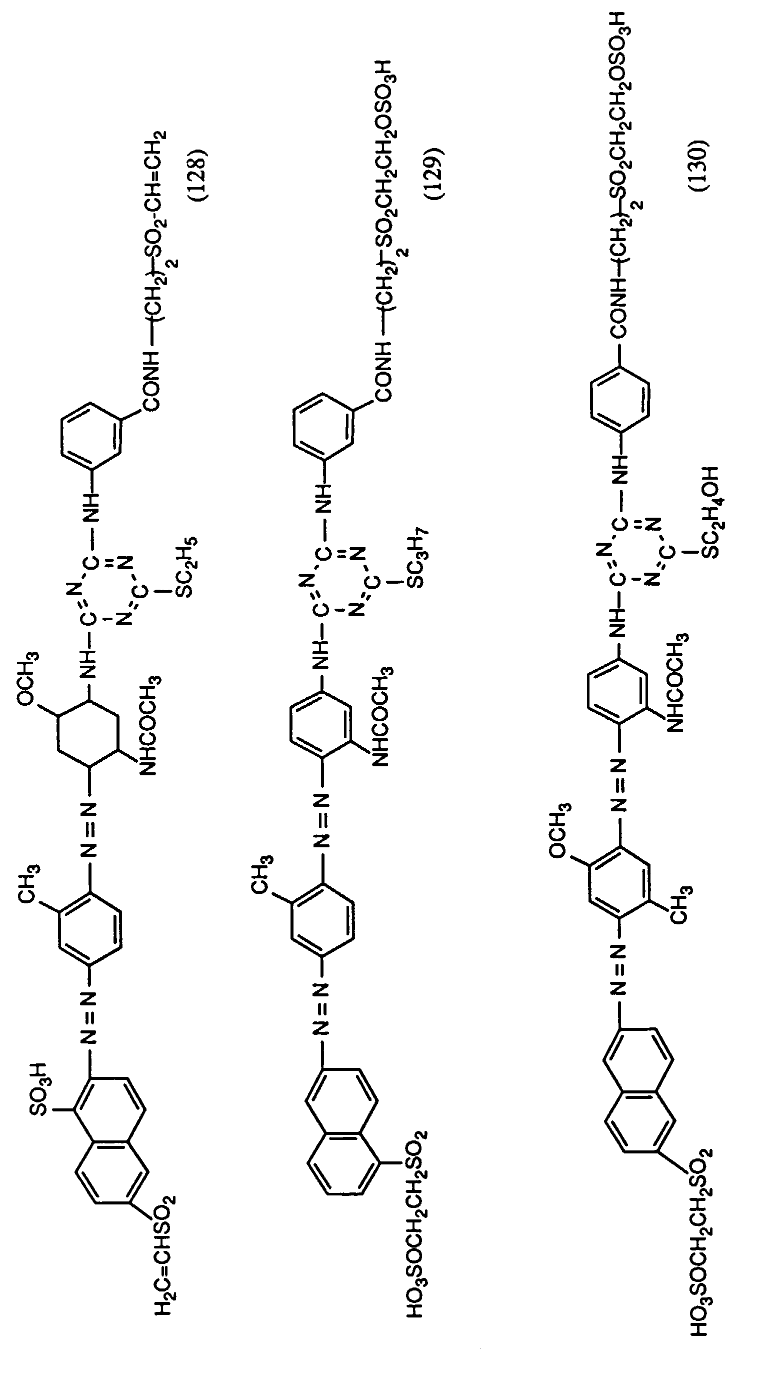

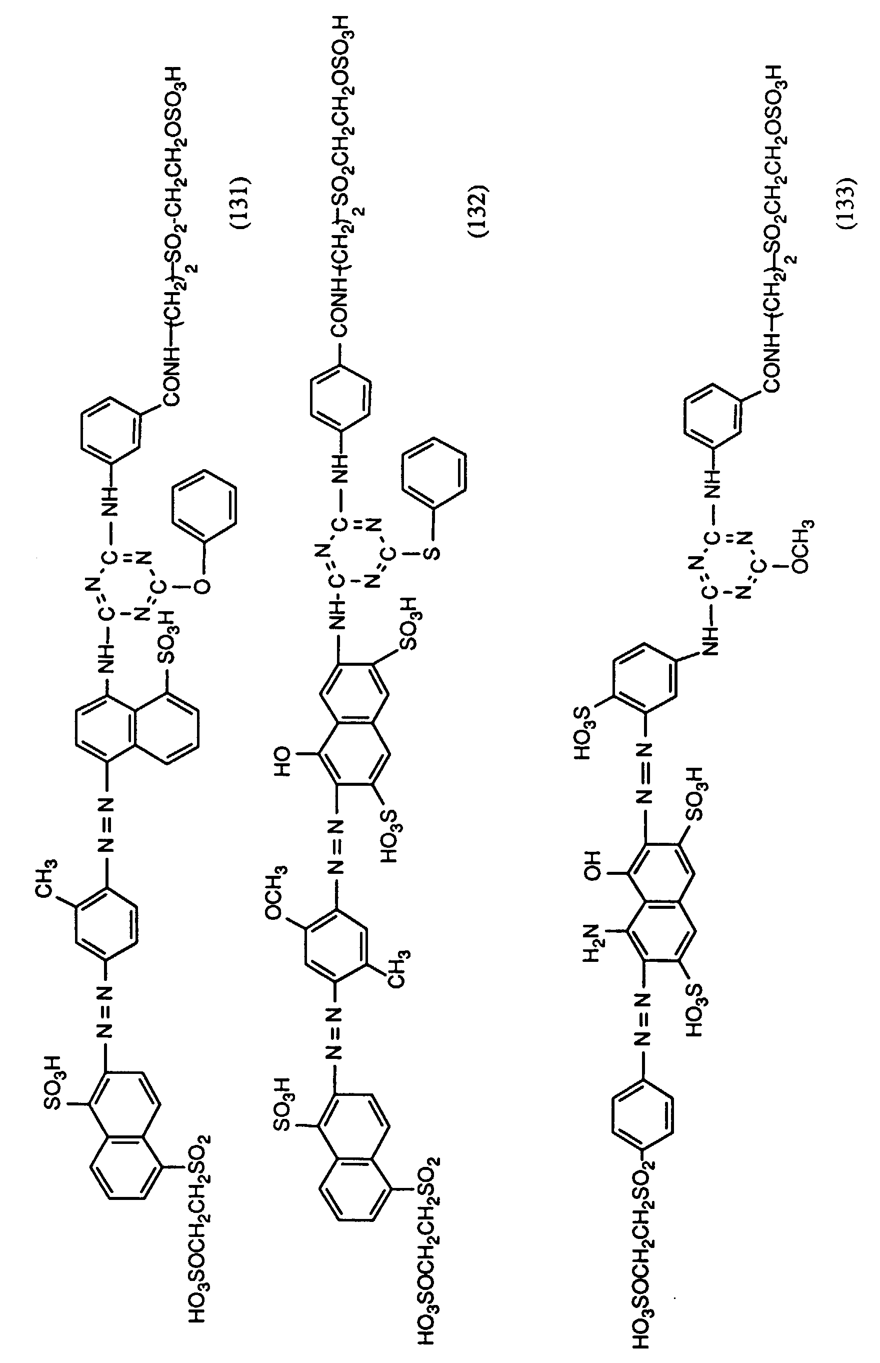

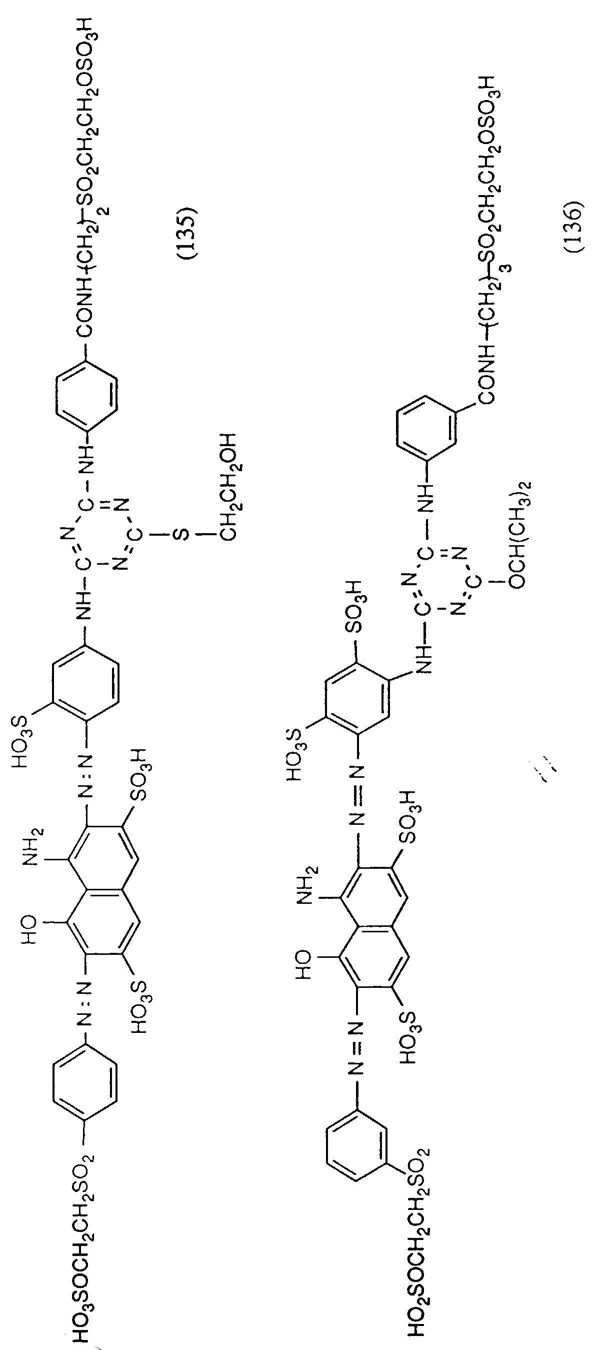

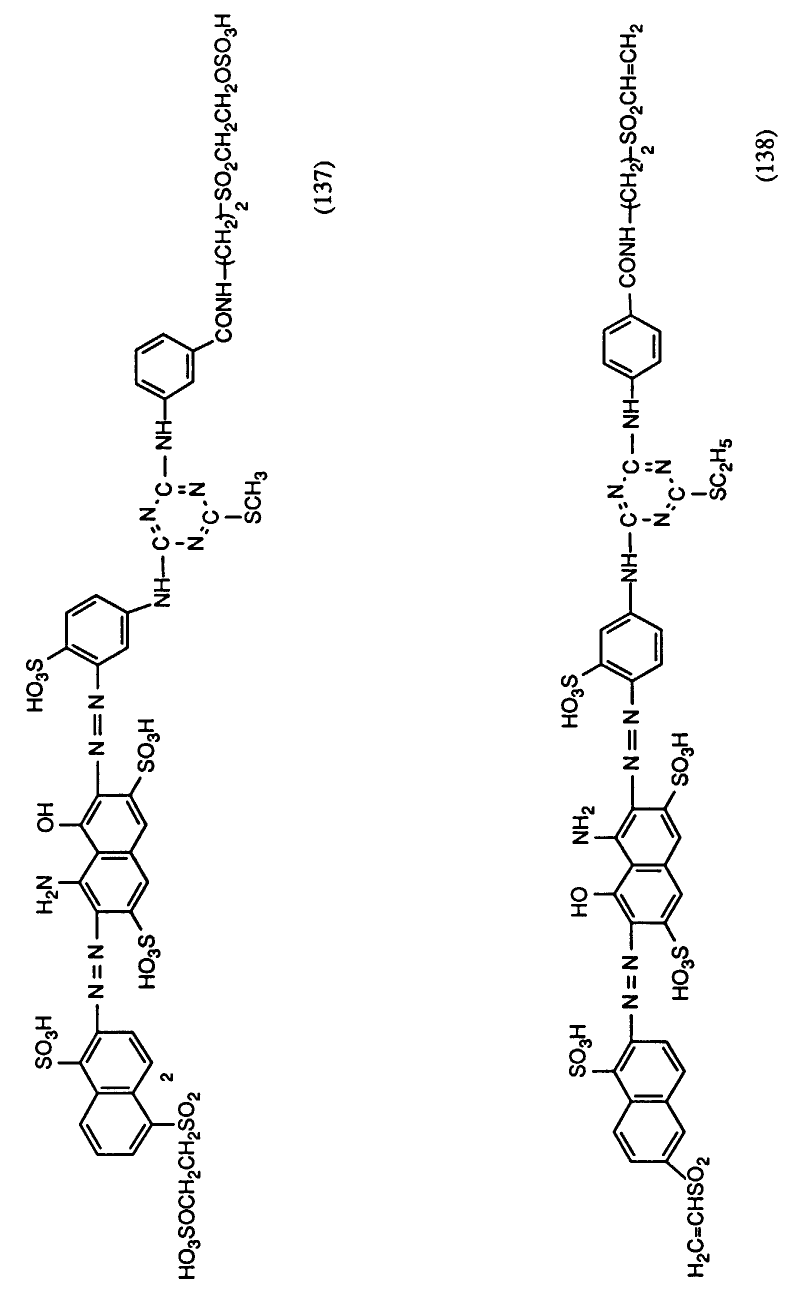

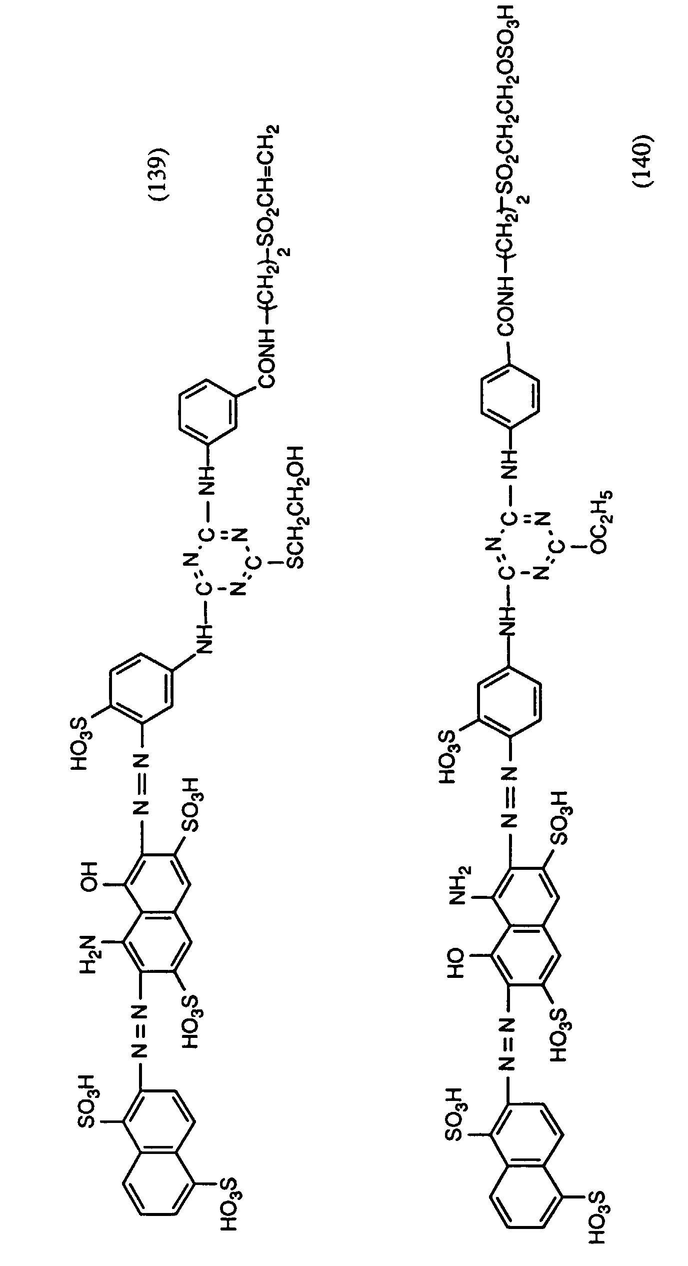

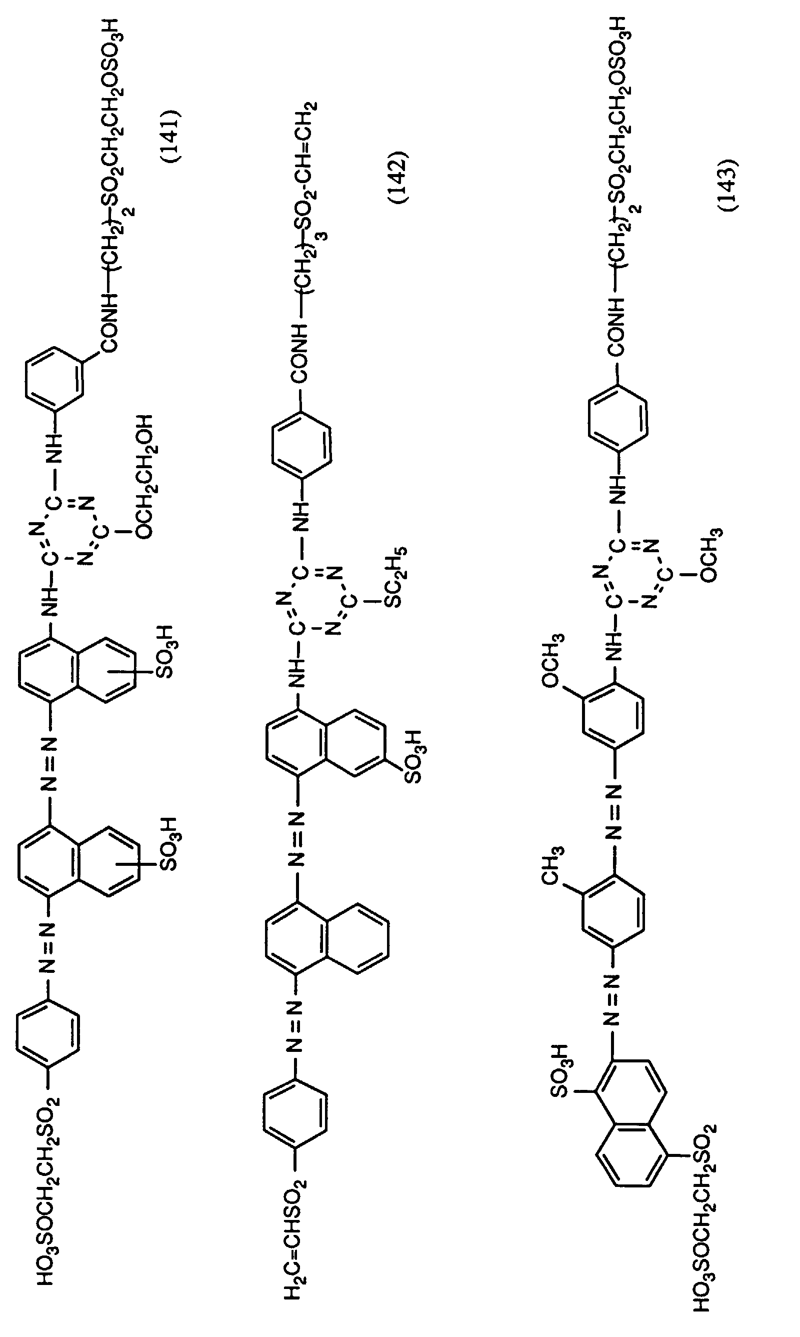

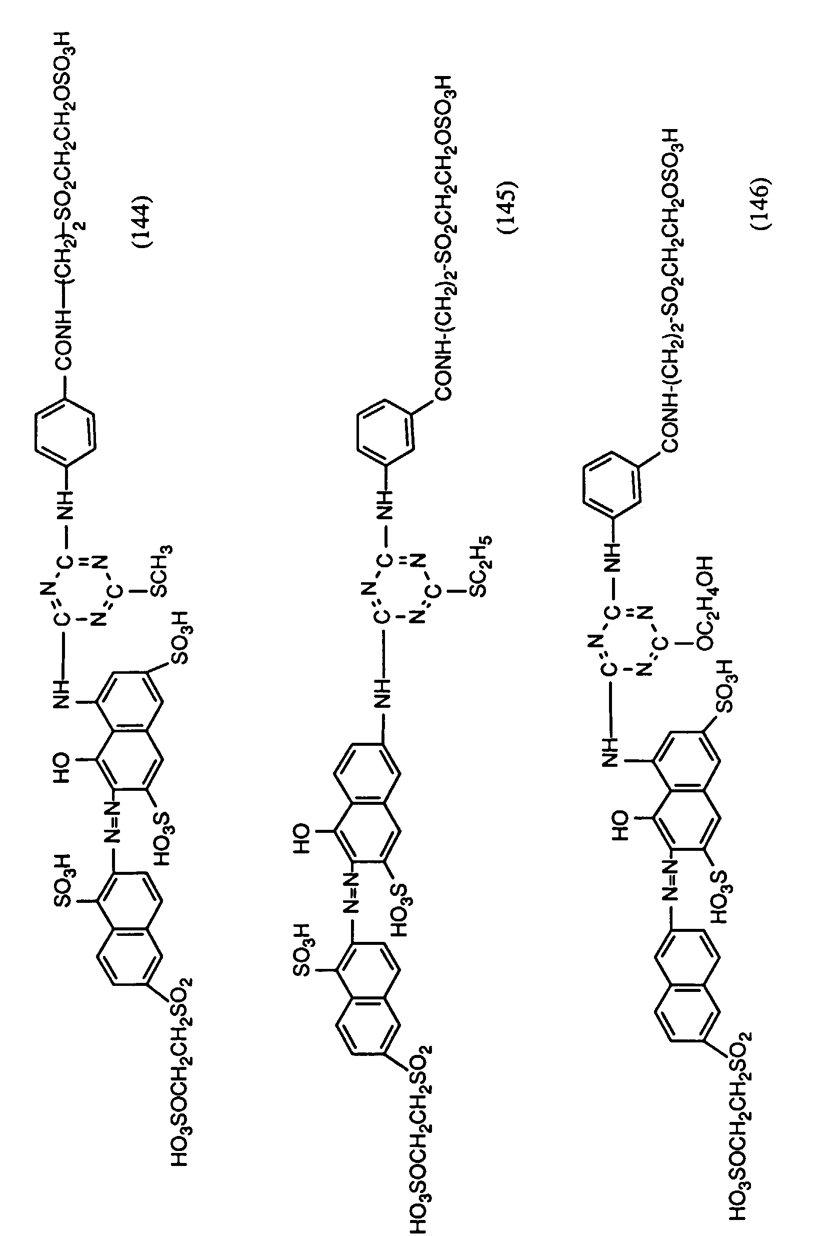

Wenn man in den obigen Beispielen die β-Sulfatoethylsulfonylgruppe durch eine Vinylsulfonylgruppe ersetzt oder umgekehrt, so erhält man gleich gute Ergebnisse.

Die Farbstoffe (102) bis (146) färben Baumwolle in den nachstehend angegebenen Tönen:

| | | | |
|---|---|---|---|
| Farbstoff Nr. | Farbton | Farbstoff Nr. | Farbton |
| (102) | rot | (125) | violett |
| (103) | rot | (126) | violett |
| (104) | rot | (127) | braun |
| (105) | blaustichig rot | (128) | braun |
| (106) | marineblau | (129) | braun |
| | | (130) | braun |
| | | (131) | orange braun |
| | | (132) | |
| | | (133) | marineblau |
| | | | |
| | | (135) | marineblau |
| (113) | gelbstichig rot | (136) | marineblau |
| (114) | gelbstichig rot | (137) | marineblau |
| | | (138) | marineblau |
| | | (139) | marineblau |
| | | (140) | marineblau |
| | | (141) | braun |
| (119) | orange | (142) | braun |
| (120) | rot | (143) | braun |
| (121) | rot | (144) | rot |
| (122) | orange braun | (145) | orange |
| (123) | braun | (146) | blaustichig rot |
| (124) | braun | | |

### Färbevorschrift 1

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g wasserfreies Na₂CO₃ enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

### Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g wasserfreies Na₂CO₃ enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

### Färbevorschrift III

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nicht-ionogenen Waschmittel kochend geseift, nochmals gespült und getrocknet.

### Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g wasserfreies Na₂CO₃ enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

### Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38%ig) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

### Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20°C warmen lösung, die pro Liter 4 g Natriumhydroxyd und 300 g Natriumchlorid enthält, quetscht auf 75 % Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

### Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

### Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Reaktivfarbstoffe der Formel 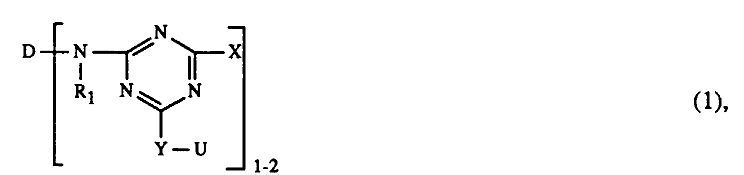 worin D der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes; R₁ Wasserstoff oder C₁-C₄-Alkyl, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann; Y ein Sauerstoff- oder Schwefelatom; U ein gegebenenfalls substituierter aliphatischer, aromatischer oder heterocyclischer Rest; und X ein Rest der Formel 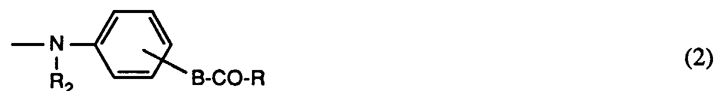 ist, worin R₂ Wasserstoff oder C₁-C₄-Alkyl, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann; B die direkte Bindung oder ein Rest 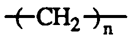 oder 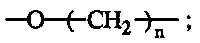 n = 1, 2, 3, 4, 5 oder 6; und R ein Rest der Formel 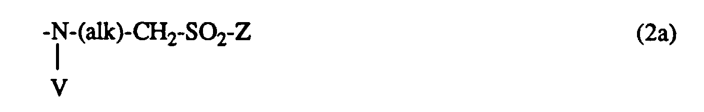 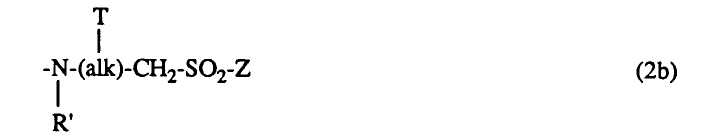 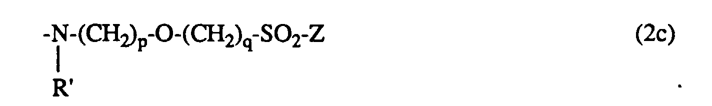 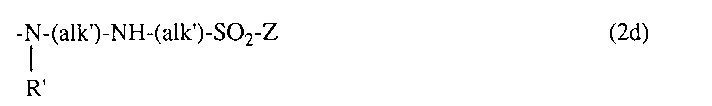 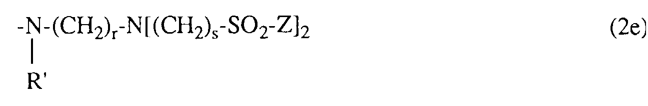 oder 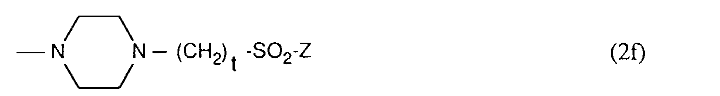 ist, worin R' Wasserstoff oder C₁-C₆-Alkyl ist, alk einen Alkylenrest mit 1 bis 7 Kohlenstoffatomen darstellt, T Wasserstoff, Halogen, Hydroxy, Sulfato, Carboxy, Cyano, C₁-C₄-Alkanoyloxy, C₁-C₄-Alkoxycarbonyl, Carbamoyl oder einen Rest -SO₂-Z bedeutet, V Wasserstoff, gegebenenfalls substituiertes C₁-C₄-Alkyl oder ein Rest der Formel 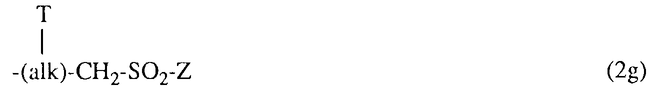 ist, worin (alk) die zuvor angegebene Bedeutung hat, alk' unabhängig voneinander Polymethylenreste mit 2 bis 6 C-Atomen bedeutet, Z β-Sulfatoethyl, β-Thiosulfatoethyl, β-Phosphatoethyl, β-Acyloxyethyl, β-Halogenethyl oder Vinyl ist, p, q, r und t unabhängig voneinander je die Zahl 1, 2, 3, 4, 5 oder 6 bedeuten und s die Zahl 2, 3, 4, 5 oder 6 ist; und der Benzolring in Formel (2) weitere Substituenten enthalten kann; oder worin X ein direkt an den Triazinring gebundener Rest der Formel (2a), (2b), (2c), (2d), (2e) oder (2f) ist, worin R', T, alk, V, alk′, Z, p, q, r, s und t die angegebenen Bedeutungen haben.

2. Reaktivfarbstoffe gemäss Anspruch 1 der Formel 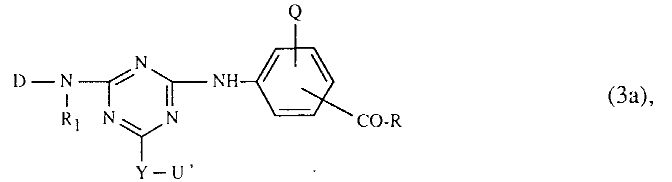 worin D einer der in Anspruch 1 angegebenen Farbstoffreste ist, der einen weiteren Reaktivrest enthalten kann, R₁ Wasserstoff, Methyl oder Ethyl ist, Y und R die in Anspruch 1 angegebenen Bedeutungen haben, U' C₁-C₈-Alkyl ist, das durch Hydroxy, C₁-C₄-Alkoxy, C₁-C₂-Alkoxy-C₁-C₂-alkoxy, Hydroxy-C₁-C₂-alkoxy, Sulfato, C₁-C₄-Alkoxycarbonyl oder Carboxy substituiert sein kann, und Q Wasserstoff, C₁-C₄-Alkyl, C₁-C₄-Alkoxy, Halogen, Carboxy oder Sulfo ist.

3. Reaktivfarbstoffe gemäss Anspruch 2 der Formel 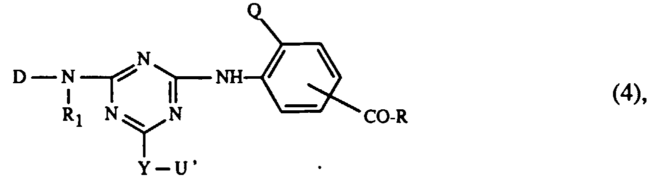 worin D, R₁, Y, U', Q und R die in Anspruch 2 angegebene Bedeutung hat.

4. Reaktivfarbstoffe gemäss Anspruch 1 der Formel 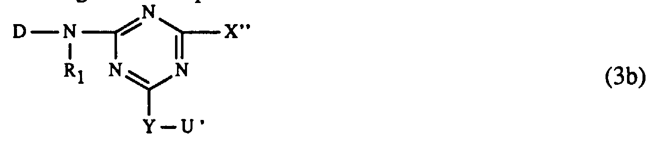 worin D einer der in Anspruch 1 angegebenen Farbstoffreste ist, der einen weiteren Reaktivrest enthalten kann, R₁ Wasserstoff, Methyl oder Ethyl ist, Y die in Anspruch 1 angegebenen Bedeutungen hat, U' C₁-C₈-Alkyl ist, das durch Hydroxy, C₁-C₄-Alkoxy, C₁-C₂-Alkoxy-C₁-C₂-alkoxy, Hydroxy-C₁-C₂-alkoxy, Sulfato, C₁-C₄-Alkoxycarbonyl oder Carboxy substituiert sein kann, und X˝ ein Rest der Formel (2a), (2b), (2c), (2d), (2e) oder (2f) ist.

5. Reaktivfarbstoffe gemäss einem der Ansprüche 2 oder 3, worin D und R₁ die in Anspruch 2 angegebenen Bedeutungen haben, Q Wasserstoff oder Sulfo ist, R ein Rest der Formel (2a), (2b), (2c), (2d), (2e) oder (2f) ist, worin Z β-Sulfatoethyl, β-Chlorethyl oder Vinyl ist, und Y und U' die in Anspruch 2 angegebenen Bedeutungen haben.

6. Reaktivfarbstoffe gemäss einem der Ansprüche 2, 3 oder 5, worin D einen zusätzlichen Reaktivrest enthält.

7. Reaktivfarbstoffe gemäss einem der Ansprüche 1 bis 6, worin R in Formel (3a) oder (4) bzw. X" in Formel (3b) ein Rest der Formel
-NH-(CH₂)₂-SO₂-Z' (5a),
-NH-(CH₂)₃-SO₂-Z' (5b),
-NH-(CH₂)₂-O-(CH₂)₂-SO₂-Z' (5c),
-N[-(CH₂)₂-SO₂-Z']₂ (5d),
-N(CH₃)-(CH₂)₂-SO₂-Z' (5e),
-N(C₂H₅)-(CH₂)₂-SO₂-Z' (5f),
-NH-CH₂-CH(SO₂-Z')-CH₂-CH₂-SO₂-Z' (5g)
oder 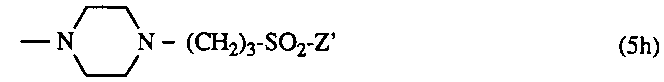 ist, worin Z' β-Sulfatoethyl, β-Chlorethyl oder Vinyl ist.

8. Reaktivfarbstoffe gemäss einem der Ansprüche 1 bis 7, worin D der Rest eines Monoazo-, Disazo-, Metallkomplexazo-, Formazan-, Anthrachinon-, Phthalocyanin- oder Dioxazinfarbstoffes ist.

9. Reaktivfarbstoffe gemäss Anspruch 8, worin D ein Mono- oder Disazofarbstoffrest der Formel
D₁-N=N-(M-N=N)ᵤ-K- (6a),
-D₁-N=N-(M-N=N)ᵤ-K (6b)
oder ${\text{-D}}_{\text{1}} {\text{-N=N-(M-N=N)}}_{\text{u}} \text{-K-}$oder eines davon abgeleiteten Metallkomplexes ist; D₁ der Rest einer Diazokomponente der Benzol- oder Naphthalinreihe, M der Rest einer Mittelkomponente der Benzol- oder Naphthalinreihe, und K der Rest einer Kupplungskomponente der Benzol-, Naphthalin-, Pyrazolon-, 6-Hydroxypyridon-(2)- oder Acetessigsäurearylamidreihe ist, wobei D₁, M und K bei Azofarbstoffen übliche Substituenten, insbesondere Hydroxy-, Amino-, Methyl-, Ethyl-, Methoxy- oder Ethoxygruppen, gegebenenfalls substituierte Alkanoylaminogruppen mit 2 bis 4 C-Atomen, gegebenenfalls substituierte Benzoylaminogruppen, Halogenatome oder einen faserreaktiven Rest, insbesondere einen Rest -SO₂-Z, wobei Z die in Anspruch 1 angegebene Bedeutung hat, tragen können; u ist die Zahl 0 oder 1; und D₁, M und K zusammen mindestend zwei Sulfogruppen, vorzugsweise drei oder vier Sulfogruppen, enthalten.

10. Reaktivfarbstoffe gemäss Anspruch 8, worin D ein Disazofarbstoffrest der Formel
-D₁-N=N-K-N=N-D₂ (7a),
oder
-D₁-N=N-K-N=N-D₂- (7b)
ist, worin D₁ und D₂ unabhängig voneinander der Rest einer Diazokomponente der Benzol- oder Naphthalinreihe, und K der Rest einer Kupplungskomponente der Naphthalinreihe ist; wobei D₁, D₂ und K bei Azofarbstoffen übliche Substituenten, insbesondere Hydroxy-, Amino-, Methyl-, Ethyl-, Methoxy- oder Ethoxygruppen, gegebenenfalls substituierte Alkanoylaminogruppen mit 2 bis 4 C-Atomen, gegebenenfalls substituierte Benzoylaminogruppen, Halogenatome oder einen faserreaktiven Rest, insbesondere einen Rest -SO₂-Z, wobei Z die in Anspruch 1 angegebene Bedeutung hat, tragen können; und D₁, D₂ und K zusammen mindestens zwei Sulfogruppen, vorzugsweise drei oder vier Sulfogruppen, enthalten.

11. Verfahren zw Herstellung von Reaktivfarbstoffen der Formel (1), dadurch gekennzeichnet, dass man in einen organischen Farbstoff mit dem Rest D oder in ein Farbstoffvorprodukt einen oder zwei Reste der Formel 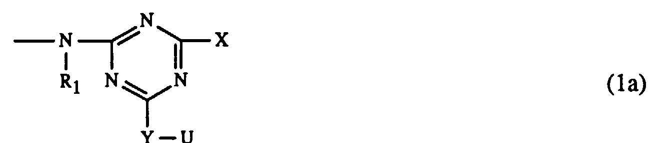 einführt, wobei R₁, Y, U und X die in Anspruch 1 angegebenen Bedeutungen haben, oder dass man, im Fall der Verwendung von Farbstoffvorprodukten, die erhaltenen Zwischenprodukte in die gewünschten Endfarbstoffe überführt, und gegebenenfalls eine weitere Umwandlungsreaktion anschliesst.

12. Verwendung der Reaktivfarbstoffe gemäss Anspruch 1, zum Färben oder Bedrucken von cellulosehaltigen Fasermaterialien.

13. Verwendung gemäss Anspruch 12, zum Färben oder Bedrucken von Baumwolle.

## Claims

1. A reactive dye of the formula 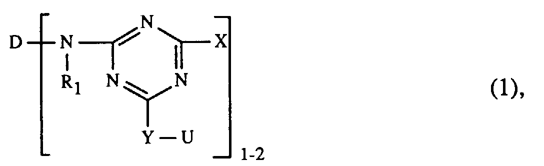 in which D is the radical of a monoazo, polyazo, metal complex azo, anthraquinone, phthalocyanine, formazan, azomethine, dioxazine, phenazine, stilbene, triphenylmethan xanthene, thioxanthone, nitroaryl, naphthoquinone, pyrenequinone or perylenetetracarbimide dye; R₁ is hydrogen or C₁-C₄alkyl, which may be substituted by halogen, hydroxyl, cyano, C₁-C₄alkoxy, C₁-C₄alkoxycarbonyl, carboxyl, sulfamoyl, sul or sulfato; Y is an oxygen or sulfur atom; U is a substituted or unsubstituted aliphatic, aromatic or heterocyclic radical; and X is a radical of the formula 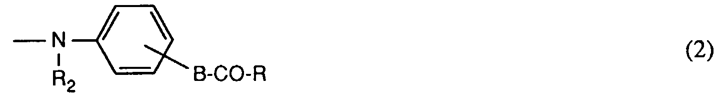 in which R₂ is hydrogen or C₁-C₄alkyl, which may be substituted by halogen, hydroxyl, cyano, C₁-C₄alkoxy, C₁-C₄alkoxycarbonyl, carboxyl, sulfamoyl, sulfo or sulfato; B is a direct bond or a radical 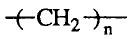 or 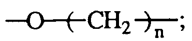 n is 1, 2, 3, 4, 5 or 6; and R is a radical of the formula 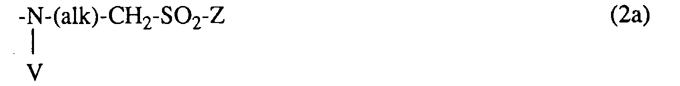 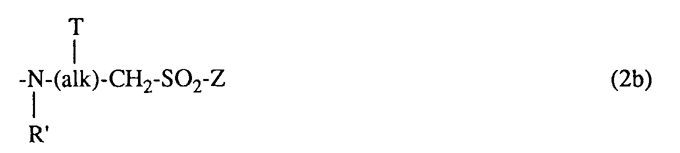 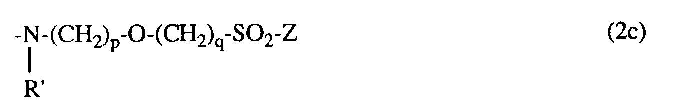 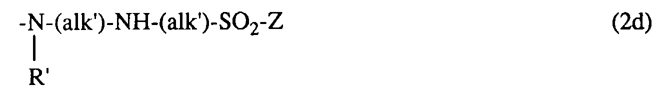 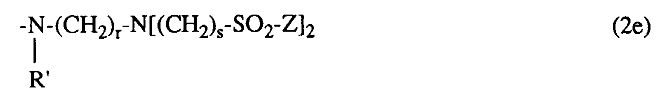 or 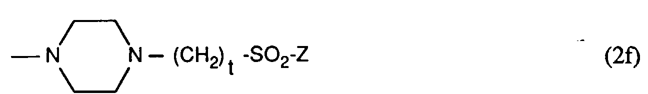 in which R' is hydrogen or C₁-C₆alkyl, alk is an alkylene radical having 1 to 7 carbon atoms, T is hydrogen, halogen, hydroxyl, sulfato, carboxyl, cyano, C₁-C₄alkanoyloxy, C₁-C₄alkoxycarbonyl, carbamoyl or a radical -SO₂-Z, V is hydrogen, substituted or unsubstituted C₁-C₄alkyl or a radical of the formula 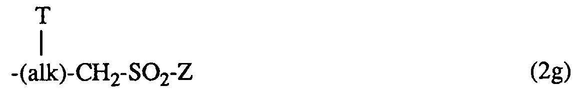 in which (alk) is as defined above, alk', independently of one another, is polymethylene radicals having 2 to 6 C atoms, Z is β-sulfatoethyl, β-thiosulfatoethyl, β-phosphatoethyl, β-acyloxyethyl, β-haloethyl or vinyl, p, q, r and t, independently of one another, are each the number 1, 2, 3, 4, 5 or 6 and s is the number 2, 3, 4, 5 or 6; and the benzene ring in formula (2) can contain further substituents; or in which X is a radical of the formula (2a), (2b), (2c), (2d), (2e) or (2f) directly bound to the triazine ring, in which R', T, alk, V, alk', Z, p, q, r, s and t are as defined.

2. A reactive dye according to claim 1 of the formula 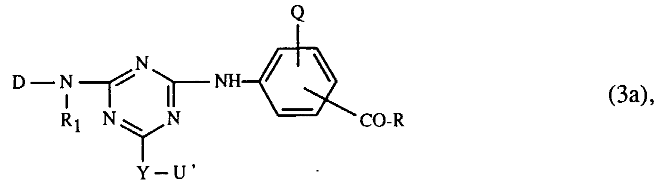 in which D is one of the dye radicals mentioned in claim 1, which may contain a further reactive radical, R₁ is hydrogen, methyl or ethyl, Y and R are as defined in claim 1, U' is C₁-C₈alkyl, which may be substituted by hydroxyl, C₁-C₄alkoxy, C₁-C₂alkoxy-C₁-C₂alkoxy, hydroxy-C₁-C₂alkoxy, sulfato, C₁-C₄alkoxycarbonyl or carboxyl, and Q is hydrogen, C₁-C₄alkyl, C₁-C₄alkoxy, halogen, carboxyl or sulfo.

3. A reactive dye according to claim 2 of the formula 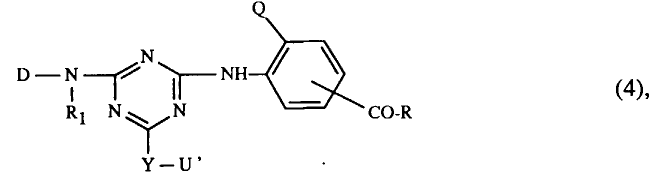 in which D, R₁, Y, U', Q and R are as defined in claim 2.

4. A reactive dve according to claim 1 of the formula 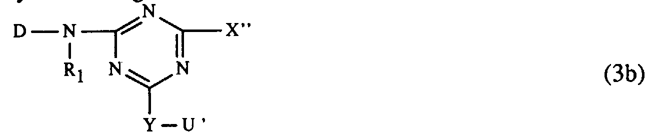 in which D is one of the dye radicals mentioned in claim 1, which may contain a further reactive radical, R₁ is hydrogen, methyl or ethyl, Y is as defined in claim 1, U' is C₁-C₈alkyl, which may be substituted by hydroxyl, C₁-C₄alkoxy, C₁-C₂alkoxy-C₁-C₂-alkoxy, hydroxy-C₁-C₂alkoxy, sulfato, C₁-C₄alkoxycarbonyl or carboxyl, and X'' is a radical of the formula (2a), (2b), (2c), (2d), (2e) or (2f).

5. A reactive dye according to either claim 2 or claim 3, in which D and R₁ are as defined in claim 2, Q is hydrogen or sulfo, R is a radical of the formula (2a), (2b), (2c), (2d), (2e) or (2f), in which Z is β-sulfatoethyl, β-chloroethyl or vinyl, and Y and U' are as defined in claim 2.

6. A reactive dye according to any one of claims 2, 3 or 5, in which D contains an additional reactive radical.

7. A reactive dye according to any one of claims 1 to 6, in which R in formula (3a) or (4) or X'' in formula (3b) is a radical of the formula
-NH-(CH₂)₂-SO₂-Z' (5a),
-NH-(CH₂)₃-SO₂-Z' (5b),
-NH-(CH₂)₂-O-(CH₂)₂-SO₂-Z' (5c),
-N[-(CH₂)₂-SO₂-Z']₂ (5d),
-N(CH₃)-(CH₂)₂-SO₂-Z' (5e),
-N(C₂H₅)-(CH₂)₂-SO₂-Z' (5f),
-NH-CH₂-CH(SO₂-Z')-CH₂-CH₂-SO₂-Z' (5g)
or 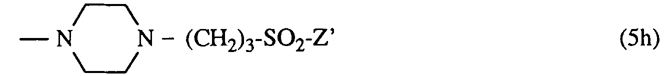 in which Z' is β-sulfatoethyl, β-chloroethyl or vinyl.

8. A reactive dye according to any one of claims 1 to 7, in which D is the radical of a monoazo, disazo or metal complex azo, formazan, anthraquinone, phthalocyanine or dioxazine dye.

9. A reactive dye according to claim 8, in which D is a mono- or disazo dye radical of the formula
D₁-N=N-(M-N=N)ᵤ-K- (6a),
-D₁-N=N-(M-N=N)ᵤ-K (6b)
or
-D₁-N=N-(M-N=N)ᵤ-K- (6c),
or of a metal complex derived therefrom; D₁ is the radical of a diazo component from the benzene or naphthalene series, M is the radical of a middle component from the benzene or naphthalene series, and K is the radical of a coupling component from the benzene, naphthalene, pyrazolone, 6-hydroxy-2-pyridone or acetoacetarylamide series, in which D1, M and K can carry the substituents customary in azo dyes, in particular hydroxyl, amino, methyl, ethyl, methoxy or ethoxy groups, substituted or unsubstituted alkanoylamino groups having 2 to 4 C atoms, substituted or unsubstituted benzoylamino groups, halogen atoms or a fibre-reactive radical, in particular a radical -SO₂-Z in which Z is as defined in claim 1; u is 0 or 1; and D₁, M and K together contain at least two sulfo groups, preferably three or four sulfo groups.

10. A reactive dye according to claim 8, in which D is a disazo dye radical of the formula
-D₁-N=N-K-N=N-D₂ (7a),
or
-D₁-N=N-K-N=N-D₂- (7b)
in which D₁ and D₂, independently of one another, are the radical of a diazo component from the benzene or naphthalene series, and K is the radical of a coupling component from the naphthalene series; in which D₁, D₂ and K can carry the substituents customary in azo dyes, in particular hydroxyl, amino, methyl, ethyl, methoxy or ethoxy groups, substituted or unsubstituted alkanoylamino groups having 2 to 4 C atoms, substituted or unsubstituted benzoylamino groups, halogen atoms or a fibre-reactive radical, in particular a radical -SO₂-Z in which Z is as defined in claim 1; and D₁, D₂ and K together contain at least two sulfo groups, preferably three or four sulfo groups.

11. A process for the preparation of reactive dyes of the formula (1) which comprises introducing one or two radicals of the formula 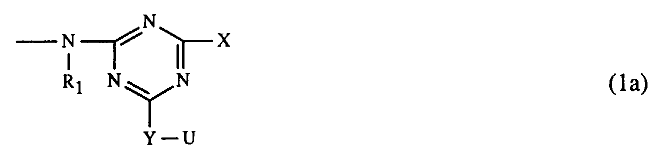 in which R₁, Y, U and X are as defined in claim 1 into an organic dye containing the radical D or into a dye precursor, or in the case where dye precursors are used, converting the intermediates obtained into the desired final dyes, followed, if desired, by a further conversion reaction.

12. Use of the reactive dye according to claim 1 for dyeing or printing cellulose-containing fibre materials.

13. Use according to claim 12 for dyeing or printing cotton.

## Revendications

1. Colorants réactifs de formule 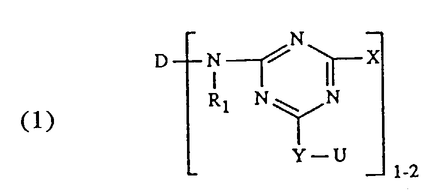 dans laquelle D représente le résidu d'un colorant monoazoïque, polyazoïque, azoïque métallifère, anthraquinonique, azométhinique, de type phtalocyanine, formazan, dioxazine, phénazine, stilbène, triphénylméthane, xanthène, thioxanthone, nitroarylique, naphtoquinonique, pyrène-quinonique ou de type pérylène-tétracarbimide,
R₁ représente un atome d'hydrogène ou un groupe alkyle en C₁₋₄ pouvant être substitué par un atome d'halogène, par un résidu hydroxy, cyano, alcoxy en C₁₋₄, (alcoxy en C₁₋₄)-carbonyle, carboxy, sulfamoyle, sulfo ou sulfato,
Y représente un atome d'oxygène ou de soufre,
U représente un résidu aliphatique, aromatique ou hétérocyclique pouvant être substitué, et
X est un résidu de formule 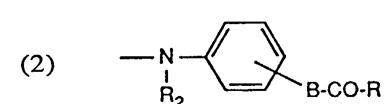 dans laquelle R₂ est un atome d'hydrogène ou un groupe alkyle en C₁₋₄ pouvant être substitué par un atome d'halogène, un résidu hydroxy, cyano, alcoxy en C₁₋₄, (alcoxy en C₁₋₄)-carbonyle, carboxy, sulfamoyle, sulfo ou sulfato,
B représente une liaison directe ou un résidu -(CH₂)ₙ- ou -O-(CH₂)ₙ-,
n = 1, 2, 3, 4, 5 ou 6, et R est un résidu de formule 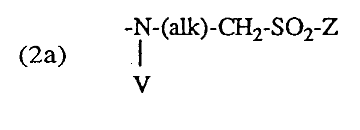 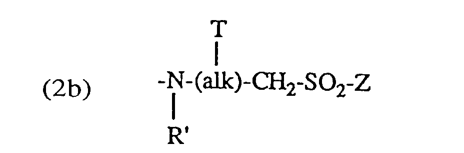 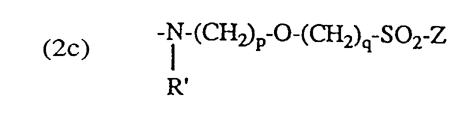 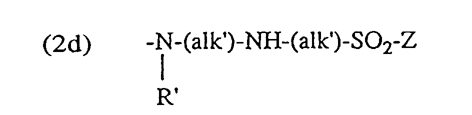 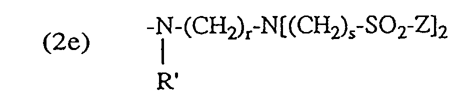 ou 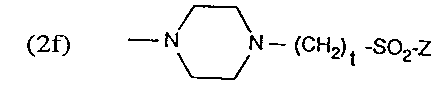 dans lesquelles R' représente un atome d'hydrogène ou un groupe alkyle en C₁₋₆, *alk* représente un résidu alkylène comportant de 1 à 7 atomes de carbone, T est un atome d'hydrogène ou d'halogène, un résidu hydroxy, sulfato, carboxy, cyano, alcanoyloxy en C₁₋₄, (alcoxy en C₁₋₄)-carbonyle, carbamoyle ou un résidu de formule -SO₂-Z, V un atome d'hydrogène, un résidu alkyle en C₁₋₄ éventuellement substitué ou un résidu de formule 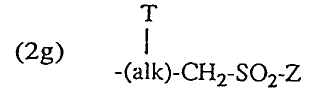 dans laquelle *(alk)* a la signification indiquée précédemment, *alk'* symbolise indépendamment des résidus polyméthylène comportant de 2 à 6 atomes de carbone, Z est un groupe β-sulfatoéthyle, β-thiosulfatoéthyle, β-phosphatoéthyle, β-acyloxyéthyle, β-halogénoéthyle ou vinyle, p, q, r et t valent indépendamment l'un de l'autre 1, 2, 3, 4, 5 ou 6, et s vaut 2, 3, 4, 5 ou 6, et le noyau benzénique, dans la formule (2), peut porter d'autres substituants,
ou dans laquelle X représente un résidu de formule (2a), (2b), (2c), (2d), (2e) ou (2f) lié directement au cycle triazine, R', T, *alk,* V, *alk',* Z, p, q, r, s et t ayant la signification indiquée.

2. Colorants réactifs conformes à la revendication 1 correspondant à la formule 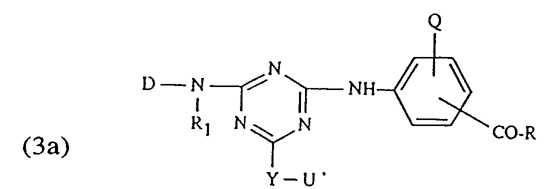 dans laquelle D est un des résidus de colorant indiqués dans la revendication 1, lequel résidu peut porter un autre résidu réactif, R₁ est un atome d'hydrogène, un groupe méthyle ou éthyle, Y et R ont la signification indiquée dans la revendication, U' est un résidu alkyle en C₁₋₈ pouvant être substitué par un groupe hydroxy, alcoxy en C₁₋₄, (alcoxy en C₁₋₂)-(alcoxy en C₁₋₂), hydroxy-(alcoxy en C₁₋₂), sulfato, (alcoxy en C₁₋₄)-carbonyle ou carboxy, et Q est un atome d'hydrogène, un groupe alkyle en C₁₋₄, alcoxy en C₁₋₄, halogéno, carboxy ou sulfo.

3. Colorants réactifs conformes à la revendication 2 correspondant à la formule 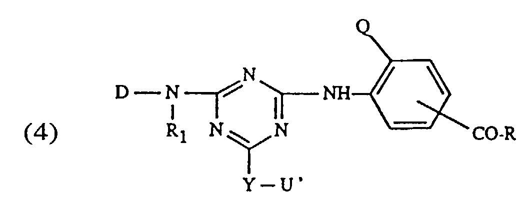 dans laquelle D, R₁, Y, U', Q et R ont la signification indiquée dans la revendication 2.

4. Colorants réactifs conformes à la revendication 1 correspondant à la formule 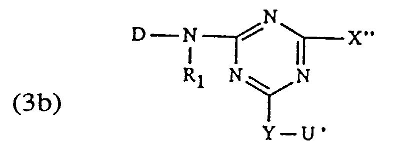 dans laquelle D est un des résidus de colorant indiqués dans la revendication 1, lequel résidu peut porter un autre résidu réactif, R₁ est un atome d'hydrogène, un groupe méthyle ou éthyle, Y a la signification indiquée dans la revendication 1, U' est un résidu alkyle en C₁₋₈ pouvant être substitué par un groupe hydroxy, alcoxy en C₁₋₄, (alcoxy en C₁₋₂)-(alcoxy en C₁₋₂), hydroxy-(alcoxy en C₁₋₂), sulfato, (alcoxy en C₁₋₄)-carbonyle ou carboxy, et X" est un résidu de formule (2a), (2b), (2c), (2d), (2e) ou (2f).

5. Colorants réactifs conformes à une des revendications 2 ou 3 dans lesquels D et R₁ ont la signification indiquée dans la revendication 2, Q est un atome d'hydrogène ou un groupe sulfo, R est un résidu de formule (2a), (2b), (2c), (2d), (2e) ou (2f) dans lesquelles Z est un groupe β-sulfatoéthyle, β-chloroéthyle ou vinyle, et Y et U' ont la signification indiquée dans la revendication 2.

6. Colorants réactifs conformes à une des revendications 2, 3 ou 5, dans lesquels D contient un résidu réactif supplémentaire.

7. Colorants réactifs conformes à une des revendications 1 à 6, dans lesquels R, dans la formule (3a) ou (4), ou X", dans la formule (3b), est un résidu de formule
(5a) -NH-(CH₂)₂-SO₂-Z'
(5b) -NH-(CH₂)₃-SO₂-Z'
(5c) -NH-(CH₂)₂-O-(CH₂)₂-SO₂-Z'
(5d) N[-(CH₂)₂-SO₂-Z']₂
(5e) -N(CH₃)-(CH₂)₂-SO₂-Z'
(5f) -N(C₂H₅)-(CH₂)₂-SO₂-Z'
(5g) -NH-CH₂-CH(SO₂-Z')-CH₂-CH₂-SO₂-Z'
ou 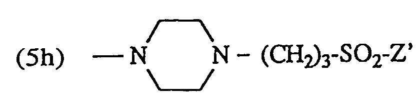 où Z' est un groupe β-sulfatoéthyle, β-chloroéthyle ou vinyle.

8. Colorants réactifs conformes à une des revendications 1 à 7 dans lesquels D est le résidu d'un colorant monoazoïque, diazoïque, azoïque métallifère, anthraquinonique, de type formazan, phtalocyanine ou dioxazine.

9. Colorants réactifs conformes à la revendication 8 dans lesquels D est le résidu d'un colorant monoazoïque ou diazoïque de formule
(6a) D₁-N=N-(M-N=N)ᵤ-K-
(6b) -D₁-N=N-(M-N=N)ᵤ-K
ou
(6c) -D₁-N=N-(M-N=N)ᵤ-K-
ou un complexe métallique dérivé de ceux-ci ; D₁ est le résidu d'un composant diazo de la série benzénique ou naphtalénique, M est le résidu d'un composant médian de la série benzénique ou naphtalénique, et K est le résidu d'un copulant de la série benzénique, naphtalénique, ou de la série des pyrazolones, 6-hydroxypyridones-(2) ou acétoacétarylamides, D1, M et K pouvant porter les substituants habituels des colorants azoïques, en particulier des groupes hydroxy, amino, méthyle, éthyle, méthoxy ou éthoxy, des groupes alcanoylamino en C₂₋₄ éventuellement substitués, des groupes benzoylamino éventuellement substitués, des atomes d'halogène ou un résidu réactif vis-à-vis des fibres, en particulier un résidu -SO₂-Z, où Z a la signification indiquée dans la revendication 1, u = 0 ou 1, et D₁, M et K contiennent ensemble au moins deux et, de préférence, trois ou quatre groupes sulfo.

10. Colorants réactifs conformes à la revendication 8 dans lesquels D est le résidu d'un colorant diazoïque de formule
(7a) -D₁-N=N-K-N=N-D₂
ou
(7b) -D₁-N=N-K-N=N-D₂-
où D₁ et D₂ représentent, indépendamment l'un de l'autre, le résidu d'un composant diazo de la série benzénique ou naphtalénique, et K le résidu d'un copulant de la série naphtalénique, D₁, D₂ et K pouvant porter les substituants habituels des colorants azoïques, en particulier des groupes hydroxy, amino, méthyle, éthyle, méthoxy ou éthoxy, des groupes alcanoylamino en C₂₋₄ éventuellement substitués, des groupes benzoylamino éventuellement substitués, des atomes d'halogène ou un résidu réactif vis-à-vis des fibres, en particulier un résidu -SO₂-Z, où Z a la signification indiquée dans la revendication 1, et D₁, D₂ et K renferment ensemble au moins deux, de préférence, trois ou quatre groupes sulfo.

11. Procédé de préparation de colorants réactifs de formule (1), caractérisé en ce que l'on introduit dans un colorant organique comportant un résidu D ou dans un précurseur d'un tel colorant, un ou deux résidus de formule 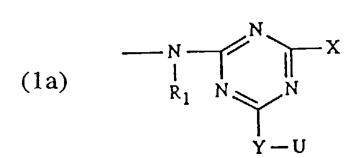 dans laquelle R₁, Y, U et X ont la signification indiquée dans la revendication 1, ou, dans le cas où l'on utilise des précurseurs de colorants, en ce que l'on convertit les produits intermédiaires obtenus en les colorants finaux recherchés, et en ce qu'on les soumet éventuellement à une réaction de conversion supplémentaire.

12. Utilisation des colorants réactifs conformes à la revendication 1, pour la teinture ou l'impression de matériaux fibreux cellulosiques.

13. Utilisation conforme à la revendication 12 pour la teinture ou l'impression de coton.
